# EUROPEAN PATENT APPLICATION

(11) **EP 3 352 170 A1**
(43) Date of publication of application: **25.07.2018**
(21) Application number: 15904152.4
(22) Date of filing: 15.09.2015
(51) Int. Cl.: G11B 7/0065, G11B 7/0045, G11B 7/135

(54) **INFORMATION STORAGE DEVICE AND INFORMATION READING DEVICE**

(71) Applicant: Dai Nippon Printing Co., Ltd., Tokyo, 162-8001 (JP)
(72) Inventor: NAKATA, Naoko, Tokyo 162-8001 (JP); ARITSUKA, Yuki, Tokyo 162-8001 (JP)
(74) Representative: Müller Hoffmann & Partner
(86) International application number: PCT/JP2015/077000
(87) International publication number: WO 2017/046967

(57) **Abstract**

The invention makes it possible to perform highly integrated recording of information and read out the information in a universal method while maintaining long-term durability. Digital data (D) to be stored is divided by a prescribed bit length u to create a plurality of unit data (U1 to U4). The bits constituting the unit data (U1) are arranged in a two-dimensional matrix to create a unit bit matrix (B(U1)), which is converted to a geometrical pattern to thereby create a unit bit graphic pattern (P(U1)). Further, alignment marks (Q) are arranged at four corners to create a unit recording graphic pattern (R(U1)). A drawing pattern (P(E)) is created as an assembly of the unit recording graphic patterns (R(U1) to R(U4)), and is provided to an electron beam lithography system as drawing data (E) whereby a pattern is drawn in a resist layer on a glass substrate. The resist layer is developed and the glass substrate is etched, and thus the digital data (D) is recorded on the substrate as a physically structured pattern.

## Description

### Technical Field

The present invention relates to technology by which information is written onto a durable information recording medium and stored therein and also the information is read out from the written information recording medium and in particular relates to technology by which beam exposure and pattern processing are performed on a substrate to record information as a minute physically structured pattern and also read out the information.

### Background Art

Paper has been used as a medium for recording various types of information for a very long time, and many types of information are even now recorded on paper. On the other hand, with advancements in industries, films for recording image information and record disks for recording sound information have been made available. In recent years, due to wide use of computers, there have been used magnetic recording media, optical recording media, semiconductor recording media and others as media for recording digital data.

The above-described information recording media are provided with durability to such an extent that will not cause any trouble in using them, depending on individual use. It may be safe to say that information recording media, for example, printed matter of paper, film and record disks are media which are sufficiently durable when used on a time scale of several years. However, on a time scale of several decades, these information recording media will inevitably deteriorate with the lapse of time and may be unable to maintain recorded information. Further, they may be damaged not only with the lapse of time but also by water and thermal influences.

Further, magnetic recording media, optical recording media, semiconductor recording media and others for computers are provided with durability to such an extent that will not cause trouble in using general electronic devices. However, these media are not designed, with durability on a time scale of several decades taken into account and, therefore, not suitable as permanent information storage media.

On the other hand, in Patent Document 1 given below, as a method for recording information on a durable medium like quartz glass, with a recording capacity enhanced, there has been disclosed a method in which data is recorded three dimensionally at small cells within a cylindrical medium based on a difference in light transmittance, and while the medium is rotated, computer tomography technology is utilized to read out the information. Further, in Patent Document 2, there has been disclosed a method in which in order to attain the same purpose, a cylindrical recording medium is exposed to irradiation of electromagnetic waves by changing an irradiation angle to measure a difference in transmittance and read out information also by utilizing the computer tomography technology.

It is noted that a plate-like information recording medium is provided with front, back, top, bottom, left and right sides. Upon reading out recorded information, it is necessary to perform readout processing after correct confirmation of the medium as for a direction such as front, back, top, bottom, left and right sides. Thus, there has been proposed a method for providing an identification mark indicating a direction on a medium for the purpose of performing correct readout processing. For example, in Patent Document 3 given below, such technology has been disclosed that an identification mark having a recess and protrusion structure is provided at a lower right corner on the front side of a card-like information recording medium, by which even a visually impaired person is able to recognize a direction of the medium by touching it and inserting the card-like information recording medium into an information reader in a correct direction.

### Prior Art Documents

### Patent Documents

Patent Document 1:
   Japanese Patent No. 4991487
Patent Document 2:
   Japanese Patent No. 5286246
Patent Document 3:
   Japanese Patent Publication No. H9-269987

### Summary of the Invention

### Problems to be solved by the invention

As described above, information recording media which is currently in general use are designed to be durable for several years to several decades. These media are, therefore, not appropriate as media for passing down information to generations on a longer time scale of several hundred to several thousand years. Physically or chemically vulnerable information recording media, for example, paper, film and record disks, are not expected to be durable for a longer period of time such as several hundred to several thousand years. Of course, information recording media for computers such as magnetic recording media, optical recording media and semiconductor recording media are not appropriate either when used as described above.

In human history, there are stone monuments as information recording media which have passed a time scale of several hundred to several thousand years. It is, however, quite difficult to perform highly integrated recording of information on a stone plate. A stone plate is not appropriate as a medium for recording large capacity information such as digital data for computers.

On the other hand, as described in the technology disclosed in the previous Patent Documents 1 and 2, there is adopted a method in which cylindrical quartz glass is used as a medium to record information therein in a three-dimensional manner, thus making it possible to realize an information recording method which can be highly integrated, with long-term durability maintained. It is, however, necessary to extract information from three-dimensionally dispersed cells in a medium when the information is read out. This requires Fourier transform processing by utilizing computer tomography technology. In other words, unless the computer tomography technology the same as that available at the time of recording the information is taken over after passage of a long-time scale of several hundred to several thousand years, it will be impossible to read out the information.

Thus, an object of the present invention is to provide an information storage process and a device thereof capable of performing highly integrated recording of information and also capable of reading the information in a universal method, with long-term durability maintained. The present invention is also to provide a process and a device for reading out original information from a medium in which the information is stored in the above-described method. Further, the present invention proposes a new process in which beam exposure and pattern processing are performed on a substrate, thus making it possible to record information which shows a method for interpreting data bits when the information is recorded as a minute physically structured pattern.

### Means to solve the problems

(1) The first feature of the present invention resides in an information storage device in which digital data is written onto an information recording medium and stored in it,
   the information storage device, comprising:
   a data input portion which inputs digital data to be stored;
   a unit data creating portion in which the digital data is divided by a prescribed bit length unit to create a plurality of unit data;
   a unit bit matrix creating portion in which data bits which constitute individual unit data are arranged in a two-dimensional matrix form to create a unit bit matrix;
   a unit bit graphic pattern creating portion in which the unit bit matrix is converted to a geometrical pattern arranged inside a predetermined bit recording domain, thereby creating a unit bit graphic pattern;
   a unit recording graphic pattern creating portion in which an alignment mark is added to the unit bit graphic pattern to create a unit recording graphic pattern;
   a drawing data creating portion which creates drawing data for drawing the unit recording graphic pattern;
   a beam exposure device which performs beam exposure using electron beams or laser light on a substrate which acts as an information recording medium on the basis of the drawing data; and
   a patterning device which performs pattern processing on the substrate which has been exposed, thereby creating the information recording medium in which a physically structured pattern is formed according to the drawing data.
(2) The second feature of the present invention resides in the information storage device according to the first feature, wherein
   the beam exposure device has a function which performs beam exposure on a substrate having an underlying layer and a resist layer which covers the underlying layer, the beam exposure being made on a surface of the resist layer, and
   the patterning device includes a development processing portion in which the substrate is immersed into a developing fluid having properties that will dissolve an exposed part or a non-exposed part of the resist layer and a part of the substrate is processed into a remaining part, and an etching processing portion in which the underlying layer is etched by using the remaining part of the resist layer as a mask.
(3) The third feature of the present invention resides in the information storage device according to the second feature, wherein
   the unit bit graphic pattern creating portion converts one of an individual bit "1" and an individual bit "0" which constitute the unit bit matrix to an individual bit figure composed of a closed domain,
   the drawing data creating portion creates the drawing data which shows a contour line of the individual bit figure, and
   the beam exposure device performs beam exposure on an interior part of the contour line of the individual bit figures.
(4) The fourth feature of the present invention resides in the information storage device according to any one of the first to the third features, wherein
   the patterning device forms a physically structured pattern which has a recess and protrusion structure composed of a recess which shows one of a bit "1" and a bit "0" and a protrusion which shows the other of them.
(5) The fifth feature of the present invention resides in the information storage device according to the fourth feature, wherein
   the patterning device forms a physically structured pattern having an added layer made of a light reflective material or a light absorbing material on a surface of one of a recess and a protrusion or on surfaces of both of them.
(6) The sixth feature of the present invention resides in the information storage device according to any one of the first to the third features, wherein
   the patterning device forms a physically structured pattern having a network structure composed of a through hole which shows one of a bit "1" and a bit "0" and a non-hole part which shows the other of them.
(7) The seventh feature of the present invention resides in the information storage device according to any one of the first to the sixth features, wherein
   the unit data creating portion divides digital data into unit data composed of (m × n) bits,
   the unit bit matrix creating portion creates a unit bit matrix composed of m rows and n columns, and
   the unit bit graphic pattern creating portion allows individual bits which constitute the unit bit matrix to correspond to grid points arranged in a matrix form composed of m rows and n columns, and bit figures with a predetermined shape are arranged on grid points corresponding to a bit "1" or a bit "0," thereby creating a unit bit graphic pattern.
(8) The eighth feature of the present invention resides in the information storage device according to the seventh feature, wherein
   the unit bit graphic pattern creating portion creates a unit bit graphic pattern arranged inside a rectangular bit recording domain,
   the unit recording graphic pattern creating portion adds an alignment mark outside the rectangular bit recording domain, thereby creating a unit recording graphic pattern arranged inside a rectangular unit recording domain which includes the bit recording domain and the alignment mark, and
   the drawing data creating portion arranges the rectangular unit recording domains in a two-dimensional matrix form, thereby creating a drawing pattern including a plurality of unit recording graphic patterns and creating drawing data for drawing the drawing pattern.
(9) The ninth feature of the present invention resides in the information storage device according to the eighth feature, wherein
   the unit recording graphic pattern creating portion adds a total of two sets of alignment marks arranged outside in vicinities of two corners not at a diagonal position, of four corners, in the rectangular bit recording domain, thereby creating a unit recording graphic pattern.
(10) The tenth feature of the present invention resides in the information storage device according to the eighth feature, wherein
   the unit recording graphic pattern creating portion adds a total of three sets of alignment marks arranged outside in vicinities of three corners, of four corners, in the rectangular bit recording domain, thereby creating a unit recording graphic pattern and also making difference in an arrangement mode of three sets of the alignment marks in unit recording graphic patterns which are adjacent to each other.
(11) The eleventh feature of the present invention resides in the information storage device according to the ninth or the tenth feature, wherein
   the unit recording graphic pattern creating portion sets a specific unit recording domain at a reference unit recording domain and creates a unit recording graphic pattern in which a reference alignment mark different from that at other unit recording domains is used at the reference unit recording domain.
(12) The twelfth feature of the present invention resides in the information storage device according to any one of the first to the eleventh features, wherein
   the data input portion, the unit data creating portion, the unit bit matrix creating portion, the unit bit graphic pattern creating portion, the unit recording graphic pattern creating portion and the drawing data creating portion are constituted by installing programs into a computer.
(13) The thirteenth feature of the present invention resides in a program which allows a computer to function as the data input portion, the unit data creating portion, the unit bit matrix creating portion, the unit bit graphic pattern creating portion, the unit recording graphic pattern creating portion and the drawing data creating portion in the information storage device according to any one of the first to the eleventh features.
(14) The fourteenth feature of the present invention resides in an information readout device which reads out digital data stored at an information recording medium by using the information storage device according to the first feature,
   the information readout device, comprising:
   an image photographing device which magnifies and photographs a domain to be photographed which is a part of a recording surface of the information recording medium to capture an obtained photographed image as image data;
   a photographed-image housing portion which houses the photographed image;
   a bit-recording-domain recognizing portion which detects an alignment mark from the photographed image housed in the photographed-image housing portion, thereby recognizing individual bit recording domains;
   a unit-bit-matrix recognizing portion which recognizes a unit bit matrix on the basis of a pattern inside the bit recording domain;
   a scanning controller which controls a change in domain to be photographed by the image photographing device so that a photographed image can be obtained in all bit recording domains to be readout; and
   a data restoration portion which creates unit data from individual unit bit matrixes recognized by the unit-bit-matrix recognizing portion to synthesize individual unit data, thereby restoring the digital data stored.
(15) The fifteenth feature of the present invention resides in an information readout device which reads out digital data stored in an information recording medium by using the information storage device according to the eleventh feature,
   the information readout device, comprising:
   an image photographing device which magnifies and photographs a domain to be photographed which is a part of a recording surface of the information recording medium to capture an obtained photographed image as image data;
   a photographed-image housing portion which houses the photographed image;
   a bit-recording-domain recognizing portion which detects an alignment mark from the photographed image housed in the photographed-image housing portion, thereby recognizing individual bit recording domains;
   a unit-bit-matrix recognizing portion which recognizes a unit bit matrix on the basis of a pattern inside the bit recording domain;
   a scanning controller which controls a change in domain to be photographed by the image photographing device so that a photographed image can be obtained for all bit recording domains to be readout; and
   a data restoration portion which creates unit data from individual unit bit matrixes recognized by the unit-bit-matrix recognizing portion to synthesize individual unit data, thereby restoring the digital data stored; wherein
   the image photographing device has a function to photograph a domain to be photographed, a size of which is able to include at least one unit recording domain, and
   the scanning controller controls the image photographing device to adjust a domain to be photographed so that a photographed image of a domain which includes a reference unit recording domain is obtained on the basis of a reference alignment mark and, thereafter, a domain to be photographed is sequentially allowed to move depending on an arrangement pitch of unit recording domains.
(16) The sixteenth feature of the present invention resides in the information readout device according to the fourteenth or the fifteenth feature, wherein
   the photographed-image housing portion, the bit-recording-domain recognizing portion, the unit-bit-matrix recognizing portion, the scanning controller and the data restoration portion are constituted by installing programs into a computer.
(17) The seventeenth feature of the present invention resides in a program for allowing a computer to function as the photographed-image housing portion, the bit-recording-domain recognizing portion, the unit-bit-matrix recognizing portion, the scanning controller and the data restoration portion in the information readout device according to the fourteenth or the fifteenth feature.
(18) The eighteenth feature of the present invention resides in an information storage method by which digital data is written onto an information recording medium and stored in it,
   the information storage method, comprising:
   a data input step in which a computer inputs digital data to be stored;
   a unit data creating step in which the computer divides the digital data into a prescribed bit length unit to create a plurality of unit data;
   a unit bit matrix creating step in which the computer arranges data bits which constitute individual unit data in a two-dimensional matrix form to create a unit bit matrix;
   a unit bit graphic pattern creating step in which the computer converts the unit bit matrix to a geometrical pattern arranged inside a predetermined bit recording domain, thereby creating a unit bit graphic pattern;
   a unit recording graphic pattern creating step in which the computer adds an alignment mark to the unit bit graphic pattern, thereby creating a unit recording graphic pattern;
   a drawing data creating step in which the computer creates drawing data for drawing the unit recording graphic pattern;
   a beam exposure step in which beam exposure is performed by using electron beams or laser light on a substrate which acts as the information recording medium on the basis of the drawing data; and
   a patterning step in which pattern processing is performed on the substrate which has been exposed, thereby creating the information recording medium in which a physically structured pattern is formed according to the drawing data.
(19) The nineteenth feature of the present invention resides in an information readout method by which digital data stored in an information recording medium by using the information storage method according to the eighteenth feature, is read out,
   the information readout method, comprising:
   an image photographing step in which a domain to be photographed which is a part of a recording surface of the information recording medium is magnified and photographed by using an image photographing device and an obtained photographed image is captured as image data;
   a photographed-image housing step in which a computer houses the photographed image;
   a bit-recording-domain recognizing step in which the computer detects an alignment mark from the photographed image housed by the photographed image housing step, thereby recognizing individual bit recording domains;
   a unit-bit-matrix recognizing step in which the computer recognizes a unit bit matrix on the basis of a pattern inside the bit recording domain; and
   a data restoration step in which the computer creates unit data from individual unit bit matrixes recognized in the unit-bit-matrix recognizing step to synthesize individual unit data, thereby restoring digital data stored, wherein
   in the image photographing step, the computer controls a change of a domain to be photographed by the image photographing device so that a photographed image can be obtained in all bit recording domains to be read out.
(20) The twentieth feature of the present invention resides in an information storage device in which digital data is written onto an information recording medium and stored in it,
   the information storage device, comprising:
   a data input portion which inputs digital data to be stored;
   a main information pattern creating portion which creates a main information pattern that shows information of individual data bits which constitute the digital data;
   a minor information pattern creating portion which creates a minor information pattern that shows a method for interpreting data bits shown by the main information pattern;
   a drawing data creating portion which creates drawing data for drawing the main information pattern and the minor information pattern;
   a beam exposure device which performs beam exposure using electron beams or laser light on a substrate which acts as an information recording medium on the basis of the drawing data; and
   a patterning device which performs pattern processing on the substrate which has been exposed, thereby creating an information recording medium in which a physically structured pattern is formed according to the drawing data, wherein
   the main information pattern is a pattern which is constituted with a first attribute main domain and a second attribute main domain and in which binary information of individual data bits is expressed by a difference in whether a predetermined point corresponding to each of individual data bits is present inside the first attribute main domain or inside the second attribute main domain,
   the minor information pattern is a pattern which is provided with a first identification mark having one or a plurality of closed domains for presenting first information which is composed of letters, numbers, symbols, figures or a part of them or a combination of them and a second identification mark having one or a plurality of closed domains for presenting second information which is composed of letters, numbers, symbols, figures or a part of them or a combination of them,
   a band-like first attribute minor domain and a band-like second attribute minor domain extending in a direction parallel to a predetermined arrangement axis are alternately arranged in a direction orthogonal to the arrangement axis inside a closed domain which constitutes the first identification mark, a band-like first attribute minor domain and a band-like second attribute minor domain extending in a direction parallel to the arrangement axis are alternately arranged in a direction orthogonal to the arrangement axis inside a closed domain which constitutes the second identification mark and also at the closed domain which constitutes the first identification mark, a width of the first attribute minor domain is set to be greater than a width of the second attribute minor domain, at the closed domain which constitutes the second identification mark, a width of the second attribute minor domain is set to be greater than a width of the first attribute minor domain, and
   the drawing data creating portion creates drawing data so that exposure is performed on the first attribute main domain and the first attribute minor domain and no exposure is performed either on the second attribute main domain or the second attribute minor domain, or the drawing data creating portion creates drawing data so that exposure is performed on the second attribute main domain and the second attribute minor domain and no exposure is performed either on the first attribute main domain or the first attribute minor domain, and also the width of the first attribute minor domain and that of the second attribute minor domain are dimensionally set so as to constitute a diffraction grating for visible light.
(21) The twenty-first feature of the present invention resides in the information storage device according to the twentieth feature, wherein
   the minor information pattern creating portion creates a minor information pattern so that the first identification mark and the second identification mark formed on an information recording media are made available in a macroscopically observable size.
(22) The twenty-second feature of the present invention resides in the information storage device according to the twentieth or the twenty-first feature, wherein
   the minor information pattern creating portion sets a closed domain which constitutes the first identification mark so that the width of the first attribute minor domain is at least 5 times greater than the width of the second attribute minor domain and also sets a closed domain which constitutes the second identification mark so that the width of the second attribute minor domain is at least 5 times greater than the width of the first attribute minor domain.
(23) The twenty-third feature of the present invention resides in the information storage device according to any one of the twentieth to the twenty-second features, wherein
   the minor information pattern creating portion sets the width of the first attribute minor domain inside a closed domain which constitutes the first identification mark so as to be equal to the width of the second attribute minor domain inside a closed domain which constitutes the second identification mark and also sets the width of the second attribute minor domain inside a closed domain which constitutes the first identification mark so as to be equal to the width of the first attribute minor domain inside a closed domain which constitutes the second identification mark.
(24) The twenty-fourth feature of the present invention resides in the information storage device according to any one of the twentieth to the twenty-third features, wherein
   the minor information pattern creating portion creates a minor information pattern in which a first identification mark and a second identification mark are arranged adjacently to each other.
(25) The twenty-fifth feature of the present invention resides in the information storage device according to any one of the twentieth to the twenty-third features, wherein
   the minor information pattern creating portion creates a minor information pattern in which a closed domain which constitutes a first identification mark is in contact with a closed domain which constitutes a second identification mark.
(26) The twenty-sixth feature of the present invention resides in the information storage device according to any one of the twentieth to the twenty-third features, wherein
   the minor information pattern creating portion creates a minor information pattern in which a second identification mark is embedded into a first identification mark or the minor information pattern in which the first identification mark is embedded into the second identification mark.
(27) The twenty-seventh feature of the present invention resides in the information storage device according to any one of the twentieth to the twenty-third features, wherein
   the minor information pattern creating portion creates a minor information pattern which has an auxiliary common identification mark in addition to a first identification mark and second identification marks,
   the auxiliary common identification mark is an identification mark which has one or a plurality of closed domains for presenting an auxiliary common information composed of letters, numbers, symbols and figures or a part of them or a combination of them,
   a band-like first attribute minor domain and a band-like second attribute minor domain extending in a direction parallel to an arrangement axis are alternately arranged in a direction orthogonal to the arrangement axis inside a closed domain which constitutes the auxiliary common identification mark, and also a difference between the width of the first attribute minor domain and the width of the second attribute minor domain in the auxiliary common identification mark is set so as to be smaller than a difference between the width of the first attribute minor domain and the width of the second attribute minor domain in the first identification mark and the second identification mark.
(28) The twenty-eighth feature of the present invention resides in the information storage device according to the twenty-seventh feature, wherein
   the width of the first attribute minor domain is set equal to the width of the second attribute minor domain in the auxiliary common identification mark.
(29) The twenty-ninth feature of the present invention resides in the information storage device according to the twenty-seventh or the twenty-eighth feature, wherein
   an emblem which shows a first method for interpreting data bits shown by the main information pattern is constituted by a combination of the first identification mark and the auxiliary common identification mark and an emblem which shows a second method for interpreting data bits shown by the main information pattern is constituted by a combination of the second identification marks and the auxiliary common identification mark.
(30) The thirtieth feature of the present invention resides in the information storage device according to the twenty-ninth feature, wherein
   three rectangles of a left-side rectangle, a central rectangle and a right-side rectangle are arranged adjacently in a horizontal direction so as to be respectively on a left side, at a center and on a right side, and a lower rectangle is arranged below so as to be commonly adjacent to the three rectangles,
   a first identification mark is constituted by the central rectangle, a second identification mark is constituted by the left-side rectangle and the right-side rectangle, an auxiliary common identification mark is constituted by the lower rectangle, thereby constituting a first emblem which shows a symbol "protrusion" and a second emblem which shows a symbol "recess."
(31) The thirty-first feature of the present invention resides in the information storage device according to any one of the twentieth to the thirtieth features, wherein
   the beam exposure device has a function which performs beam exposure on a substrate having an underlying layer and a resist layer which covers the underlying layer, the beam exposure being made on a surface of the resist layer,
   the patterning device includes a development processing portion in which the substrate is immersed into a developing fluid having the properties that will dissolve an exposed part or a non-exposed part of the resist layer and a part of the substrate is processed into a remaining part, and an etching processing portion in which the underlying layer is etched by using the remaining part of the resist layer as a mask.
(32) The thirty-second feature of the present invention resides in the information storage device according to the thirty-first feature, wherein
   the main information pattern creating portion converts one of an individual bit "1" and an individual bit "0" to an individual bit figure composed of a closed domain, thereby creating a main information pattern in which a domain inside the bit figure is performed as the first attribute main domain and a domain outside thereof is performed as the second attribute main domain, and
   the drawing data creating portion creates drawing data by which exposure is performed on the first attribute main domain and the first attribute minor domain and no exposure is performed either on the second attribute main domain or the second attribute minor domain.
(33) The thirty-third feature of the present invention resides in the information storage device according to any one of the twentieth to the thirty-second features, wherein
   the patterning device forms a physical structure body which has a recess and protrusion structure composed of a recess which shows one of the first attribute domains and the second attribute domains and a protrusion which shows the other of them.
(34) The thirty-fourth feature of the present invention resides in the information storage device according to the thirty-third feature, wherein
   the patterning device forms a physical structure body which has an added layer made of a light-reflective material on a surface of the protrusion.
(35) The thirty-fifth feature of the present invention resides in the information storage device according to the thirty-third feature, wherein
   the patterning device performs pattern processing on a substrate made of a translucent material, thereby forming a recess and protrusion structure on an upper face of the substrate and forming a physical structure body which has an added layer made of a light-shielding material on a lower face of the substrate.
(36) The thirty-sixth feature of the present invention resides in the information storage device according to the thirty-third feature, wherein
   the patterning device performs pattern processing on the substrate made of a translucent material, thereby forming a recess and protrusion structure and forming a physical structure body which has an added layer made of a light-shielding material on a surface of the protrusion.
(37) The thirty-seventh feature of the present invention resides in the information storage device according to any one of the twentieth to the thirty-second features, wherein
   the patterning device forms a physical structure body which has a network structure composed of a through hole showing one of the first attribute domains and the second attribute domains and a non-hole part which shows the other of them.
(38) The thirty-eighth feature of the present invention resides in the information storage device according to the thirty-seventh feature, wherein
   the patterning device forms a physical structure body which has an added layer made of a light-reflective material on one side of the non-hole part.
(39) The thirty-ninth feature of the present invention resides in the information storage device according to the thirty-seventh feature, wherein
   the patterning device performs pattern processing on a substrate made of a translucent material, thereby forming a network structure and forming a physical structure body which has an added layer made of a light-shielding material on one side of the non-hole part.
(40) The fortieth feature of the present invention resides in the information storage device according to any one of the twentieth to the thirtieth features, wherein
   the data input portion, the main information pattern creating portion, the minor information pattern creating portion and the drawing data creating portion are constituted by installing programs into a computer.
(41) The forty-first feature of the present invention resides in a program which allows a computer to function as the data input portion, the main information pattern creating portion, the minor information pattern creating portion and the drawing data creating portion in the information storage device according to any one of the twentieth to the thirtieth features.
(42) The forty-second feature of the present invention resides in an information storage method by which digital data is written onto an information recording medium and stored in it,
   the information storage method, comprising:
   a data input step in which a computer inputs digital data to be stored;
   a main information pattern creating step in which the computer creates a main information pattern which shows information of individual data bits which constitute the digital data;
   a minor information pattern creating step in which the computer creates a minor information pattern which shows a method for interpreting data bits shown by the main information pattern;
   a drawing data creating step in which the computer creates drawing data for drawing the main information pattern and the minor information pattern;
   a beam exposure step in which beam exposure is performed by using electron beams or laser light on a substrate which acts as an information recording medium on the basis of the drawing data; and
   a patterning step in which pattern processing is performed on the substrate which has been exposed, thereby creating the information recording medium in which a physically structured pattern is formed according to the drawing data; wherein
   the main information pattern is a pattern which is constituted with a first attribute main domain and a second attribute main domain and in which binary information of individual data bits is expressed by a difference in whether a predetermined point which corresponds to each of individual data bits is present inside the first attribute main domain or inside the second attribute main domain,
   the minor information pattern is a pattern which is provided with a first identification mark having one or a plurality of closed domains for presenting first information composed of letters, numbers, symbols, and figures or a part of them or a combination of them and a second identification mark having one or a plurality of closed domains for presenting second information composed of letters, numbers, symbols and figures or a part of them or a combination of them,
   a band-like first attribute minor domain and a band-like second attribute minor domain extending in a direction parallel to a predetermined arrangement axis are alternately arranged in a direction orthogonal to the arrangement axis inside a closed domain which constitutes the first identification mark, a band-like first attribute minor domain and a band-like second attribute minor domain extending in a direction parallel to the arrangement axis are alternately arranged in a direction orthogonal to the arrangement axis inside a closed domain which constitutes the second identification mark and also at the closed domain which constitutes the first identification mark, a width of the first attribute minor domain is set so as to be greater than a width of the second attribute minor domain, and at the closed domain which constitutes the second identification mark, a width of the second attribute minor domain is set so as to be greater than a width of the first attribute minor domain, and
   in the drawing data creating step, drawing data is created so that exposure is performed on the first attribute main domain and the first attribute minor domain and no exposure is performed either on the second attribute main domain or the second attribute minor domain, or drawing data is created so that exposure is performed on the second attribute main domain and the second attribute minor domain and no exposure is performed either on the first attribute main domain or the first attribute minor domain, and also the width of the first attribute minor domain and that of the second attribute minor domain are dimensionally set so as to constitute a diffraction grating for visible light.

### Effects of the Invention

According to a basic embodiment of the present invention, digital data to be stored is divided into a plurality of unit data, changed into a form of unit bit matrix and, thereafter, converted to a geometrical graphic pattern. This graphic pattern is transferred onto a substrate by beam exposure using electron beams or laser light and recorded as a minute physically structured pattern performed by pattern processing. Therefore, information can be recorded in a highly integrated manner, with long-term durability maintained. Further, the graphic pattern in itself which has been transferred onto the substrate is a two-dimensional pattern, thus making it possible to read out the information in a universal method.

Further, in an embodiment which records an identification mark of the present invention, there is recorded a unique identification mark for showing a method for interpreting data bits. The identification mark is adopted, by which information on individual data bits which constitute digital data to be stored is recorded as a main information pattern on a medium. Further, information showing a method for interpreting data bits indicated by the main information pattern is recorded as a minor information pattern on the same medium. Here, each of the information patterns is constituted with a first attribute domain and a second attribute domain. The information is recorded on a substrate so that, for example, one attribute domain is given as a protrusion and the other attribute domain is given as a recess. Further, the minor information pattern includes a pair of identification marks, and there is formed a diffraction grating in which a band-like first attribute domain and a band-like second attribute domain are alternately arranged in the interior of each of the identification marks.

Moreover, a dimensional relationship between the width of the band-like first attribute domain and the width of the band-like second attribute domain each formed in the interior of the identification mark has a reverse relationship with regard to the pair of identification marks. Resultantly, regardless of the method for beam exposure and that for pattern processing adopted at the time of recording information, brightness and darkness between the pair of identification marks can be compared to recognize a correct method for interpreting data bits recorded as the main information pattern.

As described above, a method for utilizing the unique identification mark according to the present invention is adopted, by which beam exposure and pattern processing are performed on a substrate, thus making it possible to record also information which shows a method for interpreting data bits when the information is recorded as a minute physically structured pattern.

### Brief Description of the Drawings

Fig. 1 is a block diagram which shows a constitution of a basic embodiment of an information storage device according to the present invention.
Fig. 2 is a schematic diagram which shows one example of a specific information storage process by the information storage device shown in Fig. 1.
Fig. 3 is an enlarged view of a unit recording graphic pattern R (U1) shown in Fig. 2.
Fig. 4A to Fig. 4E are side cross-sectional views, each of which shows a specific example of exposure step by a beam exposure device 200 and patterning step by a patterning device 300 shown in Fig. 1 (only a cross section is shown and a structure at the back is not illustrated).
Fig. 5A to Fig. 5E are side cross-sectional views, each of which shows a variation of information recording media into which information has been written by the present invention (only a cross section is shown and a structure at the back is not illustrated).
Fig. 6 is a block diagram which shows a constitution of the basic embodiment of the information readout device according to the present invention.
Fig. 7A and Fig. 7B are plan views, each of which shows a variation of alignment marks used in the present invention.
Fig. 8 is a plan view which shows a variation in arrangement mode of the alignment marks in the present invention.
Fig. 9A and Fig. 9B are plan views, each of which shows another variation of the alignment marks used in the present invention.
Fig. 10 is a plan view which shows still another variation in arrangement mode of the alignment marks in the present invention.
Fig. 11 is a flowchart which shows basic processing procedures of an information storage process according to the present invention.
Fig. 12 is a flowchart which shows basic processing procedures of an information readout process according to the present invention.
Fig. 13 is a side cross-sectional view which shows a general reproduction method for an information recording medium in which a recess and protrusion structure is formed on a surface thereof.
Fig. 14 is a side cross-sectional view which shows a state that a reproduction is made by the reproduction method given in Fig. 13.
Fig. 15A and Fig. 15B are plan views, each of which shows a relationship between a master copy M1 and a reproduction thereof M2 on adoption of a method in which a large letter "F" is recorded as an identification mark (hatching is given for indicating a domain).
Fig. 16A to Fig. 16E are side cross-sectional views, each of which shows another specific process (a process using a negative-type resist as the resist layer 20) different from the exposure steps and the patterning steps shown in Fig. 4A to Fig. 4E (only a cross section is shown and a structure at the back is not illustrated).
Fig. 17A and Fig. 17B are plan views, each of which shows a relationship between a master copy M3 prepared in the process shown in Fig. 16A to Fig. 16E and a reproduction thereof M4 (hatching is given for indicating a domain).
Fig. 18 is a block diagram which shows a basic constitution of an information storage device in the embodiment which records the identification mark of the present invention.
Fig. 19 is a plan view which shows an information recording medium M5 prepared by the information storage device shown in Fig. 18 upon execution of the process shown in Fig. 4A to Fig. 4E (hatching is given for indicating a domain).
Fig. 20 is a plan view which shows an information recording medium M6 prepared by the information storage device shown in Fig. 18 upon execution of the process shown in Fig. 16A to Fig. 16E (hatching is given for indicating a domain).
Fig. 21 is a plan view which shows one example of a drawing pattern P(E) prepared by the information storage device shown in Fig. 18.
Fig. 22 is a drawing which shows a recess and protrusion structure of the medium M5 (a "black recess medium" shown in Fig. 19) prepared on the basis of the drawing pattern P(E) shown in Fig. 21 upon execution of the process shown in Fig. 4A to Fig. 4E.
Fig. 23 is a drawing which shows a recess and protrusion structure of the medium M6 (a "black protrusion medium" shown in Fig. 20) prepared on the basis of the drawing pattern P(E) shown in Fig. 21 upon execution of the process shown in Fig. 16A to Fig. 16E.
Figs. 24A to Fig. 24C are enlarged side cross-sectional views which show the respective recess and protrusion structures shown at a lower part of Fig. 22.
Figs. 25A to Fig. 25C are enlarged side cross-sectional views which show the respective recess and protrusion structures shown at a lower part of Fig. 23.
Fig. 26 is a plan view which shows a basic example of a constitution and an arrangement mode of the identification mark used in the present invention.
Fig. 27A and Fig. 27B are plan views, each of which shows a modified example of the constitution and the arrangement mode of the identification mark used in the present invention.
Fig. 28 is a table which shows another modified example of the constitution and the arrangement mode of the identification mark used in the present invention.
Fig. 29 is a plan view of a drawing pattern P(E) having the identification marks according to the modified example shown in Fig. 28(c).
Fig. 30 is a plan view which shows a modified example that uses an auxiliary common identification mark in addition to a first identification mark and a second identification mark.
Fig. 31A and Fig. 31B are plan views, each of which shows an observation mode of each of the identification marks in the modified example shown in Fig. 30 (hatching is given for indicating a domain).
Fig. 32A and Fig. 32B are side cross-sectional views, each of which shows a first variation of the information recording medium onto which information is written by the information storage device shown in Fig. 18 (only a cross section is shown and a structure at the back is not illustrated).
Fig. 33A and Fig. 33B are side cross-sectional views, each of which shows a second variation of the information recording medium onto which information is written by the information storage device shown in Fig. 18 (only a cross section is shown and a structure at the back is not illustrated).
Fig. 34A and Fig. 34B are side cross-sectional views, each of which shows a third variation of the information recording medium onto which information is written by the information storage device shown in Fig. 18 (only a cross section is shown and a structure at the back is not illustrated).
Fig. 35A and Fig. 35B are side cross-sectional views, each of which shows a fourth variation of the information recording medium onto which information is written by the information storage device shown in Fig. 18 (only a cross section is shown and a structure at the back is not illustrated).
Fig. 36A and Fig. 36B are side cross-sectional views, each of which shows a fifth variation of the information recording medium onto which information is written by the information storage device shown in Fig. 18 (only a cross section is shown and a structure at the back is not illustrated).
Fig. 37A and Fig. 37B are side cross-sectional views, each of which shows a sixth variation of the information recording medium onto which information is written by the information storage device shown in Fig. 18 (only a cross section is shown and a structure at the back is not illustrated).
Fig. 38A and Fig. 38B are side cross-sectional views, each of which shows a seventh variation of the information recording medium onto which information is written by the information storage device shown in Fig. 18 (only a cross section is shown and a structure at the back is not illustrated).
Fig. 39A and Fig. 39B are side cross-sectional views, each of which shows an eighth variation of the information recording medium onto which information is written by the information storage device shown in Fig. 18 (only a cross section is shown and a structure at the back is not illustrated).
Fig. 40 is a flowchart which shows basic processing procedures for information storage processing executed by the information storage device shown in Fig. 18.

### Best Mode for Carrying Out the Invention

### <<<Section 1. Basic embodiment of the information storage device according to the present invention>>>

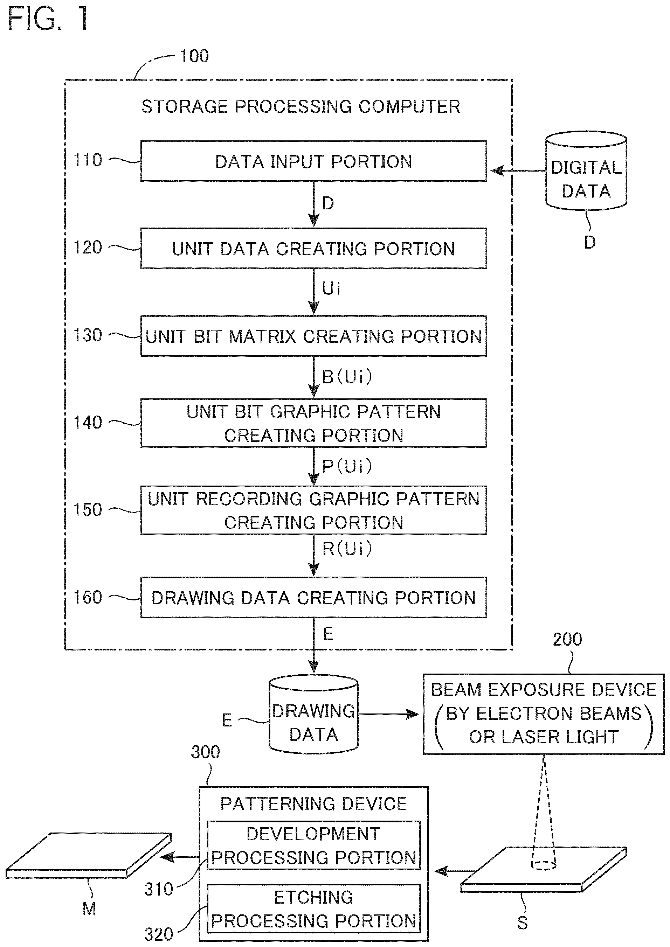

Fig. 1 is a block diagram which shows a constitution of a basic embodiment of the information storage device according to the present invention. The information storage device of the embodiment is a device which performs functions to write digital data onto an information recording medium and store the data. As shown in the drawing, the device is constituted with a storage processing computer 100, a beam exposure device 200 and a patterning device 300.

Here, the storage processing computer 100 executes processing for creating drawing data E on the basis of digital data D to be stored. The beam exposure device 200 is a device for executing beam exposure on a substrate S, which is an information recording medium, by using electron beams or laser light on the basis of this drawing data E, and a drawing pattern is formed on the substrate S by the beam exposure. The patterning device 300 performs pattern processing on the substrate S which has been subjected to exposure, thereby forming a physically structured pattern depending on the drawing data E to prepare an information recording medium M. Finally, information depending on the digital data D is recorded in the information recording medium M as a physically structured pattern.

The storage processing computer 100 is, as shown in the drawing, provided with a data input portion 110, a unit data creating portion 120, a unit bit matrix creating portion 130, a unit bit graphic pattern creating portion 140, a unit recording graphic pattern creating portion 150 and a drawing data creating portion 160. Hereinafter, a sequential description will be given of functions of these individual portions. However, these portions are in reality constituents which are realized by installing dedicated programs into a computer. The storage processing computer 100 can be constituted by installing a dedicated program into a general-purpose computer.

First, the data input portion 110 is a constituent which has functions to input the digital data D to be stored and also has functions to temporarily house the thus input digital data D. The digital data D to be stored may include any type of data such as document data, image data and voice data.

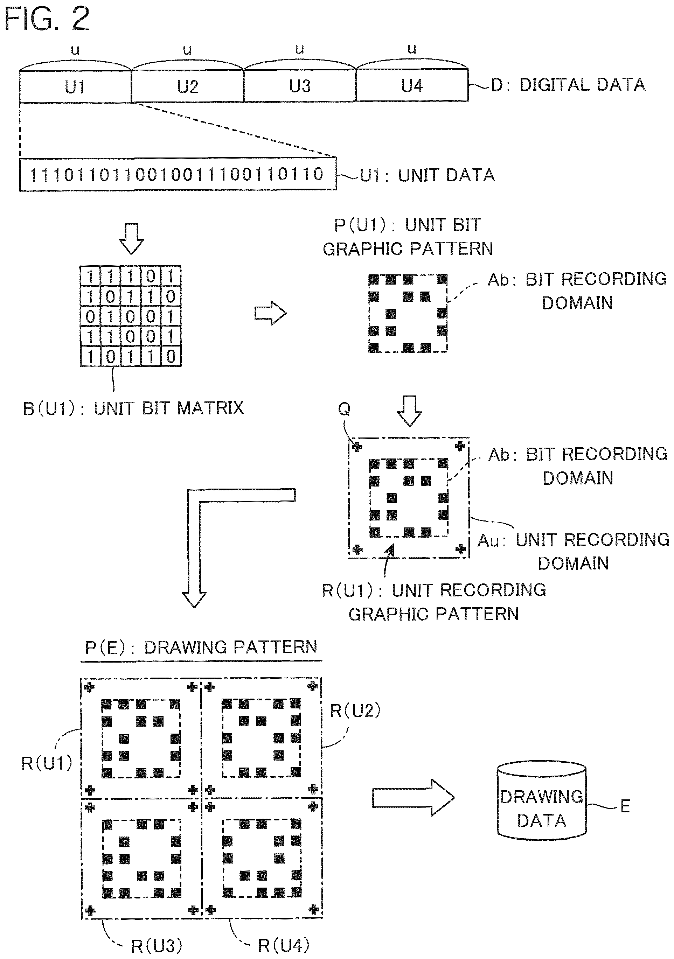

The unit data creating portion 120 is a constituent which creates a plurality of unit data by dividing the digital data D input by the data input portion 110 by a prescribed bit length unit. Here, for the sake of convenience of description, the following description will be given by taking an example in which, as shown at an upper part of Fig. 2, the digital data D is divided by a unit of bit length u to create four sets of unit data, and the i-th unit data is indicated with a symbol of Ui (in this example, i = 1 to 4). Hereinafter, any term having the word "unit" used in the application concerned indicates that all of the data is generated for "one unit data."

Each of the unit data Ui is not necessarily made equal in bit length and there may be created a plurality of unit data different with each other in bit length. However, it is in practice preferable that a bit recording domain Ab to be described later is given as a domain identical in shape and equal in area. For this reason, it is preferable that a common bit length u is determined in advance to give data in which all the unit data Ui have the same bit length u.

The common bit length u may be set at any given value. However, in practice, u = m × n is set so as to constitute a unit bit matrix which is composed of m rows and n columns, and the unit data creating portion 120 may divide digital data into unit data composed of (m × n) bits. Here, for the sake of convenience of description, there is shown an example in which u is set equal to 25 bits so that m = n = 5 is set to constitute a unit bit matrix composed of 5 rows and 5 columns (in practice, the u value is preferably set to give a greater value). The first unit data U1 shown in Fig. 2 is unit data created on the basis of the above-described setting and constituted with 25-bit data.

The unit data creating portion 120 may divide, for example, thus input digital data D by every u bits separately from the leading end, thereby giving unit data U1, U2, U3, etc., individually. In this case, unless an entire length of the digital data D is given as an integral multiple of the bit length u, the length of the last unit data will be less than the bit length u. Thus, where the length of all unit data is desired to be made equal to a common bit length u, a dummy bit may be added to a trailing end of the digital data to adjust so that an entire length is an integral multiple of the bit length u.

It is noted that a method for dividing the digital data D shall not be necessarily restricted to a method in which the data is divided from the leading end thereof by every prescribed bit length u and, for example, where the data is divided into four, there can be adopted such a dividing method that the 1st, 5th , 9th, ... bits are extracted to give a first unit data U1, the 2nd, 6th, 10th, ... bits are extracted to give a second unit data U2, the 3rd, 7th, 11th, ... bits are extracted to give a third unit data U3, the 4th, 8th, 12th, ... bits are extracted to give a fourth unit data U4.

Each unit data Ui created by the unit data creating portion 120 is given to the unit bit matrix creating portion 130. The unit bit matrix creating portion 130 performs processing by which data bits which constitute individual unit data Ui are arranged in a two-dimensional matrix form composed of m rows and n columns, thereby creating a unit bit matrix B(Ui).

In Fig. 2, there is shown an example in which 25-bit data that constitutes the first unit data U1 is separated from the leading end thereof by every 5 bits to form 5 groups consisting of "11101," "10110," "01001," "11001" and "10110," thereby creating a unit bit matrix B(U1) composed of a 5-row and 5-column matrix in which individual groups are arranged on one line. Of course, the unit data U2, U3, U4 are also processed in a similar manner to create unit bit matrixes B(U2), B(U3) and B(U4).

Individual unit bit matrixes B(Ui) thus created by the unit bit matrix creating portion 130 are given to the unit bit graphic pattern creating portion 140. The unit bit graphic pattern creating portion 140 performs processing by which each of the unit bit matrixes B(Ui) is converted to a geometrical pattern which is arranged inside a predetermined bit recording domain on a two-dimensional plane, thereby creating a unit bit graphic pattern P(Ui).

At a middle part of Fig. 2, there is shown an actual example of a unit bit graphic pattern P(U1) which has been prepared on the basis of the unit bit matrix B(U1) composed of a 5-row and 5-column matrix. In the case of this actual example, a square bit recording domain Ab (a domain indicated with a broken line in the drawing) is defined on the two-dimensional plane and small square-shaped dots painted in black (hereinafter, referred to as a bit figure) are arranged therein, by which the unit bit graphic pattern P(U1) is formed.

Here, each of the bit figures corresponds to a bit "1" which constitutes the unit bit matrix B(U1). In other words, a 5-row and 5-column matrix is defined inside the bit recording domain Ab so as to correspond to the unit bit matrix B(U1) and a bit figure is arranged only at a position corresponding to a bit "1" inside the unit bit matrix B(U1), with nothing arranged at a position corresponding to a bit "0." Therefore, the unit bit graphic pattern P(U1) is to express 25-bit information which constitutes the unit bit matrix B(U1) by the presence or absence of the bit figure at each position which constitutes the 5-row and 5-column matrix.

Of course, individual bit figures may be arranged so as to correspond to bits "0" which constitute the unit bit matrix B(U1). In this case, the bit figure is arranged only at a position corresponding to a bit "0" inside the unit bit matrix B(U1) and nothing is arranged at a position corresponding to a bit "1." That is, the unit bit graphic pattern creating portion 140 may perform processing by which, of individual bits "1" and individual bits "0," one of them which constitute the unit bit matrix B(U1) is converted to individual bit figures in a closed domain. A data format which indicates individual bit figures may be given any format. For example, where one bit figure is constituted with a rectangle, as data showing the unit bit graphic pattern P(U1), there can be used data which shows coordinate values of four apexes of each bit figure (coordinate values of two apexes of opposite angles will do). There can also be used data which shows a coordinate value of a center point of each bit figure (a lower left corner point will do) and data which shows lengths of vertical and horizontal sides of a bit figure having a common rectangular shape. Alternatively, where a circular bit figure is adopted, there can be used data which shows a coordinate value of a center point of each bit figure and data which shows a common radius value.

Of course, the unit bit matrixes B(U2), B(U3) and B(U4) created for the respective unit data U2, U3, U4 are also converted to a geometrical pattern by a similar method to create unit bit graphic patterns P(U2), P(U3) and P(U4). Each of the thus created unit bit graphic patterns P(U1) to P(U4) is formed on a medium by a certain method, thus making it possible to record information of the digital data D in a medium. However, in the present invention, with consideration given to the convenience of readout processing to be performed later, an alignment mark is added to each of the unit bit graphic patterns P(U1) to P(U4).

The unit recording graphic pattern creating portion 150 is a constituent which adds the alignment mark, and in the application concerned, the unit bit graphic pattern P(Ui) in a state that the alignment mark is added is referred to as a unit recording graphic pattern R(Ui). Finally, the unit recording graphic pattern creating portion 150 performs processing by which an alignment mark is added to the unit bit graphic pattern P(Ui) created by the unit bit graphic pattern creating portion 140 to create a unit recording graphic pattern R(Ui).

At the middle part of Fig. 2, there is shown an example in which a cross-shaped alignment mark Q is added to each of four corners outside the unit bit graphic pattern P(U1) to create a unit recording graphic pattern R(U1). Here, a domain which includes a bit recording domain Ab (a square enclosed with a broken line) at which the unit bit graphic pattern P(U1) has been formed and the alignment marks Q arranged outside thereof at four corners is referred to as a unit recording domain Au (a square enclosed with a single dotted and dashed line). The unit recording graphic pattern R(U1) is a graphic pattern which is formed inside the unit recording domain Au.

The alignment marks Q are used for recognizing individual bit recording domains Ab in readout processing described in Section 3. Therefore, the alignment marks Q are arranged at a specific position in relation to the bit recording domain Ab (in the example shown in the drawing, positions at four corners outside the bit recording domain Ab). In the drawing, there is shown an example in which cross-shaped alignment marks Q are used. However, any shaped-figure may be used as long as it is a figure which can be distinguished from a bit figure for indicating individual bits (a small square painted in black in the example shown in the drawing).

Further, although in the example shown in the drawing, the alignment marks Q are arranged outside the bit recording domain Ab, it is possible to arrange the alignment marks Q inside the bit recording domain Ab. However, where the marks are arranged inside the bit recording domain Ab, they may interfere with a bit figure which expresses individual bits. Therefore, as shown in the example shown in the drawing, it is in practice preferable that the alignment marks Q are arranged outside the bit recording domain Ab. A description will be again given in Section 4 of a shape of the alignment mark Q and a variation of the arrangement thereof.

In this way, after creation of four sets of unit recording graphic patterns R(U1) to R(U4) by the unit recording graphic pattern creating portion 150, the drawing data creating portion 160 performs processing which creates drawing data E for drawing them. Specifically, as shown at the lower part of Fig. 2, the drawing data creating portion 160 performs processing by which four sets of the unit recording domains R(U1) to R(U4) are arranged in a two-dimensional matrix form (in this example, two rows and two columns) to create a drawing pattern P(E) which includes all four sets of the unit recording graphic patterns R(U1) to R(U4), thereby creating the drawing data E for drawing the drawing pattern P(E).

A description has been so far given of processing functions of the individual constituents of the storage processing computer 100 shown in Fig. 1. The thus created drawing data E is given to the beam exposure device 200. The beam exposure device 200 is a device which performs beam exposure on a substrate S to be exposed on the basis of the drawing data E, and it can be constituted by using an electron beam lithography system or a laser lithography system for semiconductor photolithography used in a manufacturing process of various types of electronic devices. Where an electron beam lithography system is used as the beam exposure device 200, the drawing pattern P(E) is depicted on a surface of the substrate S to be exposed by electron beams. Where a laser lithography system is used as the beam exposure device 200, a drawing pattern P(E) is depicted on a surface of the substrate S to be exposed by laser beams.

In Fig. 2, for the sake of convenience of description, a contour line of the bit recording domain Ab is indicated by a broken line and a contour line of the unit recording domain Au is indicated by a single dotted and dashed line. However, these lines are not constituents of the drawing pattern P(E). A graphic pattern actually depicted on the substrate S to be exposed is a bit figure expressing individual bits (in the case of the example shown in the drawing, a small square painted in black) and a cross-shaped alignment mark Q.

As described above, the drawing data E is data which is given to the beam exposure device 200 to draw the drawing pattern P(E) on the substrate S to be exposed. Therefore, a data format thereof is required to be dependent on the beam exposure device 200 to be used. At present, where an electron beam lithography system or a laser lithography system used in designing a general LSI is used to draw any given graphic pattern, vector-format drawing data is used which indicates a contour line of the graphic pattern. Therefore, in practice, the drawing data creating portion 160 may create drawing data E which shows the contour lines of individual bit figures and alignment marks.

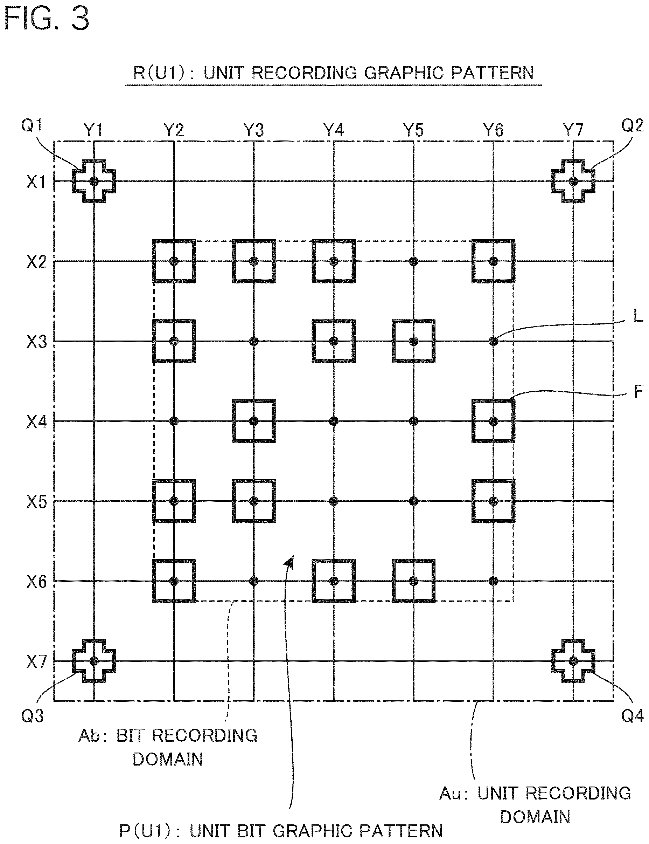

Fig. 3 is an enlarged view of the unit recording graphic pattern R(U1) shown in Fig. 2. In Fig. 2, there is shown an example in which the small square painted in black is used as a bit figure which indicates a bit "1." In the example shown in Fig. 3, each of bit figures F is expressed as vector data which indicates a square contour line. Similarly, each of alignment marks Q1 to Q4 arranged at four corners is expressed as vector data which gives a cross-shaped contour line. On the basis of the drawing data E which shows a contour line of each of the bit figures F and each of the alignment marks Q1 to Q4, the beam exposure device 200 performs processing in which beam exposure is performed on the interior of the contour line thereof. Therefore, as shown in Fig. 2, there are formed square graphic patterns or cross-shaped graphic patterns which are painted in black on the substrate S to be exposed.

In Fig. 3, depicted are horizontal grid lines X1 to X7 arranged at equal intervals and longitudinal grid lines Y1 to Y7 arranged at equal intervals. Each of the grid lines plays a role in determining arrangement positions of individual bit figures F and alignment marks Q1 to Q4. That is, when each of intersection points between the horizontal grid lines X1 to X7 and the longitudinal grid lines Y1 to Y7 is referred to as a grid point L, the individual bit figures F and the alignment marks Q1 to Q4 are arranged so that the centers thereof are positioned at any of the grid points L.

For example, the alignment mark Q1 is arranged on a grid point at which the grid lines X1 and Y1 intersect with each other, the alignment mark Q2 is arranged on a grid point at which the grid lines X1 and Y7 intersect with each other, the alignment mark Q3 is arranged on a grid point at which the grid lines X7 and Y1 intersect with each other, and the alignment mark Q4 is arranged on a grid point at which the grid lines X7 and Y7 intersect with each other.

Further, 25 grid points at which the five horizontal grid lines X2 to X6 intersect individually with the five longitudinal grid lines Y2 to Y6 correspond to the unit bit matrix B(U1) composed of 5 rows and 5 columns shown at the middle part of Fig. 2, and a bit figure F is arranged at a grid point position corresponding to a bit "1" in the unit bit matrix B(U1) (as described previously, the bit figure F may be arranged at a grid point position corresponding to a bit "0").

In general terms, the unit bit graphic pattern creating portion 140 may perform processing by which individual bits which constitute a unit bit matrix B(Ui) composed of m rows and n columns are allowed to correspond to grid points L arranged in a matrix form composed of m rows and n columns to arrange a bit figure F with a predetermined shape on a grid point L corresponding to a bit "1" or a bit "0," thereby creating a unit bit graphic pattern P(Ui).

Of course, figures which are contained in actual drawing data E, that is, figures contained in a drawing pattern P(E), are only individual bit figures F and individual alignment marks Q1 to Q4. In reality, there will not be drawn each of the grid lines X1 to X7 and Y1 to Y7, a contour line of the bit recording domain Ab (a broken line) and a contour line of the unit recording domain Au (a single dotted and dashed line) which are shown in the drawing.

Information which shows actual dimensions of the drawing pattern P(E) drawn on the substrate S to be exposed is also included in the drawing data E. However, the actual dimensions may be set, with consideration given to drawing accuracy of the beam exposure device 200 to be used.

At present, in pattern processing that uses a highly-accurate electron beam lithography system used in a general LSI design, it is possible to stably form a figure having a size of about 40 nm on the substrate S. Therefore, the above-described electron beam lithography system is used as the beam exposure device 200, thus making it possible to set intervals between grid lines shown in the drawing (a pitch of grid points L) to about 100 nm. It is substantially possible to form a bit figure F having one side of about 50 nm. Where a minute graphic pattern is drawn as described above, the bit figure F will not assume in reality an exact square or the alignment marks Q1 to Q4 will not assume an exact cross-shaped form. This will not, however, pose any practical problems.

Originally, it will be sufficient that the bit figure F plays a role in judging a binary state, namely, whether a figure is present at a position of a grid point L. Thus, the bit figure F may assume any shape such as a rectangle or a circle. It is also sufficient that the alignment marks Q1 to Q4 each play a role in indicating a position of the bit recording domain Ab and they may assume any shape as long as they can be distinguished from a bit figure F. Therefore, an electron beam lithography system capable of stably forming a figure having a size of about 40 nm is used, by which, as described above, bit figures F can be arranged at a pitch of about 100 nm on both sides and highly integrated recording of information can be performed.

On the other hand, where a laser lithography system is used as the beam exposure device 200, a spot diameter of laser beams depends on a wavelength of laser light to be used, and a minimum value thereof is approximately equal to the wavelength. For example, where ArF excimer laser is used, a spot diameter thereof will be about 200 nm, and recording of information is thus slightly decreased in degree of integration, as compared with the use of an electron beam lithography system. Nevertheless, it is possible to perform recording of information with the degree of integration similar to that of a generally-used optical recording medium.

In the example shown in Fig. 3, the unit bit graphic pattern P(U1) is a pattern which is arranged inside the rectangular (square-shaped) bit recording domain Ab. The unit recording graphic pattern R(U1) which is constituted by adding the alignment marks Q1 to Q4 thereto is also a pattern which is arranged inside the rectangular (square-shaped) unit recording domain Au. In executing the present invention, it is not always necessary that the bit recording domain Ab or the unit recording domain Au is given as a rectangular domain. However, as shown at the lower part of Fig. 2, when consideration is given to creation of the drawing pattern P(E) by arranging a plurality of unit recording graphic patterns R(U1) to R(U4), it is efficient that the bit recording domain Ab and the unit recording domain Au are both formed into rectangular domains.

Therefore, it is in practice preferable that the unit bit graphic pattern creating portion 140 creates unit bit graphic patterns P(Ui) arranged inside the rectangular bit recording domain Ab, and the unit recording graphic pattern creating portion 150 adds the alignment marks Q1 to Q4 to the exterior of the rectangular bit recording domain Ab, thereby creating unit recording graphic patterns R(Ui) arranged inside the rectangular unit recording domain Au which includes the bit recording domain Ab and the alignment marks Q1 to Q4. Accordingly, the drawing data creating portion 160 arranges these rectangular unit recording domains Au in a two-dimensional matrix manner, thereby creating a drawing pattern P(E) which includes a plurality of unit recording graphic patterns R(U1) to R(U4), thus making it possible to create the drawing data E for drawing the drawing pattern P(E).

The unit recording domain Au may be set to any size. For example, in the example of Fig. 3, there is defined the unit recording domain Au composed of a square having one side of 50 *µ* m and bit figures F are arranged at a pitch of about 100 nm on both sides, thus making it possible to record information of about 30KB inside one unit recording domain Au. Thus, for example, a square-shaped substrate with one side of about 150 mm is used as an information recording medium, and unit recording domains Au, each composed of a square having one side of 50 *µ* m, are arranged on a two-dimensional matrix on the substrate, by which it is possible to record data as large as 270 GB in one sheet of the information recording medium. <<<Section 2. Formation of physically structured pattern on medium>>>

Here, a more detailed description will be given of exposure process by the beam exposure device 200 and patterning process by the patterning device 300 shown in Fig. 1. As described in Section 1, the beam exposure device 200 is a device which performs beam exposure on the substrate S which is an information recording medium by using electron beams or laser light on the basis of drawing data E. The patterning device 300 is a device which performs pattern processing on the substrate S which has been exposed, thereby creating an information recording medium in which a physically structured pattern (drawing pattern P(E)) has been formed depending on the drawing data E.

In reality, semiconductor lithography systems used in an LSI manufacturing process can also be used, as they are, for the above-described devices. In other words, the beam exposure process by the beam exposure device 200 and the patterning process by the patterning device 300 can be executed by utilizing a general LSI manufacturing process as it is. However, drawing data used in manufacturing LSIs is data which shows graphic patterns for constituting individual domains of semiconductor elements, for example, a channel domain, a gate domain, a source domain, a drain domain and a wiring domain. In contrast, the drawing data E used in the present invention is data which shows a bit figure F indicating a data bit "1" or "0" and a graphic pattern for constituting an alignment mark Q used on readout.

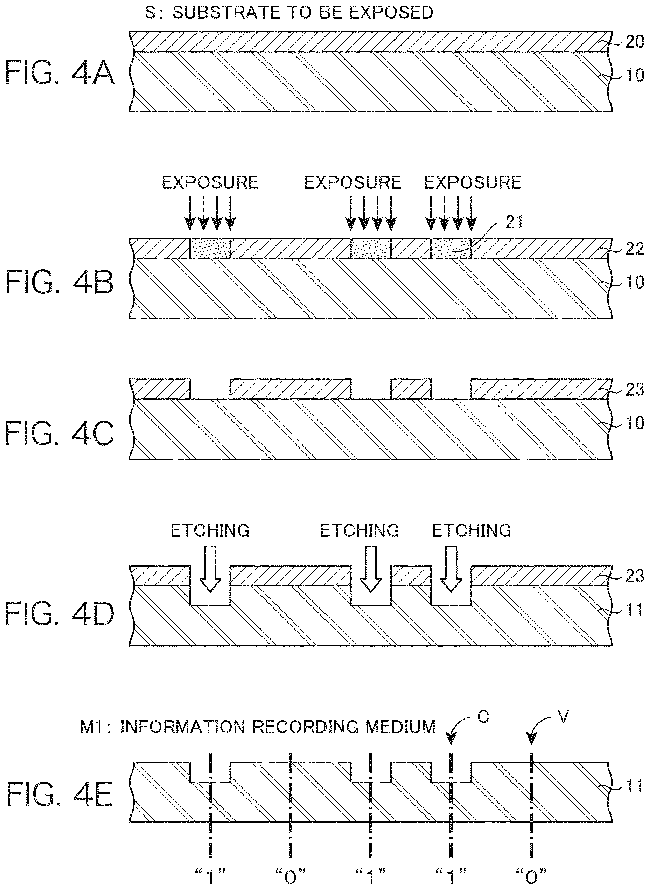

Fig. 4A to Fig. 4E are side cross-sectional views, each of which shows a specific example of exposure steps by the beam exposure device 200 and patterning steps by the patterning device 300 given in Fig. 1 (only a cross section is shown and a structure at the back is not illustrated). First, there is provided a substrate S to be exposed as shown in Fig. 4A. In this example, the substrate S to be exposed is constituted with an underlying layer 10 and a resist layer 20. Here, there is shown an example in which the resist layer 20 made up of one layer is used. However, there may be used a resist layer made up of two or more layers where needed in a patterning step to be described later. Further, not only an organic film such as a resist but also an inorganic film such as a metal film (what-is-called, a hard mask which functions as an etching stopper) may be used together.

Here, the underlying layer 10 is a layer which is to be formed in the patterning step and it is finally a part which acts as an information recording medium M in which digital data has been recorded. As already described, an object of the present invention is to attain the recording of information, with long-term durability maintained. Therefore, there may be used a substrate made of a material suitable in attaining the above-described object as the underlying layer 10. Specifically, regarding transparent materials, a glass substrate, in particular, a quartz glass substrate is optimally used as the underlying layer 10. Of course, it is also possible to use an opaque material such as a silicon substrate as the underlying layer 10. Inorganic materials such as a quartz glass substrate and a silicon substrate are materials which are less susceptible to physical damage and contaminated chemically to a lesser extent. They are materials which can be optimally used in the information recording medium of the present invention.

On the other hand, as the resist layer 20, there may be used a material suitable in giving patterning to the underlying layer 10. That is, there may be used a material having such properties that it undergoes a change in composition on exposure to electron beams or laser beams and it also functions as a protective film in an etching step given to the underlying layer 10. Of course, there may be used a positive-type resist having such properties that an exposed part will dissolve at the time of development or a negative-type resist having such properties that a non-exposed part will dissolve at the time of development.

It is noted that the substrate to be exposed S may assume any shape or may be any arbitrary dimension. A quartz glass substrate which has been now generally used as a photomask is in most cases a rectangular substrate with a standard specification of 152 × 152 × 6.35 mm. Further, as a silicon substrate, in most cases, there is used a disk-shaped wafer having about 1 mm thickness according to specifications of 6, 8 or 12 inches in diameter. As the substrate S to be exposed, there may be used a standard substrate formed as the underlying layer 10 and the resist layer 20 on an upper face thereof.

Hereinafter, for the sake of convenience of description, there will be given an example in which a quartz glass substrate is used as the underlying layer 10 and a positive-type resist is used as the resist layer 20. Therefore, the substrate S to be exposed shown in Fig. 4A is a substrate in which a positive-type resist layer 20 is formed on a quartz glass substrate 10. Of course, the present invention shall not be limited to the above-described example.

Finally, the beam exposure device 200 shown in Fig. 1 performs beam exposure on a surface of the resist layer 20 in the substrate S to be exposed having the underlying layer 10 and the resist layer 20 which is covered thereon. Fig. 4B shows an exposure process by the beam exposure device 200. As described in Section 1, exposure by the beam exposure device 200 is given only to the interior of a bit figure F and the interior of each of the alignment marks Q. Therefore, the resist layer 20 is subjected to the exposure process and thereby separated into an exposed part 21 and a non-exposed part 22. Here, the non-exposed part 22 keeps a chemical composition as it is, whereas the exposed part 21 is changed in chemical composition.

The patterning device 300 is a device which gives patterning to the substrate S after completion of the exposure process. As shown in Fig. 1, the device is provided with a development processing portion 310 and an etching processing portion 320.

The development processing portion 310 performs development processing by which the substrate S after exposure is immersed into a developing fluid having properties that will dissolve the exposed part 21 (where a positive-type resist is used) or the non-exposed part 22 (where a negative-type resist is used) of the resist layer, and a part thereof is performed as a remaining portion. Fig. 4C shows a state in which the above-described development processing has been given to the substrate S shown in Fig. 4B. Since the positive-type resist is used in the example shown here, the exposed part 21 will dissolve in the developing fluid and the non-exposed part will remain as a remaining portion 23 by the development processing.

On the other hand, the etching processing portion 320 performs etching to the substrate S after development. In the example of Fig. 4C, the remaining portion 23 is used as a mask to give etching to the underlying layer 10. Specifically, the substrate S shown in Fig. 4C may be immersed into an etching fluid, the corrosiveness of which is greater against the underlying layer 10 than that against the remaining portion 23 of the resist layer (of course, there may be adopted a method such as dry etching in which a substrate is not immersed into an etching fluid).

Fig. 4D shows a state that etching has been performed by the etching processing portion 320. Of an upper face of the underlying layer 10, a part which is covered with the remaining portion 23 acting as a mask is not influenced by corrosion but a part which is exposed is influenced by corrosion to form a recess. In this way, the underlying layer 10 is processed into an underlying layer 11 having a recess and protrusion structure on the upper face. The etching processing portion 320 has processing functions to thereafter peel and remove the remaining portion 23 of the resist layer and wash and dry the underlying layer 11.

By way of the above-described processes, there is finally obtained the underlying layer 11 after being processed as shown in Fig. 4E. The thus obtained underlying layer 11 is nothing but the information recording medium M onto which digital data has been written by the information storage device according to the present invention. As shown in the drawing, a physical recess and protrusion structure is formed on the upper face of the information recording medium M, and a bit "1" and a bit "0" are expressed respectively by a recess C and a protrusion V. Therefore, a bit "1" and a bit "0" can be read out by detecting whether the surface of the medium is constituted with a recess C or a protrusion V at a position indicated with a thick single dotted and dashed line in the drawing (a position corresponding to a grid point L shown in Fig. 3).

Of course, in reverse to the example shown in the drawing, it is possible to adopt a recording method in which the recess C is given as a bit "0" and the protrusion V is given as a bit "1." Whether one of them is given as a bit "0" and the other is given as a bit "1" is to be determined depending on the process described above. For example, in the case of the example described in Section 1, in the unit bit graphic pattern creating portion 140, bit figures F are arranged at positions of the grid points L corresponding to bits "1" of a unit bit matrix. On the contrary, bit figures F are arranged at positions of the grid points L corresponding to bits "0," by which bit information on the recess and the protrusion is reversed. Where a negative-type resist is used in place of a positive-type resist as the resist layer 20, a relationship between the recess and the protrusion is also reversed.

The thus prepared information recording medium M is characterized in that it is able to perform highly integrated recording of information with long-term durability and it is also able to read out the information in a universal method.

That is, where materials such as a quartz glass substrate and a silicon substrate are used as the underlying layer 10, they are less susceptible to deterioration with the lapse of time or damage resulting from water and thermal influences than conventional information recording media such as paper, film and record disks, thereby providing durability in a semi-permanent time scale of several hundred years as with stone plates in ancient times. Of course, as compared with magnetic recording media, optical recording media and semiconductor recording media which are generally used as data recording media for computers, the information recording medium M is able to provide durability over a much longer period of time. Therefore, the present invention can be optimally used in storing information, for example, official documents in which the information is desired to be recorded semi-permanently.

Further, as described in Section 1, the beam exposure device 200 is able to perform subtle exposure by use of electron beams or laser light, thus making it possible to perform extremely highly-integrated recording of information. For example, a high-definition electron beam lithography system can be used to write bit figures F at a pitch of about 100 nm, by which it is possible to store information with a capacity of about 100 GB to 1 TB in the above-described photomask or silicon substrate with a standard size.

Further, the information recording medium according to the present invention is characterized in that since binary information of bits is directly recorded as a physical structure such as a recess and a protrusion, the information can be read out in a universal method. That is, in Patent Documents 1 and 2 described previously, there has been disclosed such technology that the cylindrical quartz glass is used as a medium to record information therein in a three-dimensional manner. In order to read out the information recorded inside the medium in a three-dimensional manner, a dedicated readout device using computer tomography or others is needed and special computation processing such as Fourier transform processing is also needed. Therefore, even if the cylindrical recording medium remains intact, for example, after several hundred years, it will be impossible to read out information without transfer of technology on a dedicated readout device.

In contrast, in the information recording medium prepared by the information storage device according to the present invention, binary information of bits is directly recorded as a physical structure. And, if a recording surface can be magnified by a certain method and recognized as an image, it is possible to read out at least the information of bits in itself. In other words, the information recording medium according to the present invention is in itself a three-dimensional structure body but recording of the bit information is definitely performed in a two-dimensional manner. Therefore, even if the information recording medium according to the present invention is found after several hundred years or several thousand years, it will be possible to read out the bit information by a universal method.

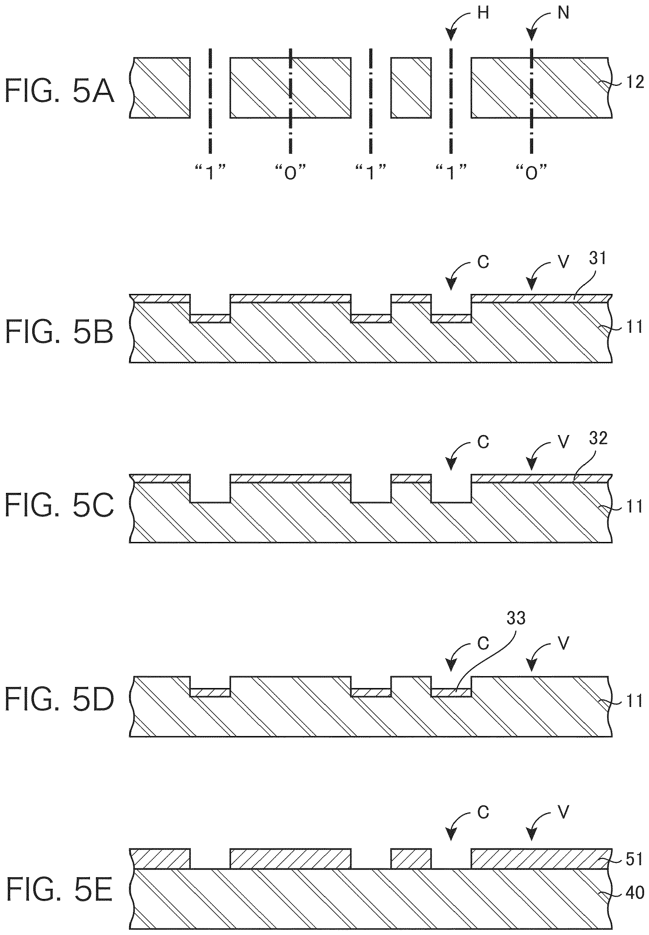

A description has been so far given of the example in which the information storage device according to the present invention is used to form a physically structured pattern having a recess and protrusion structure composed of a recess indicating one of bit "1" and bit "0" and a protrusion indicating the other of them on a surface of a quartz glass substrate or that of a silicon substrate. However, in executing the present invention, the physical structure indicating bit information is not necessarily limited to a recess and protrusion structure. Thus, a description will be given of some variations of a method in which the physical structure is formed on a medium by referring to the side cross-sectional views of Fig. 5A to Fig. 5E (only a cross section is shown and a structure at the back is not illustrated).

Fig. 5A is a side cross-sectional view which shows an example in which the patterning device 300 is used to form a physically structured pattern having a network structure composed of a through hole H which indicates one of bit "1" and bit "0" and a non-hole part N which indicates the other of them. In a network structure body 12 shown in the drawing, a position indicated by a thick single dotted and dashed line corresponds to a grid point L shown in Fig. 3, and a bit "1" and a bit "0" are expressed as shown in the drawing, depending on whether the position concerned is a through hole H or a non-hole part N (a part at which no through hole is formed).

As described above, in the case of the information recording medium shown in Fig. 5A, a bit is expressed by the presence or absence of the through hole in place of the recess and protrusion structure and, therefore, the medium in itself constitutes a network structure body. However, a fundamental principle of recording bit information at the position of a grid point L is exactly the same as that of the basic example shown in Fig. 4E. Of course, the through hole H may be used to express a bit "0" and the non-hole part N may be used to express a bit "1." Where the network structure body 12 shown in Fig. 5A is used as the information recording medium M, etching may be performed in an etching step by the etching processing portion 320 (Fig. 4D) until penetrating to a lower face of the underlying layer 10, thereby forming the through hole H.

On the other hand, Fig. 5B to Fig. 5D are side cross-sectional views, each of which shows a modified example in which an added layer is formed on a surface of a recess C or a protrusion V or both surfaces of them in the information recording medium M shown in Fig. 4E. In the modified example shown in Fig. 5B, an added layer 31 is formed on both surfaces of the recess C and the protrusion V. In the case of the modified example shown in Fig. 5C, an added layer 32 is formed only on the surface of the protrusion V. In the case of the modified example shown in Fig. 5D, an added layer 33 is formed on the surface of the recess C.

As the added layers 31, 32, 33, the following materials may be used; light-reflective materials (for example, metals such as aluminum, nickel, titanium, silver, chromium, silicon, molybdenum and platinum as well as alloys, oxides and nitrides thereof) or light-absorbing materials (for example, materials composed of a compound such as an oxide and a nitride of metal, in the case of chromium, chromium oxide and chromium nitride). Formation of an added layer made of a light-reflective material makes it possible to distinguish a recess C from a protrusion V based on a difference in behavior of reflected light on readout. And, formation of an added layer made of a light-absorbing material makes it possible to distinguish a recess C from a protrusion V based on a difference in light absorption mode on readout. Therefore, these added layers are formed to obtain an effect that information can be read out more easily.

Further, a similar effect can be obtained by doping impurities on a surface of a recess C or that of a protrusion V in place of forming another layer having a clear border face like the added layer. For example, an information recording medium having a recess and protrusion structure is constituted with quartz, and on the surface of the medium, boron, phosphorus, rubidium, selenium and copper are doped to make the impurity concentrations different on the surface thereof. Thereby, as with a case where the added layer is provided, the surface can be given light reflectivity or light absorbency to obtain an effect of reading out information more easily. Specifically, in the case of the above-described impurities, there is obtained an effect of absorbing ultraviolet rays at concentrations of about 100 ppm or more, and there is obtained an effect of increasing reflectance at concentration of about 1000 ppm or more.

In particular, as shown in the example of Fig. 5C, where the added layer 32 made of a light-reflective material or a light-absorbing material is formed only at a protrusion V, it is possible to easily distinguish a bit "1" from a bit "0" due to a clear difference between reflected light or scattered light obtained from a recess C and reflected light or scattered light obtained from a protrusion V at the time of readout. Similarly, as shown in the example of Fig. 5D, where the added layer 33 made of a light-reflective material or a light-absorbing material is formed only at a recess C, it is also possible to easily distinguish the bits from each other due to a clear difference between reflected light or scattered light obtained from a recess C and reflected light or scattered light obtained from a protrusion V at the time of readout.

As shown in the example of Fig. 5B, in order to form the added layer 31 on both surfaces of a recess C and a protrusion V, there may be performed processing by which etching is performed to obtain the information recording medium M shown in Fig. 4E and, thereafter, the added layer 31 is deposited all over on an upper face of the recording medium. Further, as shown in the example of Fig. 5C, in order to obtain a structure in which the added layer 32 is formed only on a surface of a protrusion V, in place of the substrate S to be exposed shown in Fig. 4A, there may be used a substrate in which the added layer is held between the underlying layer 10 and the resist layer 20. Then, as shown in the example of Fig. 5D, in order to obtain a structure in which the added layer 33 is formed only on a surface of a recess C, at the time of completion of the etching process shown in Fig. 4D, processing is performed for depositing the added layer all over on an upper face thereof in a state that the remaining portion 23 of the resist layer remains as it is and, thereafter, the remaining portion 23 may be peeled and removed.

On the other hand, the modified example shown in Fig. 5E is such that an underlying layer 51 in itself which has been formed on an upper face of a supporting layer 40 is constituted with a light-reflective material or a light- absorbing material. For example, the supporting layer 40 is constituted with a quartz glass substrate, an added layer made of aluminum is formed on an upper face thereof, a resist layer is also formed on the upper face thereof, and processes similar to those shown in Fig. 4A to Fig. 4E are performed, thus making it possible to obtain the structure body shown in Fig. 5E. In this case, etching process may be performed by using a corrosion liquid having corrosiveness against aluminum. In the structure body, the surface of a recess C is formed with quartz glass and that of a protrusion V is formed with aluminum, thereby also obtaining an effect that the bits can be easily distinguished from each other at the time of readout.

Where the modified example shown in Fig. 5A is actually adopted, it is preferable that the network structure body 12 is constituted with an opaque material. Accordingly, a part of the through hole H is given as a part which will transmit light, and a part of the non-hole part N is given as a part which will not transmit light. Therefore, a clear difference can be recognized at the time of readout which will be described later and also the bits can also be easily distinguished.

On the other hand, where the modified examples shown in Fig. 5C to Fig. 5E are adopted, it is preferable that the underlying layer 11 or the supporting layer 40 is constituted with a transparent material and the added layers 32, 33, 51 are constituted with an opaque material. Thereby, a part on which no added layer has been formed is given as a part which will transmit light, and a part on which the added layer has been formed is given as a part which will not transmit light. Thus, at the time of readout which will be described later, it is possible to recognize a clear difference in light transmittance and easily distinguish the bits.

### <<<Section 3. Basic embodiment of information readout device according to the present invention>>>

In Section 1 and Section 2, a description has been given of the constitution and motions of the information storage device for storing information in the information recording medium. Here, a description will be given of a constitution and motions of the information readout device for reading out the thus recorded information.

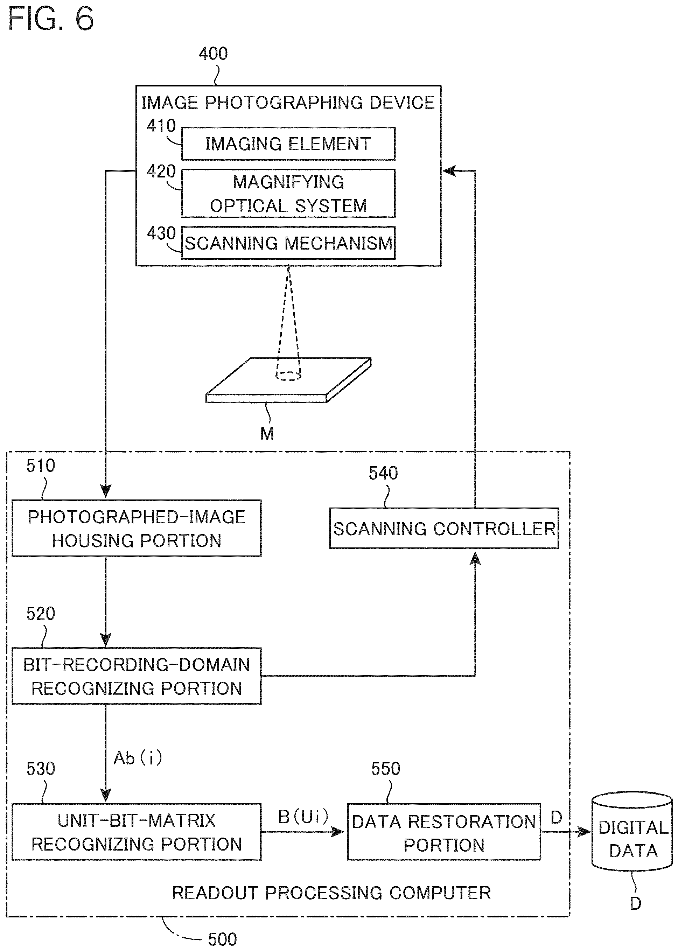

Fig. 6 is a block diagram which shows a constitution of the basic embodiment of the information readout device according to the present invention. The information readout device according to the embodiment is a device which performs functions to read out digital data stored in the information recording medium M by using the information storage device shown in Fig. 1. As shown in the drawing, the device is constituted with an image photographing device 400 and a readout processing computer 500.

Here, the image photographing device 400 is a constituent which magnifies and photographs a domain to be photographed which is a part of a recording surface of the information recording medium M and captures the thus photographed image as image data. As shown in the drawing, it is provided with an imaging element 410, a magnifying optical system 420 and a scanning mechanism 430.

The imaging element 410 can be constituted, for example, with a CCD camera and has functions to capture, as digital image data, images inside a predetermined domain to be photographed. The magnifying optical system 420 is constituted with optical elements such as lenses and plays a role in magnifying a predetermined domain to be photographed which constitutes a part of the recording surface of the information recording medium M and forming the magnified image on an image surface of the imaging element 410. Then, the scanning mechanism 430 plays a role in giving scanning processing (change in position and angle) to the imaging element 410 and the magnifying optical system 420 so that the domain to be photographed moves sequentially on the recording surface of the information recording medium M.

In Fig. 5A to Fig. 5E, there are shown variations of the information recording medium M. The information recording medium M composed of the network structure body 12 shown in Fig. 5A is able to read out information on either an upper face or a lower face thereof, regardless of whether a material is transparent or opaque, and both the upper face and the lower face are to constitute a recording surface. In contrast, as shown in Fig. 4E and Fig. 5B to Fig. 5E, in the case of the information recording medium M having a recess and protrusion structure formed on an upper face, the upper face is a recording surface. Therefore, where the underlying layer 11 and the supporting layer 40 are constituted with a transparent material, information can be read out by being photographed either from above or below. Where the layers are constituted with an opaque material, the information is always required to be photographed from above.

As shown in the drawing, the readout processing computer 500 is provided with a photographed-image housing portion 510, a bit-recording-domain recognizing portion 520, a unit-bit-matrix recognizing portion 530, a scanning controller 540 and a data restoration portion 550. Hereinafter, a description will be sequentially given of functions of these portions. However, the portions are constituents which are in reality provided by installing a dedicated program into a computer. The readout processing computer 500 can be constituted by installing a dedicated program into a general-purpose computer.

First, the photographed-image housing portion 510 is a constituent which houses photographed images photographed by the image photographing device 400. That is, it has functions to house, as digital image data, images photographed by the imaging element 410 inside a predetermined domain to be photographed. As described above, the image photographing device 400 is provided with the scanning mechanism 430, and the domain to be photographed moves sequentially on the recording surface of the information recording medium M to obtain a newly photographed image at every movement by the imaging element 410. The photographed-image housing portion 510 thus performs functions to house individual image data sequentially given from the imaging element 410.

On the other hand, the bit-recording-domain recognizing portion 520 performs processing by which individual bit recording domains Ab are recognized from photographed images housed in the photographed-image housing portion 510. In the present invention, as described by referring to Fig. 2, digital data D to be stored is divided into a plurality of unit data U1, U2, U3 and others, each of which is recorded as a unit bit graphic pattern P(U1), P (U2), P(U3) and others inside the individual bit recording domains Ab. Therefore, at the time of readout processing as well, first, after recognition of the individual bit recording domains Ab, each bit which constitutes the unit data Ui is to be read out on the basis of individual unit bit graphic patterns P(Ui) recorded therein.

As described in Section 2, alignment marks Q and bit figures F are recorded on the recording surface of the information recording medium M, as physically structured patterns which have a recess and protrusion structure or a structure in which through holes are present or absent. Resultantly, the alignment marks Q and bit figures F or their contours are expressed in terms of distribution of brightness and darkness on a photographed image. An existing pattern-recognizing technology can be used to recognize the alignment marks Q and bit figures F on the photographed image.

First, recognition of individual bit recording domains Ab is performed by detecting an alignment mark Q. Since a figure different from the bit figure F is used in the alignment mark Q, the bit-recording-domain recognizing portion 520 is able to detect the alignment mark Q by searching the interior of a photographed image housed in the photographed-image housing portion 510. For example, in the example shown at the lower part of Fig. 2, the bit figure F is a square, whereas the alignment mark Q is a cross-shape. Therefore, the existing pattern recognizing technology can be used to recognize the alignment mark Q on a photographed image and locate the position.

The alignment mark Q is arranged at a specific position in relation to the bit recording domain Ab. Therefore, if the alignment mark Q can be recognized on a photographed image, it is possible to identify the position of the bit recording domain Ab. For example, where the unit recording graphic pattern R(U1) shown in Fig. 3 is included inside the photographed image, four sets of alignment marks Q1 to Q4 can be recognized, by which it is possible to recognize a square-shaped bit recording domain Ab having four sets of the alignment marks Q1 to Q4 in the vicinities of four corners.

If the image photographing device 400 has functions to photograph a domain to be photographed with a size which can include at least one unit recording domain Au, search is conducted inside the photographed image, thus making it possible to recognize four sets of the alignment marks Q1 to Q4 shown in Fig. 3 and also recognize the bit recording domain Ab.

Of course, if the domain to be photographed is set at a position across mutually-adjacent unit recording domains Au, four sets of the alignment marks Q1 to Q4, each of which indicates the position of the same bit recording domain Ab, would not be correctly recognized. In this case, the bit-recording-domain recognizing portion 520 is able to understand a positional deviation of the domain to be photographed on the basis of a mutual relationship of the recognized alignment marks and performs processing by which the positional deviation is reported to the scanning controller 540.

When the positional deviation is reported, the scanning controller 540 controls the image photographing device 400 so as to adjust the positional deviation concerned. Specifically, the controller gives instructions to the scanning mechanism 430 so that the domain to be photographed is allowed to move only by a predetermined correction amount in a predetermined correction direction. The above-described correction makes it possible to obtain a correct photographed image where the alignment marks Q1 to Q4 are arranged at four corners appropriately as shown in Fig. 3 and also to give correct readout processing to a bit recording domain Ab. As described above, a primary role of the scanning controller 540 is to perform adjustment processing for correcting the positional deviation where the domain to be photographed undergoes positional deviation in relation to the unit recording domain Au.

A second role of the scanning controller 540 is to perform scanning processing for setting a next unit recording domain Au as a new domain to be photographed after completion of photography in which one unit recording domain Au is given as a domain to be photographed. For example, in the example shown at the lower part of Fig. 2, after completion of photography of a unit recording domain Au(U1) at which a unit recording graphic pattern R(U1) has been recorded, it is then necessary to take a photograph of a unit recording domain Au(U2) at which a unit recording graphic pattern R(U2) has been recorded. Thereafter, it is further necessary that a domain to be photographed is allowed to move sequentially from a unit recording domain Au(U3) at which a unit recording graphic pattern R(U3) has been recorded to a unit recording domain Au(U4) at which a unit recording graphic pattern R(U4) has been recorded.

Consequently, the scanning controller 540 is to be a constituent which controls the change of a domain to be photographed by the image photographing device 400 so that a photographed image can be obtained in all the bit recording domains to be read out. The control can be attained by feedback control on the basis of detection results of the alignment marks Q by the bit-recording-domain recognizing portion 520. A slight adjustment can also be made as described above even where the positional deviation takes place.

Then, when the bit-recording-domain recognizing portion 520 recognizes an i-th bit recording domain Ab(i) from a photographed image, information of the i-th bit recording domain Ab(i) is given to the unit-bit-matrix recognizing portion 530. The unit-bit-matrix recognizing portion 530 performs processing by which a unit bit matrix is recognized on the basis of a pattern inside the bit recording domain Ab(i). For example, in the example shown in Fig. 3, it is possible to recognize a unit bit matrix B(U1) composed of five rows and five columns as shown at the middle part of Fig. 2 on the basis of the unit bit graphic pattern P(U1) recorded inside a bit recording domain Ab.

In the example shown in Fig. 3, as described in Section 1, horizontal grid lines X1 to X7 arranged at equal intervals and longitudinal grid lines Y1 to Y7 arranged at equal intervals are defined, and a grid point L is defined as each of the intersection points thereof. The individual bit figures F and alignment marks Q1 to Q4 are all arranged so that the centers thereof are positioned at any of the grid points L. Therefore, the unit-bit-matrix recognizing portion 530 is able to perform processing for recognizing the unit bit matrix B(U1) by the following procedures.

First, the horizontal grid lines X1 and X7, and the longitudinal grid lines Y1 and Y7 are recognized on the basis of the center point positions of four sets of the alignment marks Q1 to Q4 recognized by the bit-recording-domain recognizing portion 520. Next, the horizontal grid lines X2 to X6 are defined so as to divide equally a space between the horizontal grid lines X1 and X7, and the longitudinal grid lines Y2 to Y6 are defined so as to divide equally a space between the longitudinal grid lines Y1 and Y7. Then, there may be performed processing by which positions of 25 grid points at which the horizontal grid lines X2 to X6 intersect with the longitudinal grid lines Y2 to Y6 are determined to judge whether a bit figure F is present at each position of these grid points or not. As described above, the bit figure F can be recognized on the basis of distribution of brightness and darkness on a photographed image. Therefore, a bit "1" is allowed to correspond to a position of a grid point at which the bit figure F is present and a bit "0" is allowed to correspond to a position of a grid point at which it is not present, thus making it possible to obtain the unit bit matrix B(U1) composed of five rows and five columns shown at the middle part of Fig. 2.

The unit-bit-matrix recognizing portion 530 thus performs processing by which an i-th unit bit matrix B(Ui) is recognized on the basis of an i-th unit bit graphic pattern P(Ui) recorded inside an i-th bit recording domain Ab(i) and gives the result thereof to the data restoration portion 550. The unit-bit-matrix recognizing portion 530 will repeatedly execute processing for recognizing a unit bit matrix by the same method with regard to all the bit recording domains recognized by the bit-recording-domain recognizing portion 520.

The data restoration portion 550 performs processing by which unit data Ui is created from individual unit bit matrixes B(Ui) recognized in this way by the unit-bit-matrix recognizing portion 530 to synthesize individual unit data Ui, thereby restoring the digital data D stored. For example, in the example shown in Fig. 2, four sets of unit data U1 to U4 are created from four sets of unit bit matrixes B(U1) to B(U4) to couple them together, by which original digital data D is restored.

A description has been so far given of the basic embodiment of the information readout device according to the present invention by referring to the block diagram of Fig. 6. The information readout device described above is not, however, necessarily used to read out information from the information recording medium M prepared by the information storage device according to the present invention. It is also possible to read out the information by using, for example, an optical measurement device, a scanning electron microscope or an atomic force microscope.

The information recording medium M prepared by the information storage device according to the present invention is, as described previously, provided with universality that binary information of bits is directly recorded as a physical structure. Then, if a recording surface can be magnified by some method to obtain an image showing the presence or absence of a bit figure F, bit information can be read out. Therefore, even if the information recording medium M is found after several hundred years or several thousand years and if some means for recognizing the physical structure is available at the age concerned, the bit information can be read out. Of course, where the medium is found in a state of being buried underground, a recording surface may be contaminated by attached foreign matter. However, the foreign matter can be easily removed by washing and the information can be read out without any difficulty.

Adoption of any readout method makes it possible to read out information in a non-contact state on an information recording surface (where an atomic force microscope is used, information can be read out in a non-contact state by use of a non-contact mode). At the time of readout processing, there is no chance that the recording surface may be physically damaged and even on repetition of readout processing, there is no fear that the information recording surface may wear away.

Further, the information readout device shown in Fig. 6 is combined with the information storage device shown in Fig. 1, by which information can be read out from a part of a recorded domain in the information recording medium M and also new information can be stored at a non-recorded domain adjacent to the recorded domain. It is, therefore, possible to provide a write-once type information storage device in which recording of new information is performed sequentially in one piece of information recording medium. Of course, in a device combining an information storage device with an information readout device, the information storage device can be used to perform storage processing in which information is written on a medium and, thereafter, the information readout device can be used to verify the stored information. Correction can also be made, whenever necessary.

### <<<Section 4. Variations of alignment marks>>>

In Section 3, a description has been given of the basic embodiment of the information readout device. Thus, here, with consideration given to convenience at the time of reading out the information, a description will be given of variations of alignment marks recorded at the time of information storage. The bit figure F plays a role in indicating original information to be stored, whereas the alignment marks Q are to be meta information which is used for alignment at the time of reading out information.

In the embodiment described above, the unit recording graphic pattern creating portion 150 performs processing by which the cross-shaped alignment marks Q1 to Q4 are added respectively to four corners outside a rectangular bit recording domain Ab, for example, as shown in Fig. 3, thereby creating unit recording graphic patterns. These alignment marks Q1 to Q4 are used to make an alignment so that the bit-recording-domain recognizing portion 520 of the information readout device shown in Fig. 6 can recognize a bit recording domain Ab.

However, a shape, an arrangement position and a number of the alignment marks Q shall not be limited to those of the above-described embodiment. That is, each of the alignment marks Q may assume any shape as long as it can be distinguished from the bit figure F. Further, they are not necessarily required to be arranged at four corners outside a bit recording domain Ab and, for example, they may be arranged at a central position between four sides of the bit recording domain Ab. Still further, the number of the alignment marks Q is not necessarily limited to four sets.

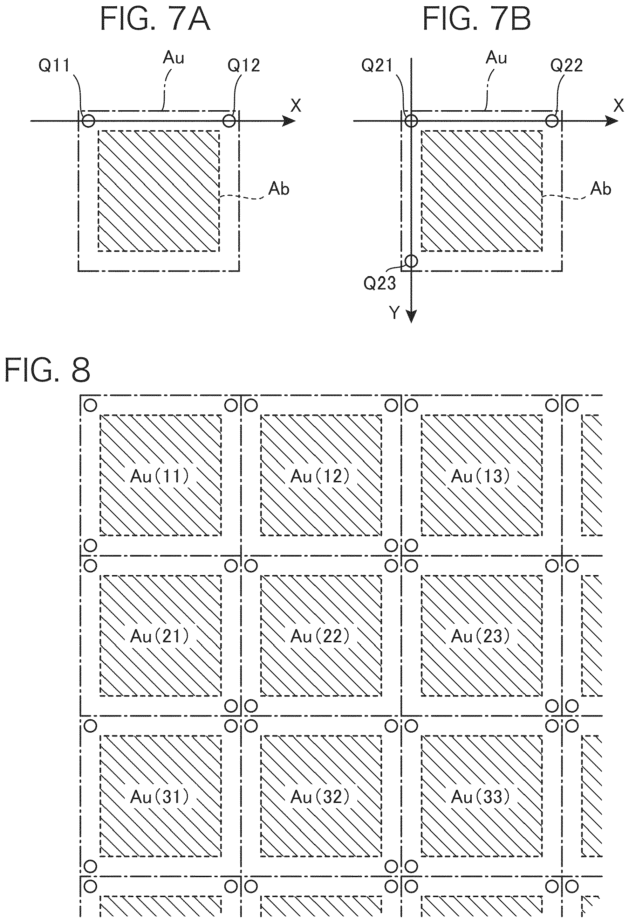

Fig. 7A and Fig. 7B are plan views, each of which shows a variation of alignment marks Q used in the present invention. In each of the drawings, a square enclosed with a broken line indicates a bit recording domain Ab (for the sake of convenience, slanting lines are given inside in place of depicting a bit figure), and a square enclosed with a single dotted and dashed line indicates a unit recording domain Au, and circular marks arranged between them are the alignment marks Q.

Fig. 7A shows an example in which alignment marks Q11 and Q12 are arranged at an upper left corner and an upper right corner in the vicinity of the rectangular bit recording domain Ab. A direction which connects the center points of two sets of the alignment marks Q11, Q12 is defined as a horizontal coordinate axis X, thus making it possible to indicate one coordinate axis direction with regard to an arrangement of the bit recording domain Ab. At the time of readout, the horizontal coordinate axis X can be recognized on the basis of two sets of the alignment marks Q11, Q12. Further, a longitudinal coordinate axis Y can be defined as an axis orthogonal to the horizontal coordinate axis. Therefore, if the bit recording domain Ab assumes a correct rectangle, no problem will be found in readout processing of individual bits. From this point of view, where two sets of alignment marks are added with regard to one bit recording domain Ab, no problem will occur in practice in performing readout processing.

Of course, alignment marks may be individually arranged at an upper left corner and a lower left corner in the vicinity of the bit recording domain Ab to define a longitudinal coordinate axis Y. That is, the unit recording graphic pattern creating portion 150 may create a unit recording graphic pattern by adding a total of two sets of alignment marks to two corners not at a diagonal position, of four corners arranged outside in the vicinity of a rectangular bit recording domain Ab.

On the other hand, Fig. 7B shows an example in which a total of three sets of alignment marks Q21, Q22, Q23 are added so as to be arranged at three corners, of four corners outside in the vicinity of a rectangular bit recording domain Ab, thereby creating a unit recording graphic pattern. Thus, as shown in the drawing, both the horizontal coordinate axis X and the longitudinal coordinate axis Y can be defined by three sets of the alignment marks Q21, Q22, Q23 to further enhance the accuracy of readout processing of individual bits.

As described above, where three sets of alignment marks are used, as shown in the example of Fig. 8, it is preferable that mutually-adjacent unit recording graphic patterns are made different in arrangement mode of three sets of alignment marks. Fig. 8 shows a state in which a plurality of unit recording domains Au are arranged in a two-dimensional matrix form. Here, as for unit recording domains Au(11), Au(13), Au(22), Au(31) and Au(33), three sets of alignment marks are arranged in the arrangement mode shown in Fig. 7B (that is, an arrangement mode in which no mark is given only to a lower right corner). As to unit recording domains Au(12), Au(21), Au(23) and Au(32), three sets of alignment marks are arranged in an arrangement mode which is laterally reversed to the arrangement mode given in Fig. 7B (that is, an arrangement mode in which no mark is given only to a lower left corner).

That is, where a row number i (i = 1, 2, 3, ...) and a column number j (j = 1, 2, 3, ...) are defined for an arrangement of the unit recording domains Au to express individual unit recording domains as A (ij), as shown in the drawing, in a first group in which (i + j) is an even number, there is adopted an arrangement mode in which no alignment mark is given only to a lower right corner as shown in Fig. 7B. And, in a second group in which (i + j) is an odd number, there is adopted an arrangement mode in which no alignment mark is given only to a lower left corner in such a manner that Fig. 7B is laterally reversed.

As described above, three sets of the alignment marks are defined in two types of arrangement modes and there is adopted a vertically- or laterally-adjacent unit recording graphic pattern in which the marks are arranged in a mutually different mode. Thereby, it is possible to prevent an error of omitting photography of an adjacent unit recording domain when the scanning controller 540 scans a domain to be photographed.

For example, in the example shown in Fig. 8, it is assumed that the scanning controller 540 has conducted such control that the unit recording domain Au(11) is at first photographed as a domain to be photographed, then, a domain to be photographed is allowed to move in a right direction in the drawing and the unit recording domain Au(12) adjacent to the right is given as the domain to be photographed. Normally, such control is performed that the unit recording domain Au is allowed to move only by a distance corresponding to a pitch thereof, by which a next domain to be photographed can be brought to a position of the unit recording domain Au(12). However, where a movement distance error is caused in a certain situation and a domain to be photographed has moved to a position of the unit recording domain Au(13), readout processing given to the unit recording domain Au(12) will be omitted.

If there is adopted the arrangement mode shown in Fig. 8, it is possible to detect an error even in the above situation. That is, on the assumption that after the unit recording domain Au(11) has been photographed, photography of the unit recording domain Au(12) is omitted and the unit recording domain Au(13) is photographed, alignment marks will be made identical in arrangement mode. It is, therefore, possible to recognize that photography of the unit recording domain Au(12) has been omitted. Thus, there is performed processing by which a domain to be photographed is returned in the left direction in the drawing and amendment can be made so as to photograph the unit recording domain Au(12). Similar amendment can be made where a longitudinal omission takes place.

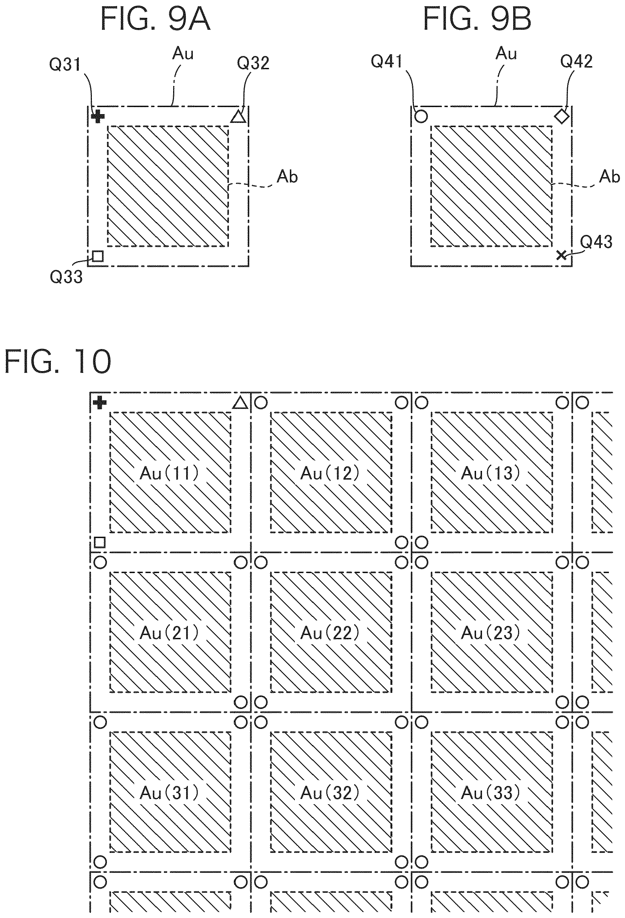

As a method for recognizing occurrence of the omission, there is a method for providing two types of arrangement modes. In addition, it is possible to adopt a method for changing the shape of an alignment mark. For example, Fig. 9A and Fig. 9B each show one example of a variation in which an alignment mark is changed in shape. In the example shown in Fig. 9A, there are arranged a cross-shaped mark Q31, a triangular mark Q32 and a square mark Q33 at each position shown in the drawing. On the contrary, in the example shown in Fig. 9B, there are arranged a circular mark Q41, a diamond shaped mark Q42 and an x-shaped mark Q43 at each position shown in the drawing. The above-described two modes of the alignment marks are provided alternately in a vertical direction and in a horizontal direction, by which it is possible to recognize occurrence of the omission, as with the example shown in Fig. 8.

Fig. 10 is a plan view which shows still another variation in arrangement mode of the alignment marks in the present invention. In this variation, the alignment marks of the unit recording domain Au(11) in the example shown in Fig. 8 are changed to the alignment marks shown in Fig. 9A. That is, of a plurality of unit recording domains Au arranged in a two-dimensional matrix form, only a unit recording domain Au(11) arranged at a first row and at a first column differs in shape of the alignment mark to be used. This is because of such consideration that the unit recording domain Au(11) arranged at the first row and at the first column is set as a reference unit recording domain to be read out at first, by which the reference unit recording domain can be easily distinguished at the time of readout processing.

Where the variation shown in Fig. 10 is adopted, the unit recording graphic pattern creating portion 150 may set a specific unit recording domain at the reference unit recording domain to create a unit recording graphic pattern which uses reference alignment marks different from those of other unit recording domains at the reference unit recording domain concerned. In the example shown in the drawing, the reference alignment marks shown in Fig. 9A are used in the reference unit recording domain Au(11), and ordinary alignment marks shown in Fig. 8 are used at other unit recording domains. Therefore, at the time of readout processing, first, processing is performed by which the reference alignment marks shown in Fig. 9A can be searched to identify the reference unit recording domain Au(11) which is to be read out at first.

That is, if the image photographing device 400 of the information readout device shown in Fig. 6 is provided with functions to photograph a domain to be photographed with a size capable of including at least one unit recording domain Au, it is possible to search the reference alignment marks shown in Fig. 9A. Therefore, first, the scanning controller 540 may control the image photographing device 400 to adjust a domain to be photographed so that a photographed image of a domain including the reference unit recording domain Au(11) can be obtained on the basis of the reference alignment marks shown in Fig. 9A. In this way, after completion of readout of correct bit information from the bit recording domain Ab(11) inside the reference unit recording domain Au(11), the scanning controller 540 may provide such control that a domain to be photographed is allowed to move sequentially depending on a pitch of arranged unit recording domains Au.

Of course, in this case as well, as described by referring to Fig. 8, even when such an error that omits photography of the unit recording domain Au(12) takes place in a certain situation, it is possible to recognize and correct the error. Further, upon occurrence of a minute positional deviation, the deviation can be adjusted accordingly.

Further, as a method for indicating the reference unit recording domain Au(11), there can be adopted a method in which bit figures F are not arranged at the bit recording domain Ab(11) inside the reference unit recording domain Au(11) but a unique identification mark is arranged, in place of adopting a method for using reference alignment marks different from those of other unit recording domains. The bit recording domain Ab is a domain which is originally used for recording data to be stored by arranging bit figures F. However, the unique identification mark is arranged only at the reference unit recording domain, thus making it possible to easily recognize the reference unit recording domain by confirming the unique identification mark.

For example, a large star mark is drawn in the domain Au(11) shown in Fig. 8, by which it can be easily recognized that the domain Au(11) is the reference unit recording domain. In this case, original information is not recorded inside the domain Au(11). However, first, such a positional adjustment is made that the reference unit recording domain Au(11) is given as a first domain to be photographed and, thereafter, scanning may be performed so that a domain to be photographed is allowed to move sequentially. If the reference unit recording domain Au is of such a size that can be macroscopically visible, the star mark can be confirmed visibly in the above example. Then, an operator is able to macroscopically perform manual alignment operation so that the reference unit recording domain Au (11) is made to a first domain to be photographed.

### <<<Section 5. Information storage process and information readout process according to the present invention>>>

Finally, a description will be given of basic processing procedures where the present invention is understood as an invention of process, that is, an information storage process and an information readout process.

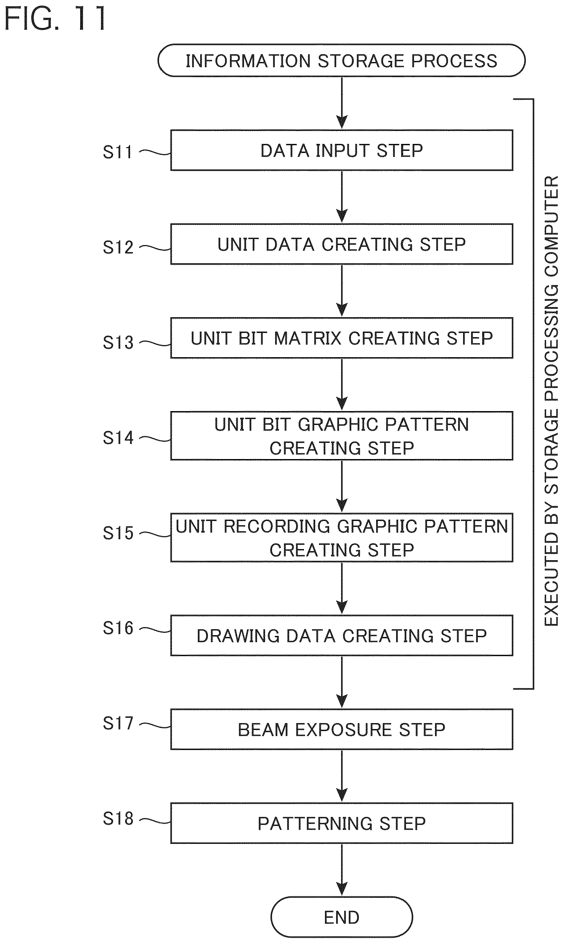

Fig. 11 is a flowchart which shows basic processing procedures for information storage process according to the present invention. The procedures are those for executing an information storage process in which digital data is written onto an information recording medium and stored. Steps S11 to S16 are procedures executed by the storage processing computer 100 shown in Fig. 1, Step S17 is a procedure executed by the beam exposure device 200 shown in Fig. 1, and Step S18 is a procedure executed by the patterning device 300 shown in Fig. 1.

First, in Step S11, the storage processing computer 100 executes a data input step in which digital data D to be stored is input. In subsequent Step S12, the storage processing computer 100 executes a unit data creating step in which the digital data D is divided by a prescribed bit length unit to create a plurality of unit data Ui. Then, in Step S13, the storage processing computer 100 executes a unit bit matrix creating step in which data bits which constitute individual unit data Ui are arranged in a two-dimensional matrix form to create a unit bit matrix B(Ui). In Step S14, the storage processing computer 100 executes a unit bit graphic pattern creating step in which the unit bit matrix B(Ui) is converted to a geometrical pattern arranged inside a predetermined bit recording domain Ab to create a unit bit graphic pattern P(Ui).

Then, in Step S15, the storage processing computer 100 executes a unit recording graphic pattern creating step in which alignment marks Q are added to the unit bit graphic pattern P(Ui) to create a unit recording graphic pattern R(Ui). Then, in Step S16, the storage processing computer 100 executes a drawing data creating step which creates drawing data E for drawing the unit recording graphic pattern R(Ui).

Then, lastly, in Step S17, there is executed a beam exposure step in which electron beams or laser light is used to effect beam exposure on the substrate S which is an information recording medium on the basis of the drawing data E. In Step S18, there is executed a patterning step in which pattern processing is performed on the exposed substrate to create an information recording medium M in which a physically structured pattern is formed depending on the drawing data E.

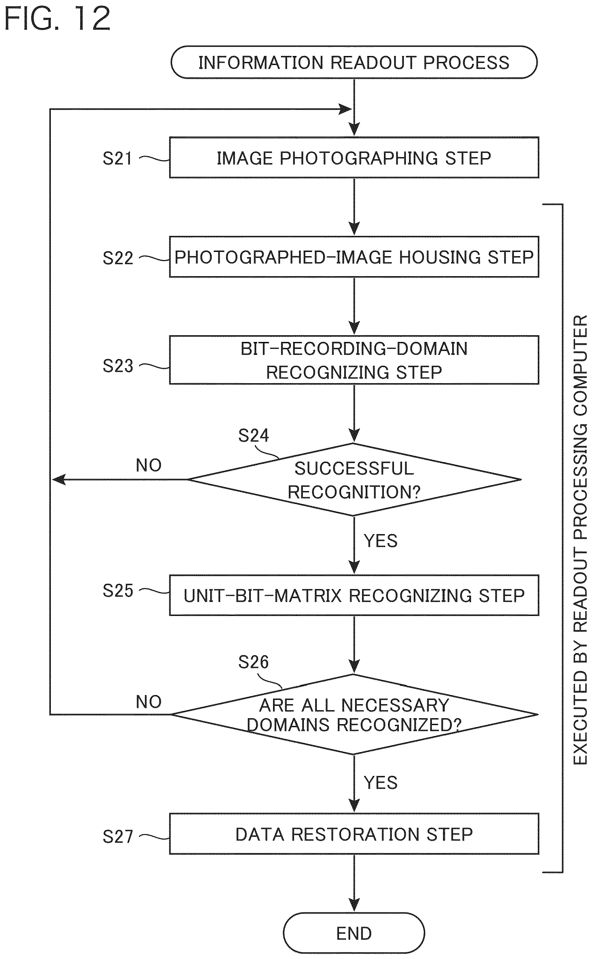

In contrast, Fig. 12 is a flowchart which shows basic processing procedures for the information readout process according to the present invention. The procedures are those for executing the information readout process for reading out digital data stored in the information recording medium M according to the procedures shown in Fig. 11. Step S21 is a procedure executed by the image photographing device 400 shown in Fig. 6, and Steps S22 to S27 are procedures executed by the readout processing computer 500 shown in Fig. 6.

First, in Step S21, there is executed an image photographing step in which the image photographing device 400 is used to magnify and photograph a domain to be photographed which is a part of a recording surface of the information recording medium M to capture the thus obtained photographed image as image data. Then, in Step S22, there is executed a photographed-image housing step in which the readout processing computer 500 houses the photographed-image. In Step S23, there is executed a bit-recording-domain recognizing step in which the readout processing computer 500 detects alignment marks from the photographed-image housed in the photographed-image housing step to recognize individual bit recording domains Ab.

Where a bit recording domain Ab has been successfully recognized in the bit-recording-domain recognizing step, procedures move to Step S25 by way of Step S24. Where there is a failure in recognizing a bit recording domain Ab, that is, where a positional deviation occurs at the time of taking a photograph and a complete bit recording domain Ab is not included in a photographed-image, the procedures return to Step S21 and the image photographing step is executed again. At this time, the image photographing device performs processing by which a domain to be photographed is changed so that a correct photographed image can be obtained.

In Step S25, there is executed a unit-bit-matrix recognizing step in which the readout processing computer 500 recognizes a unit-bit-matrix B(Ui) on the basis of a pattern inside the bit recording domain Ab. The processing is executed repeatedly by way of Step S26 until all necessary domains are completely recognized. That is, the change of domains to be photographed is controlled by the image photographing device so that photographed-images of all the bit-recording-domains Ab to be read out are obtained by the readout processing computer 500, thereby repeating a series of processing from Step S21 of the image photographing step.

Lastly, in Step S27, there is executed a data restoration step in which the readout processing computer 500 creates unit data Ui from individual unit-bit-matrixes B(Ui) recognized in the unit-bit-matrix recognizing step of Step S25 to synthesize individual unit data Ui, thereby restoring digital data D to be stored.

### <<<Section 6. Problems on method for interpreting data bits>>>

The plate-like information recording medium described above has front, back, top, bottom, left and right sides. And, upon reading out recorded information, it is necessary to correctly recognize the front, back, top, bottom, left and right sides of the medium and perform readout processing. Thus, when information is recorded in a plate-like medium in general, there has been proposed a method for adding an identification mark for indicating a direction to perform correct readout processing. For example, in Patent Document 3 described previously, there has been disclosed the technology in which the identification mark composed of a recess and protrusion structure is provided at a lower right corner on a surface of a card-like information recording medium to recognize a direction of the medium by a sense of touch, thus making it possible to insert the plate-like information recording medium into an information reader in a correct direction.

In the information storage device according to the present invention, information is recorded on the basis of a predetermined graphic pattern. Even where the same graphic pattern is used to perform beam exposure and pattern processing, a physical structure actually formed on a substrate differs depending on the adopted method for beam exposure and pattern processing. For example, where a bit "0" and a bit "1" are recorded separately as a recess and protrusion structure formed on a substrate, the protrusion is given as a bit "1" or the recess is given as a bit "1," depending on the adopted method for beam exposure and pattern processing.

Specifically, recording results on the medium will be different depending on whether a domain indicating a bit "0" is exposed or a domain indicating a bit "1" is exposed at the time of beam exposure. Similarly, recording results on the medium will also be different depending on the conditions of pattern processing in which a positive-type resist is used or a negative-type resist is used as the resist layer formed on a substrate. It is, therefore, impossible to recognize whether information is to be read out by interpreting the protrusion as a bit "1" or interpreting the recess as a bit "1" only by referring to the information on data bits which has been recorded in the information recording medium concerned.

Here, by referring to the drawings, a detailed description will be given of problems relating to a method for interpreting data bits occurring when information is recorded on a medium as a minute physically structured pattern by the method described above.

In Fig. 2, there is shown an example in which the unit data U1 which constitutes 25 bits at the leading end of the digital data D to be recorded is recorded as a unit bit graphic pattern P(U1) arranged inside the bit recording domain Ab. In the case of the example shown in the drawing, the information on 25 bits which constitutes the unit bit matrix B(U1) is expressed by the presence or absence of a bit figure at each position which constitutes a matrix composed of five rows and five columns. In particular, in the case of this example, where small bit figures F painted in black are arranged, a bit "1" is indicated, and where they are not arranged, a bit "0" is indicated.

As shown in Fig. 1, when the storage processing computer 100 creates the drawing data E for drawing the graphic pattern, the beam exposure device 200 and the patterning device 300 perform respectively the exposure processing and the pattern processing to prepare the information recording medium M in which the digital data D has been recorded. In Fig. 4A to Fig. 4E, there is shown an example of the exposure processing and pattern processing for forming a pattern corresponding to the second row in a matrix composed of five rows and five columns which constitutes the unit bit graphic pattern P(U1) shown in Fig. 2.

The information recording medium M1 shown in Fig. 4E is a medium which has been obtained by the above-described processing. Where, as for each arrangement position of bit information, the recess C is interpreted as a bit "1" and the protrusion V is interpreted as a bit "0," it is possible to read 5-bit data of "10110" in the case of the example shown in the drawing. The data concerned corresponds to the information at the second row of the unit bit matrix B(U1) shown in Fig. 2, and the recorded data can be correctly read out. On the contrary, where, at the time of reading out the information recording medium M1, the recess C is interpreted as a bit "0" and the protrusion V is interpreted as a bit "1," 5-bit data which is "01001" is read out in the case of the example shown in the drawing, and the data cannot be correctly read out.

As described above, if a method for interpreting individual data bits (in this example, which of the recess and the protrusion is interpreted as a bit "1" or a bit "0") differs at the time of reading out data, a bit value will be reversed. And, it is therefore impossible to read out correct bit information which has been intended at the time of recording. Of course, the unit bit graphic pattern P(U1) shown in Fig. 2 is in reality recorded as an extremely minute recess and protrusion structure in the information recording medium M. Therefore, on visual observation of the actual information recording medium M, it is impossible to macroscopically understand the pattern thereof (a high-powered microscope is needed for observing an actual pattern).

With the above situation taken into account, it is preferable that certain information which shows a method for interpreting data bits is also recorded in the information recording medium M in itself at the time of recording data. For example, in the above-described example, information composed of a character string of "the recess is a bit "1"" is written onto the information recording medium M in a macroscopically-visible manner at the time of recording data. Thereby, it is possible to interpret individual data bits by a correct method on the basis of this information at the time of readout. Of course, if a method for interpretation is shown, with attention always given to a bit "1," the text "recess" may be simply written in a macroscopically-visible manner.

Specifically, an operator who performs information readout processing by using the information readout device shown in Fig. 6, first, observes macroscopically the information recording medium M to be read out to obtain information that "the recess is a bit "1"" and then may set the unit-bit-matrix recognizing portion 530 so as to interpret the recess as a bit "1." In this case, the unit-bit-matrix recognizing portion 530 recognizes the recess or the protrusion at individual grid points from a photographed image and interprets that a bit "1" is recorded for the recess and a bit "0" is recorded for the protrusion, thus making it possible to recognize the data bits. Of course, where information that "the protrusion is a bit "1"" is recorded in the information recording medium M, the unit-bit-matrix recognizing portion 530 is set reversely so as to interpret that a bit "1" is recorded for the protrusion and a bit "0" is recorded for the recess.

However, where the method for interpreting data bits is recorded in a medium in itself, such a method is not practically preferable that information of "the recess being a bit "1"" is recorded simply in the medium as described in the above example. Reasons thereof will be described hereinafter.

A first reason is that where a physical method is employed to reproduce a medium, it is impossible to give a correct response. At present, information recording media such as CDs and DVDs that record music and images are distributed in the market as commercial mass-produced products. These mass-produced media are ordinarily produced by way of a physical reproduction process on the basis of a master copy. In reproductions made by way of the above-described reproduction process, a recess and protrusion structure of the master copy is reversed.

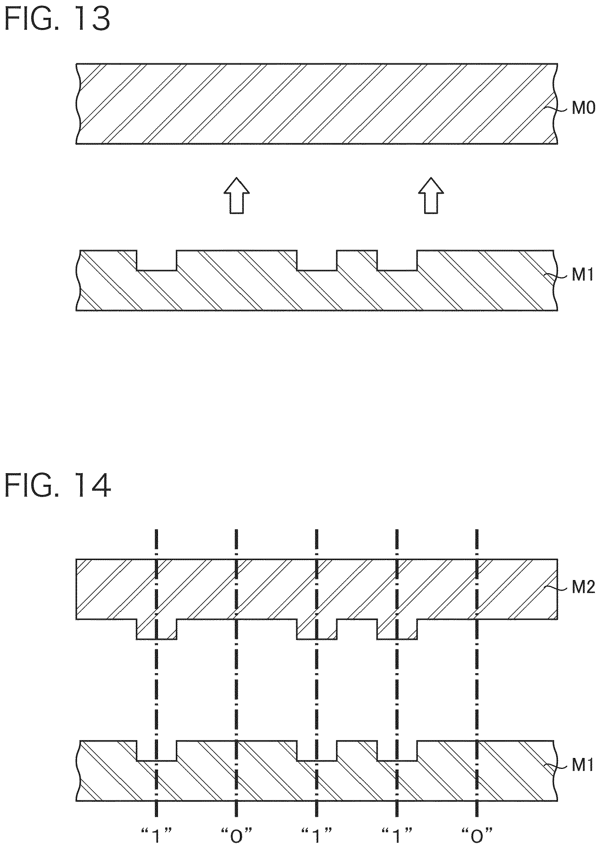

Fig. 13 is a side cross-sectional view which shows a general method for reproducing an information recording medium in which a recess and protrusion structure is formed on a surface thereof. There is shown a process in which an information recording medium M1 acting as a master copy and a reproduction preparing medium M0 are provided to press the medium M1 onto the medium M0, thereby transferring a recess and protrusion structure formed on the surface of the medium M1 to the surface of the medium M0. Fig. 14 is a side cross-sectional view which shows a state that a reproduction has been prepared by the reproduction method shown in Fig. 13. That is, the reproduction preparing medium M0 shown in Fig. 13 is changed to a medium M2 (reproduction) shown in Fig. 14. The recess and protrusion structure formed on the upper face of the information recording medium M1 which is a master copy is transferred to a lower face of the thus reproduced information recording medium M2. Therefore, a recess and protrusion relationship is reversed.

Therefore, a correct method for interpreting data bits on the information recording medium M2 shown in Fig. 14 is such that a method for interpreting data bits on the information recording medium M1 which is the master copy is reversed. Specifically, as shown in the drawing, in the case of the medium M1, the recess may be interpreted as a bit "1" and the protrusion may be interpreted as a bit "0." However, in the case of the medium M2, it is necessary that the protrusion is interpreted as a bit "1" and the recess is interpreted as a bit "0." As described above, with consideration given to the reversal of the method for interpreting data bits by the reproduction process, it is not preferable that information which shows a fundamental interpretation method that "the protrusion is a bit "1"" is also recorded at the time of recording.

As described above, where what-is-called, "reversal of a pattern (inside out)" takes place, as a technique for gaining the attention of an operator to the reversal, there is a method for recording an identification mark with an asymmetric shape, and this method has been conventionally known. For example, where a transparent manuscript sheet is used to create a printed matter by an optical process and if the manuscript sheet is set inside out, an inside-out image is formed on the printed matter. In order to prevent the above-described error, an identification mark having an asymmetric shape may be recorded on the manuscript sheet. For example, a capital letter "F" is recorded as an identification mark, by which when the manuscript sheet is set inside out, the letter "F" is a reversed letter (mirror letter). And, an operator is able to easily recognize that the sheet has been set inside out.

Thus, in the above-described basic embodiment as well, a method for recording an identification mark having an asymmetric shape is adopted to gain the attention of a readout operator that a recess and a protrusion are reversed, where a recess and protrusion structure of the master copy is reversed by a reproduction process.

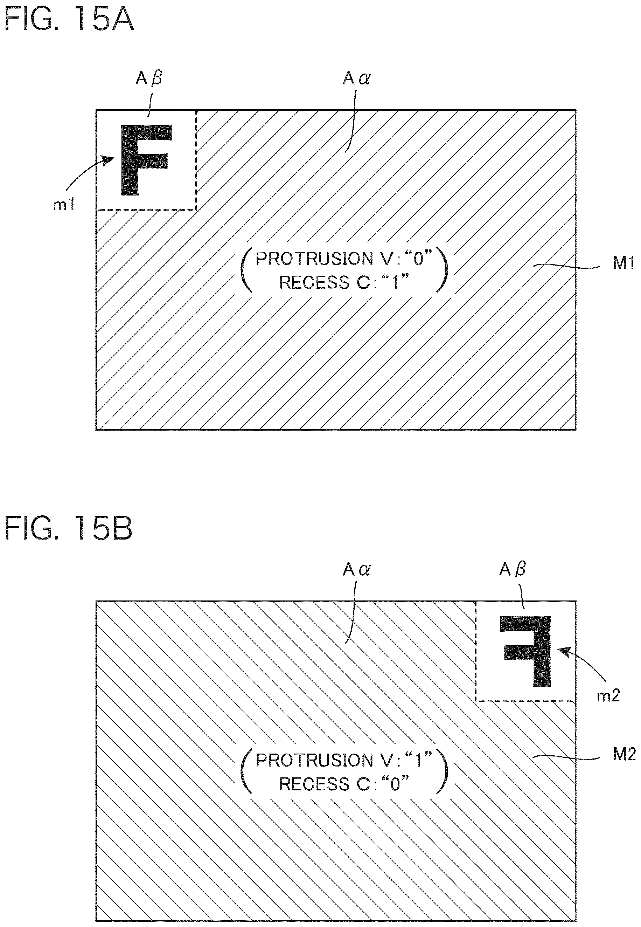

Fig. 15A and Fig. 15B are plan views which show respectively a relationship with the master copy M1 and a relationship with the reproduction M2 thereof when there is adopted a method in which a capital letter "F" is recorded as an identification mark (hatching is given for indicating a domain). Fig. 15A is a plan view (a drawing which shows a surface of the recess and protrusion structure) of the information recording medium M1 which is a master copy, showing a major recording domain Aα to which a diagonal hatching is given and a minor recording domain Aβ is arranged at an upper left corner.

Here, the major recording domain Aα is a domain for recording information on individual data bits which constitute digital data to be recorded, and, specifically, it is a domain in which the unit recording domains Au shown in Fig. 2 are arranged in a great number and recorded. In the case of the information recording medium M1 which is a master copy, the protrusion V indicates a bit "0" and the recess C indicates a bit "1." On the other hand, the minor recording domain Aβ is a domain for recording an identification mark m1 having an asymmetric shape and in the example shown in the drawing, a capital letter "F" which can be observed macroscopically is recorded as the identification mark m1.

On the other hand, Fig. 15B is a plan view (a drawing showing a surface of the recess and protrusion structure) of the information recording medium M2 which is reproduced by subjecting the information recording medium M1 shown in Fig. 15A as a master copy to the pressing process shown in Fig. 13. In other words, Fig. 15A is a top view of the medium M1 shown in Fig. 14, whereas Fig. 15B is a bottom view of the medium M2 shown in Fig. 14. Resultantly, the minor recording domain Aβ arranged at an upper left corner in the plan view of Fig. 15A is arranged at an upper right corner in the plan view of Fig. 15B. The identification mark m1 which indicates the letter "F" in Fig. 15A is changed to an identification mark m2 which indicates a reversed letter "F" in Fig. 15B.

The medium M2 (a reproduction) shown in Fig. 15B is such that the recess and protrusion structure is reversed with respect to the medium M1 (a master copy) shown in Fig. 15A, and the protrusion V indicates a bit "1" and the recess C indicates a bit "0." Therefore, digital data recorded at the major recording domain Aα is read out in such a manner that where the digital data is read out from the information recording medium M1 which is a master copy, it is necessary that the protrusion V is interpreted as a bit "0" and the recess C is interpreted as a bit "1," and where it is read out from the information recording medium M2 which is a reproduction, it is necessary that the protrusion V is interpreted as a bit "1" and the recess C is interpreted as a bit "0." Of course, where the medium M2 shown in Fig. 15B is used to make another reproduction, it is necessary that the thus obtained reproduction is interpreted in the same way as performed in the master copy M1.

As described above, where the reproduction is repeated successively, an interpretation to be adopted for data bits of individual edits can be recognized by referring to the identification mark m1 or m2 recorded at the minor recording domain Aβ. That is, when the identification mark m1 which indicates a regular letter "F" is recorded, the recess C may be interpreted as a bit "1" and when the identification mark m2 which indicates a reversed letter "F" is recorded, the recess C may be interpreted as a bit "0." Of course, as an identification mark, there may be used such a character string that "the recess is a bit "1."" In this case, when the character string that "the recess is a bit "1"" is described by correct letters, the recess may be interpreted as a bit "1" literally. When the character string is given by reversed letters, the recess may be interpreted as a bit "0" instead.

As described above, even where the physical pressing process is used to reproduce a medium and a recess and protrusion structure of the master copy is assumed to be reversed, such a method is adopted that an identification mark having an asymmetric shape is recorded at the minor recording domain Aβ, thus making it possible to notify a readout operator of a correct method for interpreting data bits.

However, as described previously in the basic embodiment, where beam exposure and pattern processing are performed on the substrate to record information as a minute physically structured pattern, there may be found such a case that a method for recording an identification mark having an asymmetric shape is not necessarily able to notify a correct method for interpreting data bits. This is derived from a second reason which will be described below.

The second reason why the method for simply recording a method for interpreting data bits as "the recess is a bit "1"" in a medium as it is, is not preferable is that even where the same graphic pattern is used to perform beam exposure and pattern processing, a physical structure actually formed on a substrate will be different depending on the adopted method for beam exposure and pattern processing.

For example, in the case of the process of the beam exposure and pattern processing shown in Fig. 4A to Fig. 4E, an interior of a small black square (a bit figure F indicating a bit "1") each constituting the unit bit graphic pattern P(U1) shown in Fig. 2 is subjected to exposure and also a positive-type resist is used as the resist layer 20. As a result, in the information recording medium M1 shown in Fig. 4E, a bit "1" is expressed as the recess C and a bit "0" is expressed as the protrusion V. However, where the exterior of the small black square is subjected to exposure or a negative-type resist is used as the resist layer 20, data bits on the recess C and the protrusion V on an information recording medium to be created will be interpreted differently.

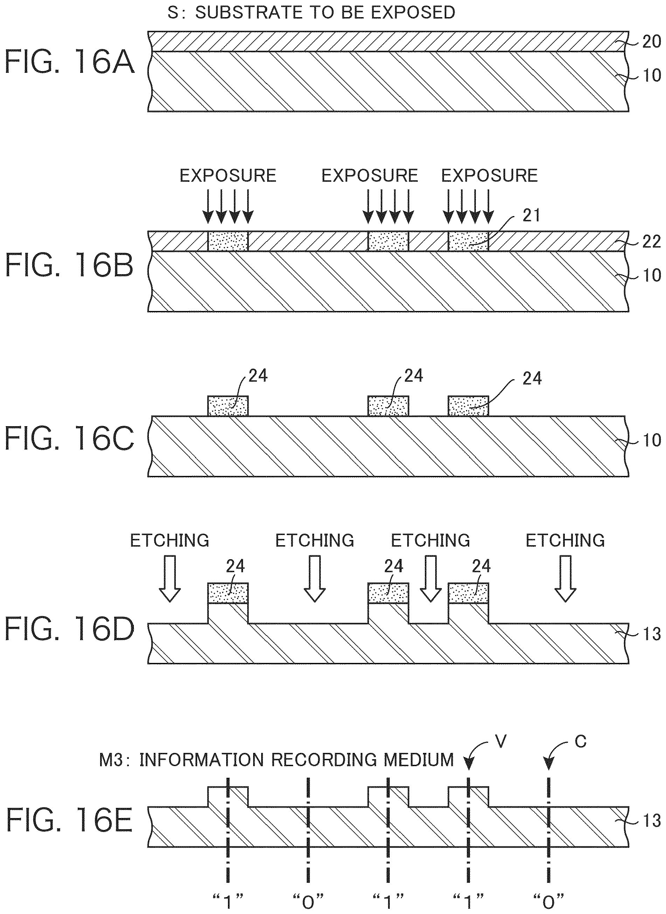

Fig. 16A to Fig. 16E are side cross-sectional views, each of which shows another specific process different from the exposure step and the patterning step shown in Fig. 4A to Fig. 4E (only a cross section is shown and a structure at the back is not illustrated). That is, in the process shown in Fig. 16A to Fig. 16E, there is no change in that the interior of the bit figure F which indicates a bit "1" is subjected to exposure, however, as the resist layer 20, a negative-type resist is used. Therefore, there is no change in that an exposed part 21 and a non-exposed part 22 are provided by the exposure process shown in Fig. 16B. However, the non-exposed part 22 is dissolved into a developing fluid performed by development processing and, as shown in Fig. 16C, the exposed part 21 will remain as a remaining part 24.

Then, etching is performed, by which, as shown in Fig. 16D, of the upper face of the underlying layer 10, a part which is covered with the remaining part 24 acting as a mask will not undergo corrosion but a part which is exposed will undergo corrosion to form a recess. In this way, the underlying layer 10 is processed into an underlying layer 13 having a recess and protrusion structure on an upper face thereof. The thus obtained underlying layer 13 is removed from the remaining part 24 to give an information recording medium M3, as shown in Fig. 16E.

Here, the information recording medium M1 shown in Fig. 4E is compared with the information recording medium M3 shown in Fig. 16E to find that, despite the fact that both of them are media which have recorded exactly the same data bit of "10110," in the former, the recess indicates a bit "1" and the protrusion indicates a bit "0," whereas in the latter, the protrusion indicates a bit "1" and the recess indicates a bit "0," and a method for interpreting data bits has been completely reversed between the former and the latter.

As described above, a description has been given of an example in which the method for interpreting data bits on a recess and protrusion structure formed on a medium is reversed depending on whether a positive-type resist or a negative-type resist is used as the resist layer 20 upon performance of pattern processing. The method for interpreting data bits on a recess and protrusion structure formed on a medium is reversed also depending on whether the interior of a bit figure F is exposed or the exterior thereof is exposed upon performance of beam exposure processing.

This means that even where in the information storage device shown in Fig. 1, exactly the same drawing data E is used to prepare the information recording medium M, there is found a difference in method for interpreting data bits expressed by a recess and protrusion structure formed on the information recording medium M which is finally obtained, depending on conditions of beam exposure processing by the beam exposure device 200 and conditions of pattern processing by the patterning device 300.

Therefore, as shown in Fig. 15A, even where drawing data E is provided for recording the identification mark m1 with an asymmetric shape of the letter "F" inside the minor recording domain Aβ and the information recording medium M is prepared on the basis of the drawing data E, it is impossible to recognize a correct method for interpreting data bits by using the identification mark at the time of readout. That is, as long as the same drawing data E is used, the identification mark m1 inside the minor recording domain Aβ is given as a correct letter "F" where the medium is prepared by the process shown in Fig. 4A to Fig. 4E (by using a positive-type resist) and also where it is prepared by the process shown in Fig. 16A to Fig. 16E (by using a negative-type resist).

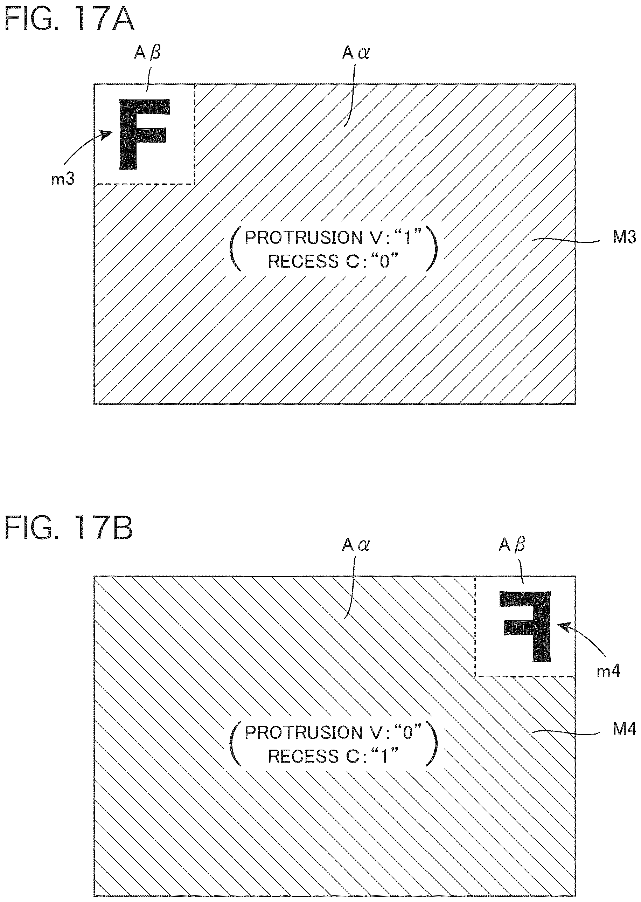

That is, where a medium is prepared by the process shown in Fig. 4A to Fig. 4E, the medium M1 shown in Fig. 15A is obtained, and where a medium is prepared by the process shown in Fig. 16A to Fig. 16E, the medium M3 shown in the plan view of Fig. 17A is obtained. In the former, the identification mark m1 inside the minor recording domain Aβ is a correct letter "F" and, in the latter, the identification mark m3 inside the minor recording domain Aβ is also a correct letter "F" with no change found in the identification mark. However, in the case of the former, the protrusion V indicates a bit "0" and the recess C indicates a bit "1," whereas in the latter, the protrusion V indicates a bit "1" and the recess C indicates a bit "0."

On the other hand, Fig. 17B is a plan view of a medium M4 which is reproduced by a pressing process in which the medium M3 shown in Fig. 17A is used as a master copy. In this case, although an identification mark m4 inside the minor recording domain Aβ is a reversed letter "F," the protrusion V indicates a bit "0" and the recess C indicates a bit "1." Consequently, the medium M1 shown in Fig. 15A has a reverse relationship with the medium M4 shown in Fig. 17B in that the proposed identification marks are a correct letter and a reversed letter. They are, however, common in that in a method for interpreting data bits, the protrusion V is to be interpreted as a bit "0" and the recess C is to be interpreted as a bit "1." Similarly, the medium M2 shown in Fig. 15B has a reverse relationship with the medium M3 shown in Fig. 17A in that the proposed identification marks are a reversed letter and a correct letter. However, they are common in that in a method for interpreting data bits, the protrusion V is to be interpreted as a bit "1" and the recess C is to be interpreted as a bit "0."

As described above, where beam exposure and pattern processing are performed on a substrate to record information as a minute physically structured pattern, it is impossible to transmit a correct method for interpreting data bits by the method for recording an identification mark with an asymmetric shape.

Thus, in the present application, in order to deal with the above-described problem, there is proposed a new technique for recording information which shows a method for interpreting data bits. A detailed description will be given of the new technique in Section 7 and thereafter. Here, for the sake of convenience of description, a description will be given of an example in which the new technique is applied to the basic embodiment described in Section 1 to Section 5. However, the technique described in Section 7 and thereafter shall not be limited to application to the information storage process according to the basic embodiment described in Section 1 to Section 5. This technology can be widely applied to an information storage process which records information as a minute physically structured pattern by performing beam exposure and pattern processing to a substrate.

### <<<Section 7. Information storage device with functions to record identification mark>>>

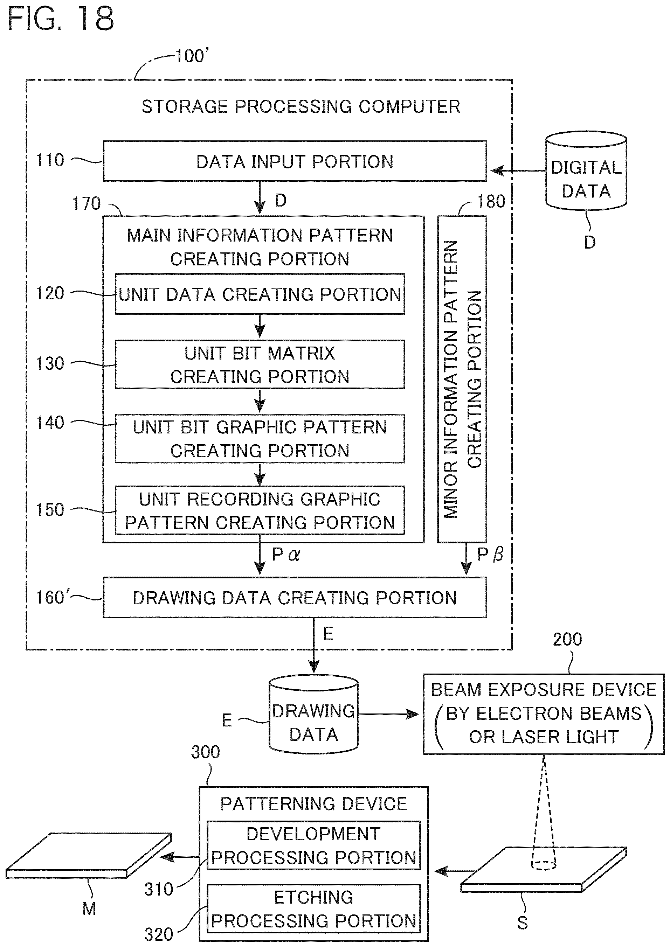

The above-described new technique for recording information which shows a method for interpreting data bits can be executed by an information storage device with functions to record an identification mark. Fig. 18 is a block diagram which shows a basic constitution of the information storage device with the above-described functions. The information storage device shown in Fig. 18 is, as with the device shown in Fig. 1, a device which is provided with a storage processing computer 100', a beam exposure device 200 and a patterning device 300, having functions to write digital data D to be stored onto the information recording medium M and store the data. Here, the beam exposure device 200 and the patterning device 300 are exactly the same constituents as the devices indicated with the same symbols in Fig. 1.

On the other hand, the storage processing computer 100' of the information storage device shown in Fig. 18 is provided with a data input portion 110, a main information pattern creating portion 170, a minor information pattern creating portion 180 and a drawing data creating portion 160'. Here, the data input portion 110 is exactly the same constituent as the data input portion 110 shown in Fig. 1, playing a role in inputting the digital data D to be stored.

The main information pattern creating portion 170 shown in Fig. 18 creates a main information pattern Pα indicating information of individual data bits which constitute the input digital data D, and the minor information pattern creating portion 180 creates a minor information pattern Pβ indicating a method for interpreting data bits indicated by the main information pattern Pα. Then, the drawing data creating portion 160' creates drawing data E for drawing the main information pattern Pα and the minor information pattern Pβ.

As shown in the drawing, the main information pattern creating portion 170 is constituted with a unit data creating portion 120, a unit bit matrix creating portion 130, a unit bit graphic pattern creating portion 140 and a unit recording graphic pattern creating portion 150. And, these individual constituents are the same as individual constituents indicated with the same symbols in Fig. 1. Therefore, the main information pattern Pα created by the main information pattern creating portion 170 is an assembly of unit recording graphic patterns R(U1), for example, shown in Fig. 2.

On the other hand, the minor information pattern Pβ created by the minor information pattern creating portion 180 is a pattern showing a method for interpreting data bits indicated by the main information pattern Pα and performs similar functions as those of the identification marks m1 and m3 shown in Fig. 15A and Fig. 17A. However, as will be described later, the minor information pattern Pβ used in the present invention is not a single identification mark but constituted with a pair of identification marks.

The drawing-data creating portion 160' defines the major recording domain Aα and the minor recording domain Aβ on a surface to be drawn, arranges the main information pattern Pα created by the main information pattern creating portion 170 at a major recording domain Aα and arranges the minor information pattern Pβ created by the minor information pattern creating portion 180 at a minor recording domain Aβ to create a synthesis pattern, thereby creating drawing data E for drawing the synthesis pattern.

On the basis of the thus created drawing data E, the beam exposure device 200 performs beam exposure by using electron beams or laser light on a substrate S which is an information recording medium, and the patterning device 300 which is provided with a development processing portion 310 and an etching processing portion 320 performs pattern processing on the exposed substrate S, thereby creating an information recording medium M in which a physically structured pattern is formed in accordance with the drawing data E. This is the same with the information storage device shown in Fig. 1.

That is, in the substrate having an underlying layer and a resist layer which covers the underlying layer, the beam exposure device 200 performs beam exposure on a surface of the resist layer. The development processing portion 310 performs processing by which the substrate is immersed into a developing fluid having properties to dissolve an exposed part or a non-exposed part of the resist layer, allowing a part of the resist layer to remain as a remaining part. The etching processing portion 320 etches the underlying layer by using the remaining part of the resist layer as a mask. At this time, the beam exposure device 200 may expose the interior of a bit figure F or may expose the exterior thereof. Further, a positive-type resist or a negative-type resist may be used as the resist layer.

Finally, the information storage device according to the basic embodiment shown in Fig. 1 differs from the information storage device with functions to record the identification mark shown in Fig. 18 in that the former storage processing computer 100 creates the drawing data E for drawing the main information pattern Pα, whereas the latter storage processing computer 100' creates the drawing data E for drawing a synthesis pattern in which the minor information pattern Pβ is added to the main information pattern Pα.

Of course, the minor information pattern creating portion 180 newly added to the latter is also a constituent built by actually installing a program into a computer. The data input portion 110, the main information pattern creating portion 170, the minor information pattern creating portion 180 and the drawing-data creating portion 160' which are constituents of the storage processing computer 100' shown in Fig. 18 can be constituted by installing dedicated application programs into a general-purpose computer.

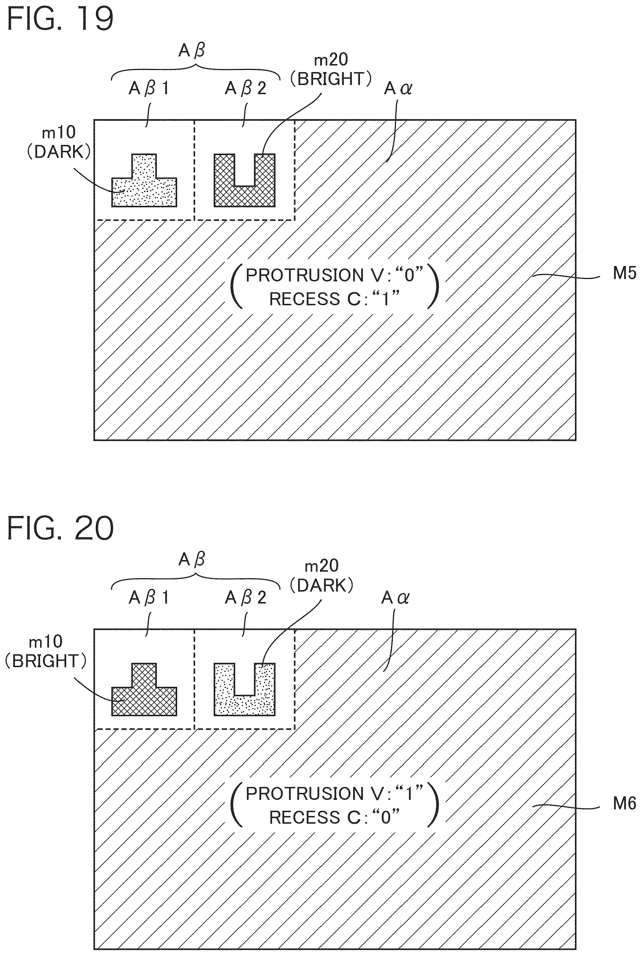

Then, a description will be given of the minor information pattern Pβ which is created by the minor information pattern creating portion 180. Here, first, the patterning device 300 of the information storage device shown in Fig. 18 is used to execute the process shown in Fig. 4A to Fig. 4E (a process in which a positive-type resist is used as the resist layer 20), thereby preparing an information recording medium M5, which is shown in the plan view of Fig. 19. The process shown in Fig. 16A to Fig. 16E (a process in which a negative-type resist is used as the resist layer 20) is executed to prepare an information recording medium M6, which is shown in the plan view of Fig. 20 (in each of the drawings, hatching is given for indicating a domain).

The medium M5 shown in Fig. 19 and the medium M6 shown in Fig. 20 are each provided with a major recording domain Aα indicated by giving diagonal hatching to the drawing and a minor recording domain Aβ arranged at an upper left corner of the drawing on the upper face thereof. Here, the major recording domain Aα is a domain in which there is recorded a main information pattern Pα which shows information of individual data bits which constitute the digital data D to be stored, and it is a domain in which, for example, an assembly (i = 1, 2, 3, ...) of the unit recording graphic pattern R(Ui) shown in Fig. 2 is recorded. In contrast, the minor recording domain Aβ is a domain in which there is recorded a minor information pattern Pβ which shows a method for interpreting individual data bits recorded as the main information pattern Pα. The example shown in the drawing is constituted with a first minor recording domain Aβ1 and a second minor recording domain Aβ2.

As described above, the medium M5 shown in Fig. 19 is prepared by executing the process shown in Fig. 4A to Fig. 4E. And, the main information pattern Pα recorded at the major recording domain Aα assumes a recess and protrusion structure in which a protrusion V expresses a bit "0" and a recess C expresses a bit "1." In contrast, the medium M6 shown in Fig. 20 is prepared by executing the process shown in Fig. 16A to Fig. 16E. And, the main information pattern Pα recorded at the major recording domain Aα assumes a recess and protrusion structure in which a protrusion V expresses a bit "1" and a recess C expresses a bit "0."

As described above, the medium M5 shown in Fig. 19 and the medium M6 shown in Fig. 20 are both media which are prepared on the basis of the same main information pattern Pα. However, in the pattern processing performed by the patterning device 300, a positive-type resist is used in one of them and a negative-type resist is used in the other of them, thus resulting in a difference in method for interpreting data bits. The minor information pattern Pβ recorded at the minor recording domain Aβ always plays a role in showing a correct method for interpretation even on occurrence of a difference in the method for interpretation.

In the case of the example shown in the drawing, the minor information pattern Pβ recorded at the minor recording domain Aβ is constituted with a first identification mark m10 recorded at the first minor recording domain Aβ1 and a second identification mark m20 recorded at the second minor recording domain Aβ2. Specifically, the first identification mark m10 is constituted with a closed domain which indicates a symbol "protrusion," and the second identification mark m20 is constituted with a closed domain which indicates a symbol "recess," functioning as a mark which shows a correct method for interpreting data bits in view of "which identification mark looks brighter."

Here, for the sake of convenience, mesh hatching and dot hatching are given inside the closed domains which constitute the two identification marks m10 and m20 shown in each of the drawings, and the domain to which the mesh hatching has been given is to be observed brighter than the domain to which the dot hatching has been given. Therefore, in the medium M5 shown in Fig. 19, the second identification mark m20 indicating the symbol "recess" looks brighter than the first identification mark m10 indicating the symbol "protrusion." In the medium M6 shown in Fig. 20, the first identification mark m10 indicating the symbol "protrusion" looks brighter than the second identification mark m20 indicating the symbol "recess" (a reason thereof will be described later). In the drawing, the text "dark" indicates that the mark is darkly observed, while the text "bright" indicates that it is brightly observed.

Moreover, the example given here shows a method in which where the symbol "recess" looks brighter, the recess C is interpreted as a bit "1," and where the symbol "protrusion" looks brighter, the protrusion V is interpreted as a bit "1." Therefore, since the symbol "recess" looks brighter for a readout operator who has the medium M5 shown in Fig. 19, the operator is able to recognize that there should be adopted a method in which the recess C is interpreted as a bit "1" on reading out individual data bits recorded at the major recording domain Aα. And, since the symbol "protrusion" looks brighter for the readout operator who has the medium M6 shown in Fig. 20, the operator is able to recognize that there should be adopted a method in which the protrusion V is interpreted as a bit "1" on reading out individual data bits recorded at the major recording domain Aα.

Further, where the previously described pressing process is used to prepare a reproduction, a recess and protrusion structure of the reproduction which has been prepared by using the medium M5 shown in Fig. 19 as a master copy is made identical with that of the medium M6 shown in Fig. 20. A recess and protrusion structure of the reproduction prepared by using the medium M6 shown in Fig. 20 as a master copy is made identical with that of the medium M5 shown in Fig. 19. Therefore, with regard to the information recording medium prepared by the information storage device according to the present invention and also the reproduction thereof, an operator is able to recognize a correct method for interpreting data bits by judging which of the symbol "protrusion" and the symbol "recess" looks brighter.

### <<<Section 8. Physical structure of a pair of identification marks>>>

Then, a description will be given of a physical structure of the first identification mark m10 and that of the second identification mark m20. The pair of identification marks m10, m20 recorded at the minor recording domain Aβ are required to play a role in presenting a correct method for interpreting data bits to a readout operator by the above-described method. Therefore, they each have a structure which is closely related to data bits recorded at the major recording domain Aα. First, consideration is given to characteristics of the data bits recorded at the major recording domain Aα.

As described previously, the main information pattern Pα created by the main information pattern creating portion 170 is recorded at the major recording domain Aα. The main information pattern Pα is, for example, given as an assembly (i = 1, 2, 3, ...) of the unit recording graphic pattern R(Ui) shown in Fig. 2. Here, consideration is given to an actual case of the unit recording graphic pattern R(Ui), finding that it is a pattern in which domains having two types of attributes are mixed.

Specifically, in the example shown in Fig. 2, the unit recording graphic pattern R(U1) is a pattern in which a "black domain" and a "white domain" are mixed inside the unit recording domain Au. Of course, in reality, the unit recording graphic pattern R(U1) is, as shown in Fig. 3, expressed by vector data indicating bit figures F and contours of alignment marks Q1 to Q4. And, in individual figures, the interior thereof is given as a "black domain," whereas the exterior thereof is given as a "white domain."

The main information pattern creating portion 170 shown in Fig. 18 creates a pattern in which domains having two types of attributes such as the "black domain" and the "white domain" are mixed, as the main information pattern Pα which is to be recorded at the major recording domain Aα. Then, the beam exposure device 200 gives beam exposure processing to one of the domains, of the domains having two types of attributes, and the patterning device 300 performs pattern processing to a substrate after exposure.

In Fig. 4A to Fig. 4E, there is shown an example in which beam exposure processing is performed on the "black domain" and pattern processing is performed, with a positive-type resist used as the resist layer 20. As a result, as shown in Fig. 4E, there is obtained the information recording medium M1 in which the protrusion V expresses a bit "0" and the recess C expresses a bit "1." In contrast, where beam exposure processing is performed on the "white domain" and pattern processing is performed, with a positive-type resist used as the resist layer 20, there is obtained the information recording medium in which the protrusion V expresses a bit "1" and the recess C expresses a bit "0" (the same as the information recording medium M3 shown in Fig. 16E).

Similarly, in Fig. 16A to Fig. 16E, there is shown an example in which beam exposure processing is performed on the "black domain" and pattern processing is performed, with a negative-type resist used as the resist layer 20. As a result, as shown in Fig. 16E, there is obtained the information recording medium M3 in which the protrusion V expresses a bit "1" and the recess C expresses a bit "0." In contrast, where beam exposure processing is performed on the "white domain" and pattern processing is performed, with a negative-type resist used as the resist layer 20, there is obtained an information recording medium in which the protrusion expresses a bit "0" and the recess C expresses a bit "1" (the same as the information recording medium M1 shown in Fig. 4E).

In general terms, if one of the above-described "black domain" and "white domain" is referred to as a "first attribute main domain" and the other is referred to as a "second attribute main domain," the main information pattern Pα is constituted with the first attribute main domain and the second attribute main domain. And, it is a pattern which expresses binary information of individual data bits depending on whether a predetermined point corresponding to each of the data bits (in the example shown in Fig. 3, each of the grid points L) is present inside the first attribute main domain or inside the second attribute main domain.

In the example described here, the main information pattern creating portion 170 converts one of individual bits "1" and individual bits "0" which constitute digital data D to be stored (in the example shown in Fig. 2, a bit "1") to individual bit figures F composed of a closed domain and creates a main information pattern Pα in which a domain inside the bit figure F is given as the first attribute main domain and a domain outside is given as the second attribute main domain. The main information pattern Pα is, as described previously, recorded inside the major recording domain Aα shown in Fig. 19 and Fig. 20.

On the other hand, the minor information pattern Pβ created by the minor information pattern creating portion 180 is, as shown in Fig. 19 and Fig. 20, provided with a pair of identification marks m10, m20 recorded inside the minor recording domain Aβ. Here, the identification mark m10 is a mark constituted with a symbol "protrusion" arranged inside a first minor recording domain Aβ1, or a mark which presents a method in which "the protrusion is interpreted as a bit "1"" (naturally, the recess is to be a bit "0"). Further, the identification mark m20 is a mark which is constituted with a symbol "recess " arranged inside a second minor recording domain Aβ2 or a mark which presents a method in which "the recess is interpreted as a bit "1"" (naturally, the protrusion is to be a bit "0").

As described previously, a readout operator understands the method for interpretation indicated by a mark which looks brighter, of the pair of identification marks m10, m20, as a correct method for interpreting data bits.

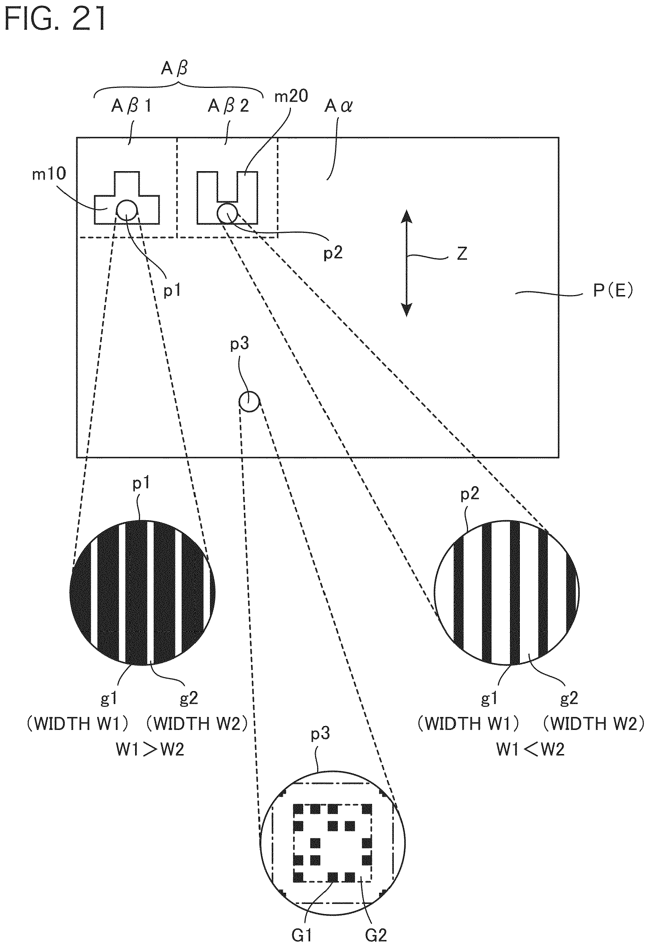

Then, a description will be given of an actual case of the pair of identification marks m10, m20, by referring to Fig. 21. Fig. 21 is a plan view which shows one example shown in the drawing pattern P(E) prepared by the information storage device shown in Fig. 18. Here, the drawing pattern P(E) is a synthesis pattern which is obtained by synthesizing the main information pattern Pα prepared by the main information pattern creating portion 170 with the minor information pattern Pβ created by the minor information pattern creating portion 180. The drawing data creating portion 160' performs processing by which the main information pattern Pα is synthesized with the minor information pattern Pβ to create a drawing pattern P(E) and, thereafter, drawing data E is created for drawing the drawing pattern P(E).

As described previously, the main information pattern Pα which is to be recorded at the major recording domain Aα is a pattern in which domains having two types of attributes which are the "black domain" and the "white domain" are mixed. The minor information pattern Pβ which is to be recorded at the minor recording domain Aβ is also a pattern in which domains having two types of attributes of the "black domain" and the "white domain" are mixed.

At a lower part of Fig. 21, there is shown an enlarged view of individual part domains of the drawing pattern P(E) shown at an upper part of Fig. 21 (images inside a circle). That is, an image inside a circle p1 at the lower part is an enlarged view of a part domain p1 inside the first identification mark m10 arranged at the first minor recording domain Aβ1 shown at the upper part, an image inside a circle p2 at the lower part is an enlarged view of a part domain p2 inside the second identification mark m20 arranged at the second minor recording domain Aβ2 shown at the upper part, and an image inside a circle p3 at the lower part is an enlarged view of a part domain p3 inside the major recording domain Aα shown at the upper part. For the sake of convenience of illustration, a dimensional ratio of each part in Fig. 21 is set by disregarding an actual dimensional ratio. For example, the part domains p1 to p3 indicated with small circles at the upper part are in reality small domains that cannot be observed macroscopically.

A magnified image of the part domain p3 given at the lower part of Fig. 21 shows a pattern which constitutes one unit recording domain Au. The image is constituted with "black domains" each indicating individual bit figures and interiors of alignment marks (a first attribute main domain G1) and a "white domain" indicating an external background part (a second attribute main domain G2) (a broken line and a single dotted and dashed line in the drawing are auxiliary lines showing arrangements and not lines which constitute an actual pattern). As described above, the main information pattern Pα which is to be recorded at the major recording domain Aα is a pattern in which domains having two types of attributes such as the "black domain" and the "white domain" are mixed.

On the other hand, as apparent from the magnified images of the part domains p1 and p2 shown at the lower part of Fig. 21, the minor information pattern Pβ which is to be recorded at the minor recording domain Aβ is also a pattern in which domains having two types of attributes such as a "black domain" (a first attribute minor domain g1) and a "white domain" (a second attribute minor domain g2) are mixed. However, the main information pattern Pα is a pattern which shows individual bit figures and alignment marks, whereas the minor information pattern Pβ is a pattern which shows the pair of identification marks m10, m20. Therefore, they are different from each other in a specific constitution.

That is, the patterns inside the closed domain which constitute the identification marks m10, m20 respectively constitute a striped pattern which is composed of "black domains" and "white domains," as shown in magnified images of the part domains p1 and p2. This is because where the pattern is recorded as a recess and protrusion structure on the medium M, there is formed a diffraction grating for visible light inside the identification marks m10, m20. Finally, there is formed a pattern in which a narrow band-like "black domain" and a narrow band-like "white domain" are alternately arranged at the closed domain which constitutes the identification marks m10, m20.

Individual grid lines which form the diffraction grating are set so as to be parallel with a common arrangement axis Z. The example shown in the drawing is such that the arrangement axis Z is set as an axis extending in a vertical direction in the drawing and, therefore, striped patterns extending in a vertical direction are formed inside the part domains p1, p2. Of course, the arrangement axis Z may be set in any given direction.

Here, it is important that comparison of the striped patterns inside the part domain p1 with the striped patterns inside the part domain p2 reveals that a dimensional relationship between a width W1 of a band which constitutes a "black domain" (the first attribute minor domain g1) and a width W2 of a band which constitutes a "white domain" (the second attribute minor domain g2) are reversed with each other. Specifically, in the example shown in the drawing, the relationship is W1 > W2 at the part domain p1 inside the identification mark m10, whereas it is W1 < W2 at the part domain p2 inside the identification mark m20. A difference in dimensional relationship between these widths will result in a difference in brightness and darkness on observation, the details of which will be described later.

In the drawing, there are depicted only patterns inside the encircled part domains p1, p2. Of course, a pattern similar to that at the part domain p1 is formed entirely at a closed domain inside the symbol "protrusion" which constitutes the identification mark m10, and a pattern similar to that at the part domain p2 is formed entirely at a closed domain inside the symbol "recess" which constitutes the identification mark m20. In other words, the interior of the symbol "protrusion" and the interior of the symbol "recess" are filled with striped patterns extending in a vertical direction in the drawing.

In the example shown here, a background part inside the first minor recording domain Aβ1 (a domain outside the symbol "protrusion") and a background part inside the second minor recording domain Aβ2 (a domain outside the symbol "recess") are constituted with a "white domain" (the second attribute minor domain g2). These background parts may be constituted with a "black domain" (the first attribute minor domain g1).

Alternatively, a striped pattern composed of a "black domain" and a "white domain" (a pattern functioning as a diffraction grating on a medium) may be formed also at the background parts. It is, however, necessary that the stripe pattern is constituted so that a readout operator is able to recognize a contour of the symbol "protrusion" and a contour of the symbol "recess" on observation. Where striped patterns (diffraction grating) are formed also at the background parts, such consideration is needed that they are made different in direction or pitch from the striped patterns (diffraction grating) inside an identification mark by which a contour of the identification mark can be recognized on observation. Therefore, it is in practice preferable that the background part is given as a "white domain" or a "black domain."

Eventually, there is arranged a pattern in which a "black domain" and a "white domain" are mixed at a part of the major recording domain Aα and also at a part of the minor recording domain Aβ. The drawing pattern P(E) is an assembly of many closed domains belonging to one of two types of the domains. In general terms, the main information pattern Pα arranged at the major recording domain Aα is a pattern in which the first attribute main domain G1 (for example, a "black domain") and the second attribute main domain G2 (for example, a "white domain") are mixed. The minor information pattern Pβ arranged at the minor recording domain Aβ is a pattern in which the first attribute minor domain g1 (for example, a "black domain") and the second attribute minor domain g2 (for example, a "white domain") are mixed.

Here, if the "first attribute" domain is given as a domain in which beam exposure is performed and the "second attribute" domain is given as a domain in which no beam exposure is performed, in the case of the above example, the "black domain" is subjected to exposure and the "white domain" is not subjected to exposure. In other words, in this case, the drawing data creating portion 160' creates drawing data E for performing exposure on the first attribute main domain G1 and the first attribute minor domain g1 and not giving exposure to the second attribute main domain G2 and the second attribute minor domain g2. Of course, instead, the "second attribute" domain may be given as a domain in which beam exposure is performed, and the "first attribute" domain may be given as a domain in which no beam exposure is performed.

As already described, depending on which of the attribute domains is subjected to beam exposure on beam exposure processing, or which of a positive-type and a negative-type resists is used on pattern processing, the "first attribute" domain is changed to a protrusion V or changed to a recess C on the medium M (in other words, the "second attribute" domain is changed to a recess C or changed to a protrusion V on the medium M).

However, here, it is important that where the first attribute main domain G1 is given as a protrusion V finally on the medium M, the first attribute minor domain g1 is also given as a protrusion V, and where the first attribute main domain G1 is given as a recess C, the first attribute minor domain g1 is also given as a recess C. Of course, where the second attribute main domain G2 is given as a protrusion V, the second attribute minor domain g2 is also given as a protrusion V, and where the second attribute main domain G2 is given as a recess C, the second attribute minor domain g2 is also given as a recess C. This is an unchangeable universal matter, regardless of which of the attribute domains is subjected to beam exposure on beam exposure processing or which of a positive-type and a negative-type resists is used on pattern processing.

Therefore, a medium M prepared on the basis of the drawing pattern P(E) shown in Fig. 21 and a reproduction prepared in a pressing process using the medium M as a master copy fall under either of the following cases, that is, "black domains" shown at the individual part domains p1 to p3 are all given as protrusions V and "white domains" are all given as recesses C (this medium is, for the sake of convenience, referred to as a "black protrusion medium"), or "black domains" are all given as recesses C and "white domains" are all given as protrusions V (this medium is, for the sake of convenience, referred to as a "black recess medium"). Specifically, the medium M1 shown in Fig. 4E is a "black recess medium," the medium M2 shown in Fig. 14 is a "black protrusion medium," and the medium M3 shown in Fig. 16E is a "black protrusion medium."

In the case of this example, the drawing pattern P(E) expresses a bit "1" by a bit figure F composed of a "black domain." Therefore, where readout processing is performed on the "black protrusion medium," there may be adopted a method that "the protrusion is interpreted as a bit "1."" Where readout processing is performed on the "black recess medium," there may be adopted a method that "the recess is interpreted as a bit "1."" Therefore, a readout operator may only recognize that a target medium is the "black protrusion medium" or the "black recess medium." As described previously, the operator is able to recognize it by referring to which of the pair of identification marks looks brighter.

For example, in the case of the example shown in Fig. 21, there may be adopted such a method that the first identification mark m10 composed of a symbol "protrusion" and the second identification mark m20 composed of a symbol "recess" are compared with each other to find that where the symbol "protrusion" looks brighter, the medium concerned is judged to be a "black protrusion medium" and "the protrusion is interpreted as a bit "1"" and where the symbol "recess" looks brighter, the medium is judged to be a "black recess medium" and "the recess is interpreted as a bit "1."" Hereinafter, a description will be given of a reason that the comparison between brightness and darkness makes it possible to judge that the medium is a "black protrusion medium" or a "black recess medium."

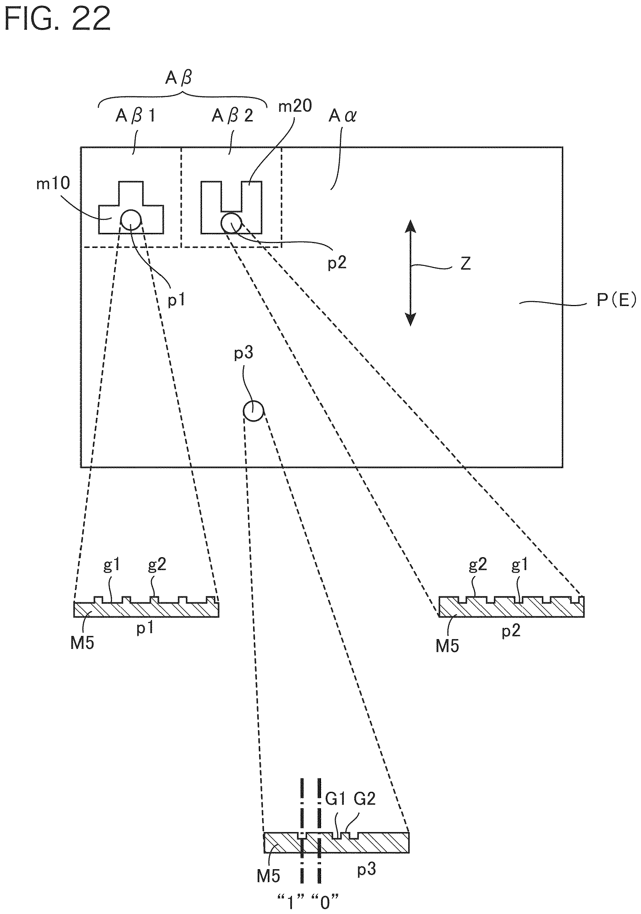

Fig. 22 is a drawing of a recess and protrusion structure of the medium M5 (the "black recess medium" shown in Fig. 19) prepared by executing the process shown in Fig. 4A to Fig. 4E on the basis of the drawing pattern P(E) shown in Fig. 21. The upper part is a plan view of the drawing pattern P(E) shown in Fig. 21, and the lower part is enlarged side cross-sectional views of individual parts of the medium M5 corresponding to individual part domains of p1 to p3.

Side cross-sectional views of the domains p1, p2 given at the lower part of Fig. 22 show a recess and protrusion structure of the medium M5 in which the "black domain" (the first attribute minor domain g1) in magnified images of the part domains p1, p2 shown at the lower part of Fig. 21 is given as a recess and the "white domain" (the second attribute minor domain g2) is given as a protrusion. A side cross-sectional view of the part domain p3 shown at the lower part of Fig. 22 shows a recess and protrusion structure of the medium M5 in which as for a position of the second row of a bit arrangement of five rows and five columns in the magnified image of the part domain p3 shown at the lower part of Fig. 21, the "black domain" (the first attribute main domain G1) is given as a recess and the "white domain " (the second attribute main domain G2) is given as a protrusion. When data bits recorded at the part domain p3 are read out, it is necessary that "the recess is interpreted as a bit "1"" and "the protrusion is interpreted as a bit "0.""

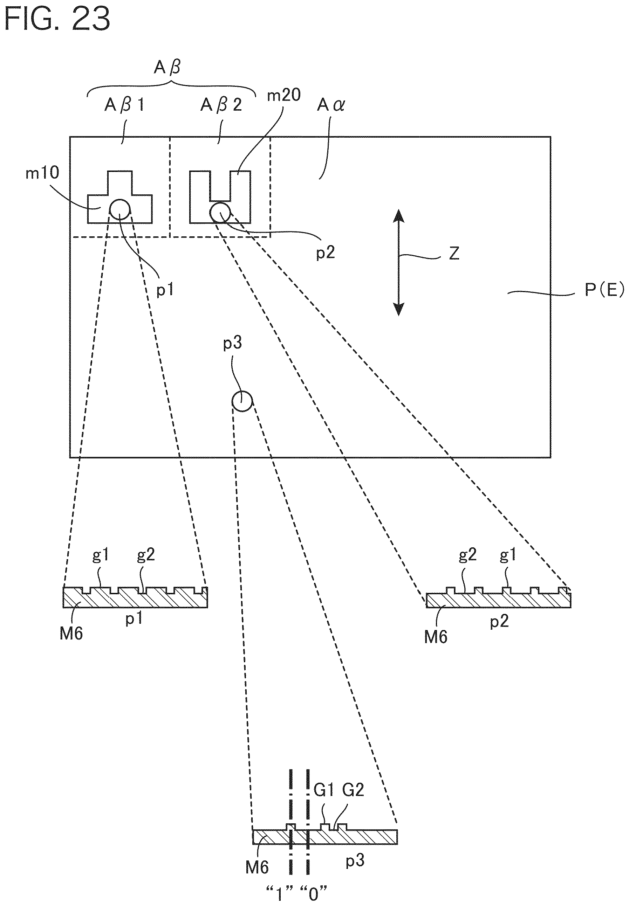

On the other hand, Fig. 23 is a drawing of a recess and protrusion structure of the medium M6 (the "black protrusion medium" shown in Fig. 20) prepared by executing the process shown in Fig. 16A to Fig. 16E on the basis of the drawing pattern P(E) shown in Fig. 21. At an upper part thereof, there is shown a plan view of the drawing pattern P(E) in Fig. 21, and at a lower part thereof, there are shown enlarged side cross-sectional views which show individual parts of the medium M6 corresponding to the individual part domains of p1 to p3.

In side cross-sectional views of the part domains p1, p2 at the lower part of Fig. 23, there is shown a recess and protrusion structure of the medium M6 in which the "black domain" (the first attribute minor domain g1) at magnified images of the part domains p1, p2 at the lower part of Fig. 21 is given as a protrusion and the "white domain" (the second attribute minor domain g2) is given as a recess. In a side cross-sectional view of the part domain p3 at the lower part of Fig. 23, there is shown a recess and protrusion structure of the medium M6 in which, as for a position of the second row at a bit arrangement of five rows and five columns at a magnified image of the part domain p3 shown at the lower part of Fig. 21, the "black domain" (the first attribute main domain G1) is given as a protrusion and the "white domain " (the second attribute main domain G2) is given as a recess. When the data bits recorded at the domain p3 are read out, it is necessary that "the protrusion is interpreted as a bit "1"" and "the recess is interpreted as a bit "0.""

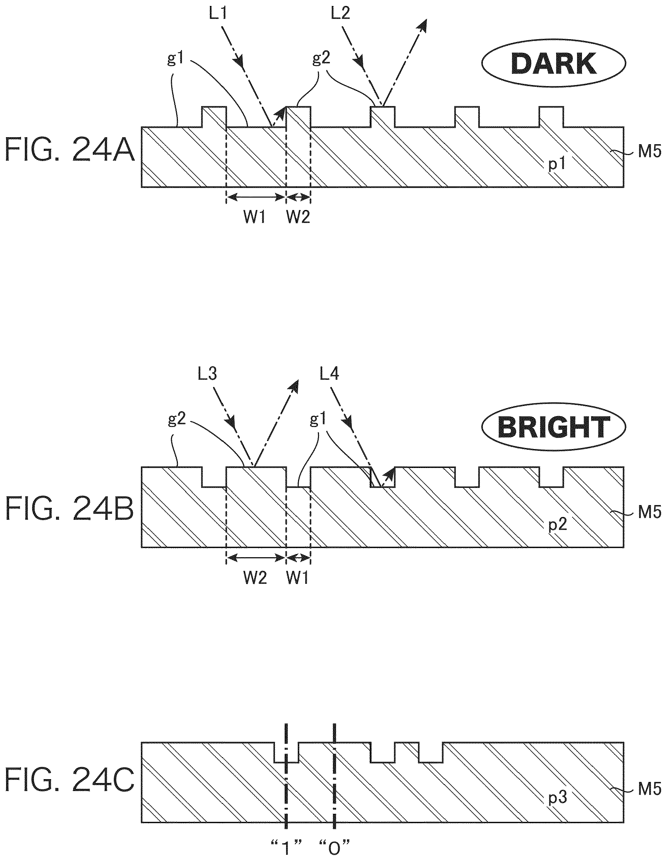

Then, consideration will be given of the black recess medium M shown in Fig. 19 and Fig. 22 when comparing and observing the pair of identification marks m10 and m20 as to which looks brighter. Fig. 24A to Fig. 24C are enlarged side cross-sectional views, each of which shows a recess and protrusion structure of each of the part domains p1 to p3 in the black recess medium M5 shown at the lower part of Fig. 22. Here, in a case where illumination light is irradiated on an upper face of the black recess medium M5 obliquely in a left upper direction, behavior after reflection of the illumination light will be followed.

First, as shown in Fig. 24A, consideration will be given of the part domain p1 (that is, an internal domain of the first identification mark m10). In the drawing, illumination light L1 is irradiated on the "black domain" which is a recess (the first attribute minor domain g1) and illumination light L2 is irradiated on the "white domain" which is a protrusion (the second attribute minor domain g2), and each behavior after reflection of the light is shown as an example by a single dotted and dashed line. That is, the illumination light L1 which has been made incident on a recess collides with a side face of the protrusion after reflection, whereas the illumination light L2 which has been made incident on a protrusion is directed upward as it is after reflection.

Of course, of the illumination light which has been made incident on a recess, some of the light is directed upward as it is after reflection. However, in general, it is less probable that illumination light made incident on a recess is observed from above. This is because, as shown in Fig. 4D and Fig. 16D, in pattern processing for forming a recess and protrusion structure on an upper face of the medium, etching is performed to form a recess and, therefore, a bottom face of the recess and a side face of the protrusion are made into a corrosion face, the surface of which is coarse.

That is, in Fig. 24A, a bottom face of the recess on which the illumination light L1 has been made incident or a side face of the protrusion to which reflected light is directed therefrom are all corrosion faces, the surface of which is coarse. And, light irradiated on the corrosion face will disappear due to scattering and is observed above at a lower probability. On the other hand, the upper face of the protrusion into which the illumination light L2 has been made incident is protected by the resist layer and not subjected to corrosion. Therefore, after reflection of the illumination light L2 on an upper face of the protrusion, it is observed above at a higher probability.

Here, at the part domain p1 shown in Fig. 24A, as shown in Fig. 21, the width W1 of a "black domain" (the first attribute minor domain g1) is greater than the width W2 of a "white domain" (the second attribute minor domain g2). Therefore, a percentage of the incident light L1 on recesses (black domains: higher in probability of being not observed above after reflection) is greater than a percentage of the incident light L2 into protrusions (white domains: higher in probability of being observed above after reflection), and the observation area is observed darkly as a whole when observation is made above.

On the other hand, at the part domain p2 shown in Fig. 24B, as shown in Fig. 21, the width W1 of the "black domain" (the first attribute minor domain g1) is smaller than the width W2 of the "white domain" (the second attribute minor domain g2). Therefore, a percentage of incident light L3 on protrusions (white domains: higher in probability of being observed above after reflection) is greater than a percentage of incident light L4 on recesses (black domains: higher in probability of being not observed above after reflection), and the observation area is observed brightly as a whole when observation is made above.

Consequently, when the black recess medium M5 shown in Fig. 19 is observed from above, due to the reasons described by referring to Fig. 24A and Fig. 24B, the second identification mark m20 (the part domain p2) which indicates the symbol "recess" is observed more brightly than the first identification mark m10 (the part domain p1) which indicates the symbol "protrusion." Accordingly, a readout operator is able to recognize that a target medium is the "black recess medium" and also able to deal with data bits recorded at the major recording domain Aα by using correct readout processing which can be performed adopting a method that "the recess is interpreted as a bit "1"" as shown in Fig. 24C.

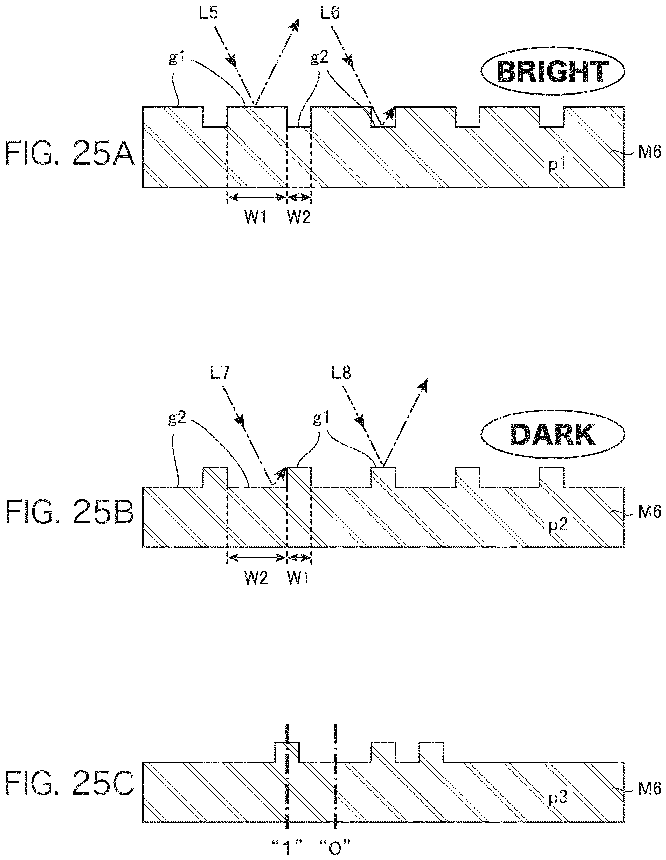

Next, consideration will be given of the black protrusion medium M6 shown in Fig. 20 and Fig. 23 when comparing and observing the pair of identification marks m10 and m20 as to which looks brighter. Fig. 25A to Fig. 25C are enlarged side cross-sectional views, each of which shows a recess and protrusion structure of each of the part domains of p1 to p3 in the black protrusion medium M6 shown at the lower part of Fig. 23. Here as well, in a case where illumination light is irradiated on an upper face of the black protrusion medium M6 obliquely at a left upper direction, behavior of the illumination light after reflection will be followed.

Originally, as shown in Fig. 25A, at the part domain p1 (that is, an internal domain of the first identification mark m10), illumination light L5 is irradiated on a "black domain" which is a protrusion (the first attribute minor domain g1) and illumination light L6 is irradiated on a "white domain" which is a recess (the second attribute minor domain g2). Now, consideration will be given of behavior of each of them after reflection. As described previously, an upper face of the protrusion into which the illumination light L5 has been made incident does not undergo corrosion. Therefore, after reflection of the illumination light L5 on the upper face of the protrusion, it is observed above at a higher probability. On the other hand, the recess into which the illumination light L6 has been made incident is a corrosion face and the illumination light L6 scatters on the corrosion face and is observed above at a lower probability.

Here, at the part domain p1 shown in Fig. 25A, as shown in Fig. 21, the width W1 of a "black domain" (the first attribute minor domain g1) is greater than the width W2 of a "white domain" (the second attribute minor domain g2). Therefore, a percentage of the incident light L5 on protrusions (black domains: higher in probability of being observed above after reflection) is greater than a percentage of the incident light L6 on recesses (white domains: higher in probability of not being observed above after reflection), and the observation area is observed brightly as a whole when observation is made above.

On the other hand, at the part domain p2 shown in Fig. 25B, as shown in Fig. 21, the width W1 of a "black domain" (the first attribute minor domain g1) is smaller than the width W2 of a "white domain" (the second attribute minor domain g2). Therefore, a percentage of incident light L7 on recesses (white domains: higher in probability of not being observed above after reflection) is greater than a percentage of incident light L8 on protrusions (black domains: higher in probability of being observed above after reflection), and the observation area is observed darkly as a whole, when observation is made above.

Consequently, when the black protrusion medium M6 shown in Fig. 20 is observed from above, due to the reason described by referring to Fig. 25A and Fig. 25B, the first identification mark m10 indicating the symbol "protrusion" (the part domain p1) is observed more brightly than the second identification mark m20 indicating the symbol "recess" (the part domain p2). Accordingly, a readout operator is able to recognize that a target medium is the "black protrusion medium" and also able to deal with the data bits recorded at the major recording domain Aα by correct readout processing which can be performed adopting a correct method that "the protrusion is interpreted as a bit "1,"" as shown in Fig. 25C.

The present invention is advantageous in that the storage processing computer 100' is used to prepare drawing data E for drawing the drawing pattern P(E) shown at the upper part of Fig. 21 and, thereafter, on the basis of the drawing data E, regardless of any beam exposure processing or any pattern processing, the pair of identification marks m10, m20 formed on a final medium are compared for brightness and darkness, thus making it possible to always recognize a correct method for interpreting data bits (whether the protrusion is interpreted as a bit "1" or the recess is interpreted as a bit "1").

In other words, the first attribute domains indicated as "black domains" at the lower part of Fig. 21 (domains g1 and G1) and the second attribute domains indicated as "white domains" (domains g2, G2) are related so that one of them is finally a protrusion and the other of them is a recess. Regardless of whether one of them is a protrusion or the other is a recess, the pair of identification marks m10, m20 are compared for brightness and darkness, thus making it possible to recognize a correct method for interpreting data bits. This is also applicable not only to a medium prepared on the basis of the drawing data E but also to a reproduction which is reproduced by a pressing process in which the medium is used as a master copy.

As described previously, a stripe-shaped recess and protrusion structure formed inside each of the identification marks m10, m20 on the medium constitutes in reality a diffraction grating. Therefore, light observed by a readout operator is diffracted light by the diffraction grating. Therefore, the operator who has the "black recess medium" shown in Fig. 19 and the "black protrusion medium" shown in Fig. 20 observes the symbol "protrusion" and the symbol "recess" which glitter at the minor recording domain Aβ at an upper left corner, and the operator is able to judge whether the protrusion is interpreted as a bit "1" or the recess is interpreted as a bit "1," depending on which symbol looks brighter (looks clearer).

Of course, upon observation of the symbol "protrusion" and the symbol "recess," absolute brightness of each symbol differs depending on an illumination environment and also different depending on a direction at which a medium is held. However, the diffraction grating formed inside the symbol "protrusion" and that formed inside the symbol "recess" face in the same direction (a direction parallel to the arrangement axis Z shown in Fig. 21). Therefore, as long as the symbol "protrusion" and the symbol "recess" are compared and observed, a phenomenon that one of them looks brighter is found universally, thereby presenting an always correct method for interpreting data bits.

As described above, according to the present invention, beam exposure and pattern processing are performed on a substrate, thus making it possible to record also information which shows a method for interpreting data bits when the information is recorded as a minute physically-structured pattern.

### <<<Section 9. Specific mode and variation of identification marks>>>

Eventually, characteristics of the identification marks m10, m20 described in Section 8 will be summarized as follows. First, as shown also in the example of Fig. 21, the band-like first attribute minor domain g1 and the band-like second attribute minor domain g2 each extending in a direction parallel to the predetermined arrangement axis Z are arranged alternately in a direction orthogonal to the arrangement axis Z inside a closed domain which constitutes the first identification mark m10. The band-like first attribute minor domain g1 and the band-like second attribute minor domain g2 each also extending in a direction parallel to the arrangement axis Z are arranged alternately in a direction orthogonal to the arrangement axis Z inside a closed domain which constitutes the second identification mark m20.

Moreover, the closed domain which constitutes the first identification mark m10 is set so that the width W1 of the first attribute minor domain g1 is greater than the width W2 of the second attribute minor domain g2. The closed domain which constitutes the second identification mark m20 is set so that the width W2 of the second attribute minor domain g2 is greater than the width W1 of the first attribute minor domain g1.

On the other hand, as shown at the part domain p3 in Fig. 21, the main information pattern creating portion 170 creates the main information pattern Pα in which the first attribute main domain G1 and the second attribute main domain G2 are mixed. The drawing data creating portion 160' performs processing which prepares a synthesis pattern in which the thus prepared main information pattern Pα is synthesized with the minor information pattern Pβ, thereby creating drawing data E for drawing the synthesis pattern.

At this time, the drawing data creating portion 160' creates the drawing data E by which the first attribute main domain G1 and the first attribute minor domain g1 are exposed but the second attribute main domain G2 and the second attribute minor domain g2 are not exposed, or creates the drawing data E by which the second attribute main domain G2 and the second attribute minor domain g2 are exposed but the first attribute main domain G1 and the first attribute minor domain g1 are not exposed, wherein the first attribute minor domain g1 and the second attribute minor domain g2 are formed with such width dimensions that they are able to constitute a diffraction grating for visible light.

At an upper part of Fig. 21, there is shown one example shown in the drawing pattern P(E) for drawing a medium, and at a lower part thereof, there are shown enlarged views of the part domains p1 to p3 thereof. As shown at the part domains p1, p2, there is formed a striped pattern in which a band-like "black domain" (the first attribute minor domain g1) and a band-like "white domain" (the second attribute minor domain g2) are alternately arranged inside each of the identification marks m10, m20. As described above, the striped pattern is formed as a recess and protrusion structure which functions as a diffraction grating on the medium, and a readout operator observes the pair of identification marks m10, m20 as the symbol "protrusion" and the symbol "recess" which glitter.

It is, therefore, necessary that the width W1 of the "black domain" (the first attribute minor domain g1) and the width W2 of the "white domain" (the second attribute minor domain g2) formed on an actual medium are set in such a width that a diffraction grating for visible light can be formed.

On the other hand, a difference between the width W1 and the width W2 causes a difference in brightness and darkness when these two identification marks m10, m20 are compared and observed. Therefore, it is, in practice, preferable that the difference should be made great as possible within a range which will not impair functions as the diffraction grating. The inventor of the application concerned conducted an experiment in which an actual medium was prepared by setting the width W1 and the width W2 to various dimensions, finding that when a ratio of the width W1 to the width W2 was set to be at least 5 times greater, a difference in brightness and darkness upon comparison and observation of the two identification marks m10, m20 could be recognized clearly regardless of illumination environment and observation environment.

Therefore, it is, in practice, preferable that the minor information pattern creating portion 180 sets a closed domain which constitutes the first identification mark m10 so that the width W1 of the first attribute minor domain g1 is at least 5 times greater than the width W2 of the second attribute minor domain g2 and sets a closed domain which constitutes the second identification mark m20 so that the width W2 of the second attribute minor domain g2 is at least 5 times greater than the width W1 of the first attribute minor domain g1 (in the example shown in Fig. 21, for the sake of convenience of illustration, a dimensional ratio is not set so as to satisfy the above conditions).

Further, in order that brightness of the symbol "protrusion" on observation of a "black protrusion medium" is made equal as much as possible to the brightness of the symbol "recess" on observation of a "black recess medium," it is preferable that the minor information pattern creating portion 180 sets the width W1 of the first attribute minor domain g1 inside a closed domain which constitutes the first identification mark m1 to be equal to the width W2 of the second attribute minor domain g2 inside a closed domain which constitutes the second identification mark m20 and also sets the width W2 of the second attribute minor domain g2 inside a closed domain which constitutes the first identification mark m10 to be equal to the width W1 of the first attribute minor domain g1 inside a closed domain which constitutes the second identification mark m20.

In other words, in the example shown in Fig. 21, the width W1 of the black domain g1 inside the part domain p1 may be set equal to the width W2 of the white domain g2 inside the part domain p2, and the width W2 of the white domain g2 inside the part domain p1 may be set equal to the width W1 of the black domain g1 inside the part domain p2. By setting the widths as described above, when the "black protrusion medium" and the "black recess medium" prepared on the basis of the drawing pattern P(E) shown in Fig. 21 are observed in the same illumination environment and in the same observation mode (a direction of the medium), brightness of the symbol "protrusion" on the "black protrusion medium" is made equal to the brightness of the symbol "recess" on the "black recess medium," and the medium can be prepared in a constant quality.

Here, just for reference, dimensional values of individual parts in the identification marks from which favorable observation results were obtained in the experiment performed by the inventor of the application concerned are described as an example. First, inside the part domain p1 shown in Fig. 21, (that is, inside the first identification mark m10), the width W1 of the first attribute minor domain g1 was set equal to 1.8 µm and the width W2 of the second attribute minor domain g2 was set equal to 0.2 µm. On the other hand, inside the part domain p2 (that is, inside the second identification mark m20), the width W1 of the first attribute minor domain g1 was set equal to 0.2 µm and the width W2 of the second attribute minor domain g2 was set equal to 1.8 µm. In the above cases, a dimension of each of the band-like domains in a longitudinal direction is such that both ends thereof are extended until they reach a contour line of each of the identification marks.

Adoption of the above dimension results in a 2 µm pitch of grid lines in the diffraction grating, and this is a dimension which will cause a sufficient diffraction phenomenon for visible light. Further, in the above-described example, each of the bit figures F recorded at the major recording domain Aα is a square with one side of 0.1 µm, and a difference in depth between a recess structure and a protrusion structure formed on the medium is set to be 0.2 µm.

The first identification mark m10 and the second identification mark m20 formed on an information recording medium are preferably provided in a macroscopically observable size. Of course, even a small mark which is difficult to observe with the naked eye can be observed by using a magnifying glass, etc. In practice, it is preferable that a readout operator who holds a medium is able to recognize immediately whether the medium is a "black protrusion medium" or a "black recess medium" by macroscopically observing the mark. Therefore, it is preferable that the minor information pattern creating portion 180 creates the minor information pattern to such a size that the first identification mark m10 and the second identification mark m20 formed on the information recording medium can be macroscopically observed. In the above-described example, the individual identification marks m10, m20 are set so as to be available in a size of about 3 mm in length and in width on a medium.

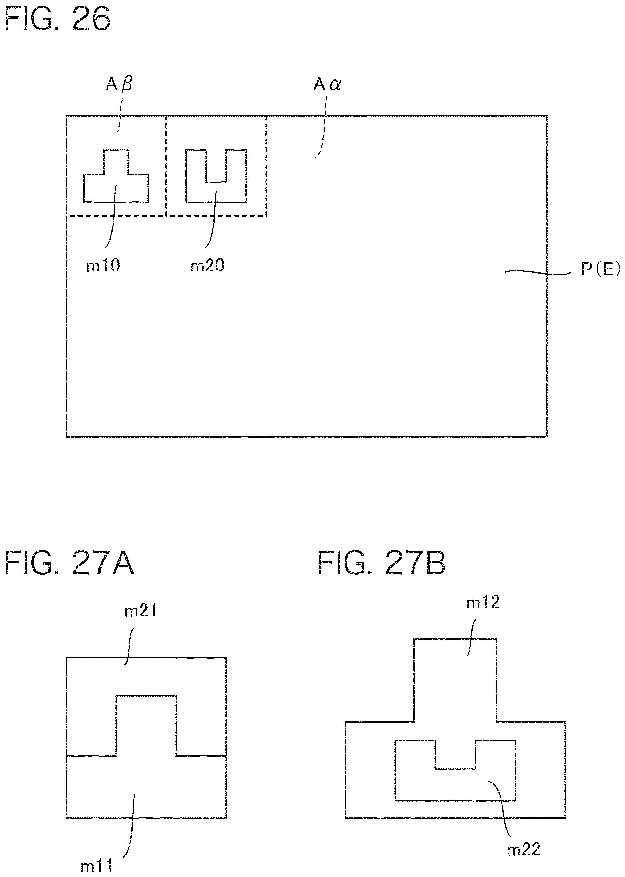

Then, a description will be given of several variations of the identification marks used in the present invention. Fig. 26 is a plan view which shows a constitution and an arrangement mode of the identification marks used in the basic example described above. In reality, the drawing pattern P(E) is constituted with a main information pattern Pα recorded at the major recording domain Aα and a minor information pattern Pβ recorded at the minor recording domain Aβ. In Fig. 26, only the minor information pattern Pβ is shown. The minor information pattern Pβ is a pattern having the first identification mark m10 indicating a symbol "protrusion" and the second identification mark m20 indicating a symbol "recess." As described above, a method for interpreting data bits recorded at the major recording domain Aα is recognized by which of the pair of identification marks looks brighter.

In executing the present invention, no particular restriction is placed on positions of the first identification mark m10 and the second identification mark m20 on a medium. Therefore, for example, the first identification mark m10 may be arranged at an upper left corner of the medium and the second identification mark m20 may be arranged at a lower right corner thereof. However, it is in practice not very preferable that both of the identification marks are arranged in separation. This is because a readout operator finds it necessary to observe comparatively the two identification marks m10, m20, thereby comparing the degree of brightness. In order that the operator is able to easily observe and compare the identification marks for their brightness, it is preferable that they are arranged so as to be adjacent to each other.

As described in the example shown in Fig. 26, if a symbol "protrusion," and a symbol "recess" are arranged so as to be adjacent to each other laterally, a readout operator is able to easily compare the brightness between them. Therefore, it is, in practice, preferable that the minor information pattern creating portion 180 creates a minor information pattern Pβ in which the first identification mark m10 and the second identification mark m20 are arranged adjacently.

For making observation and comparison easier, it is possible to create a minor information pattern Pβ in which a closed domain which constitutes the first identification mark and a closed domain which constitutes the second identification mark are in contact with each other. Fig. 27A shows an example in which a symbol "protrusion" and a symbol "recess" are arranged so as to be adjacent vertically to each other and also the closed domains are in contact with each other. A closed domain which constitutes a first identification mark m11 and a closed domain which constitutes a second identification mark m21 are in contact with each other, with a border line held between the regions and, therefore, a readout operator is able to compare the brightness between the regions more easily. In the case of the example shown in the drawing, the first identification mark m11 is a symbol "protrusion" and the second identification mark m21 is a symbol "recess." Thus, the symbol "recess" is inverted upside down and fitted into an upper part of the symbol "protrusion" by utilizing the design of the two symbols, thereby successfully forming an identification mark which is harmonized as a whole.

On the other hand, Fig. 27B shows an example in which a symbol "recess" is arranged so as to be embedded inside a symbol "protrusion." Since the symbol "recess" is in contact with the symbol "protrusion," with a contour line thereof given as a border, a readout operator is able to still more easily compare the brightness of them. As described above, there may be created a minor information pattern Pβ in which the second identification mark m22 is embedded into the first identification mark m12, or instead, there may be created a minor information pattern Pβ in which the first identification mark m12 is embedded into the second identification mark m22. In either case, an outer identification mark is in contact with an entire contour line of the identification mark embedded inside given as a border, thereby providing an effect that facilitates the observation and comparison.

In the examples described above, a mark in which a symbol of "protrusion" is designed is used as the first identification mark, and a mark in which a symbol of "recess" is designed is used as the second identification mark. Of course, the identification mark used in executing the present invention shall not be limited to a mark which uses these symbols. The first identification mark is a mark which shows a first method for interpreting data bits recorded at the major recording domain Aα, and the second identification mark is a mark which shows a second method for interpretation. Therefore, any mark may be used as long as a readout operator is able to recognize one of the methods for interpretation on the basis of the identification marks.

For example, a letter "A" may be used as the first identification mark or a letter "B" may be used as the second identification mark. In this case, for example, such an agreement is made that on a medium in which the letter "A" looks brighter, a protrusion is interpreted as a bit "1" and a recess is interpreted as a bit "0" and on a medium in which the letter "B" looks brighter, the protrusion is interpreted as a bit "0" and the recess is interpreted as a bit "1." And, a readout operator is informed of the agreement, by which the operator is able to recognize a correct method for interpreting data bits by judging the brightness between the letters "A" and "B."

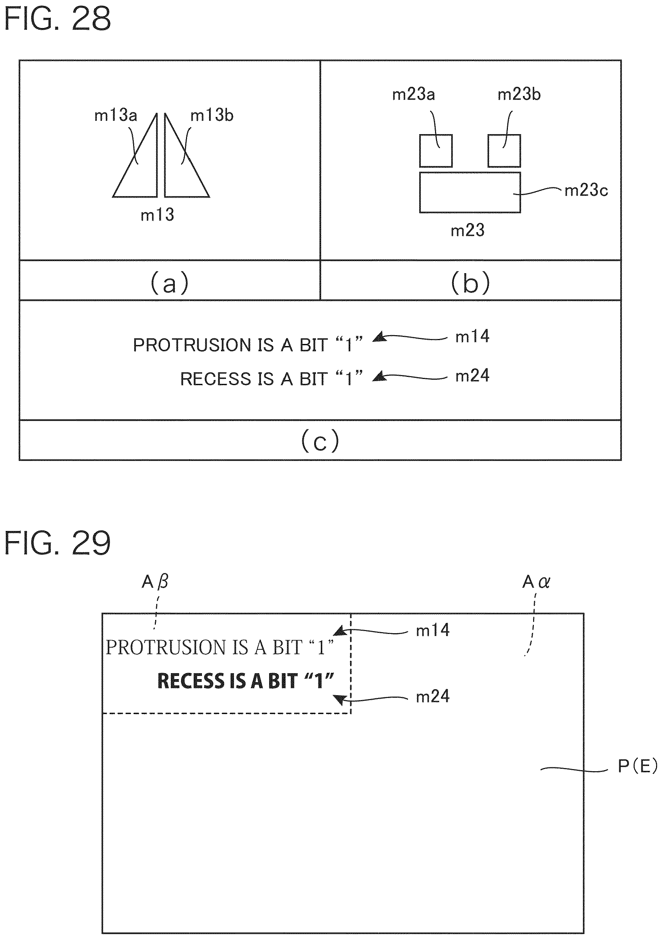

Of course, the identification mark is not necessarily a symbol indicating "recess" or "protrusion" but may be a mark such as a number, another symbol or a figure. Further, each identification mark is not necessarily constituted with a single closed domain but may be constituted with a plurality of closed domains. Fig. 28 is a plan view which shows one example of identification marks which are constituted with figures and sentences. Moreover, in this example, each of the identification marks is constituted with a plurality of closed domains.

That is, a first identification mark m13 shown in Fig. 28(a) is a mark constituted by combining two sets of closed domains m13a, m13b, each of which is a triangle and designed to associate a symbol "protrusion." In contrast, a second identification mark m23 shown in Fig. 28(b) is a mark constituted by combining three sets of closed domains m23a, m23b, m23c each of which is a rectangle and designed to associate a symbol "recess."

As described above, where each identification mark is constituted with a plurality of closed domains, a striped pattern shown at the part domain p1 of Fig. 21 is formed inside the closed domains m13a, m13b, and a striped pattern shown at the part domain p2 of Fig. 21 is formed inside the closed domains m23a, m23b, m23c, by which the first identification mark m13 is recognized as a single mark in its entirety, and the second identification mark m23 is also recognized as a single mark in its entirety, thus making it possible to recognize a correct method for interpreting data bits by comparison of the brightness between them.

Further, the identification mark is not necessarily constituted with a single letter, number, symbol or figure and may be constituted by combining them. For example, a plurality of letters are combined to constitute an identification mark, thus making it possible to constitute an identification mark of a sentence. Fig. 28(c) shows one example of the identification mark in which a sentence is constituted. Specifically, in the case of the example shown in Fig. 28(c), a sentence of a character string that "protrusion is a bit "1"" constitutes a first identification mark m14, and a sentence of a character string that "recess is a bit "1"" constitutes a second identification mark m24.

Fig. 29 is a plan view of a drawing pattern P(E) which has the identification marks m14, m24 according to the modified example shown in Fig. 28(c). In the case of this example, sentences are recorded at two stages vertically inside a minor recording domain Aβ provided at an upper left corner of the drawing pattern P(E). A sentence at the upper part is the first identification mark m14 that "protrusion is a bit "1"" and a sentence at the lower part is the second identification mark m24 that "recess is a bit "1."" Of course, a striped pattern shown at the part domain p1 of Fig. 21 is formed inside individual letters of the sentence at the upper part which constitutes the first identification mark m14, and a striped pattern shown at the part domain p2 of Fig. 21 is formed inside individual letters of the sentence at the lower part which constitutes the second identification mark m24.

Therefore, if the medium prepared on the basis of the drawing pattern P(E) is a "black protrusion medium," the first identification mark m14 is observed brighter, and if it is a "black recess medium," the second identification mark m24 is observed brighter. Eventually, a readout operator may perform readout processing in which the protrusion is interpreted as a bit "1" for data bits recorded at the major recording domain Aα, when observing the minor recording domain Aβ of the medium held to find that the sentence of "protrusion is a bit "1"" looks brighter, and may perform readout processing in which the recess is interpreted as a bit "1" when the sentence of "recess is a bit "1"" looks brighter. Fig. 29 shows an observation mode of the latter.

In brief, the minor information pattern Pβ used in the present invention may be available in any pattern, as long as it is provided with a first identification mark having one or a plurality of closed domains for presenting first information which is composed of letters, numbers, symbols, figures or a part of them or a combination of them (information which shows one of two methods for interpreting data bits) and a second identification mark having one or a plurality of closed domains for presenting second information composed of letters, numbers, symbols and figures or a part of them or a combination of them (information which shows the other of the methods for interpretation).

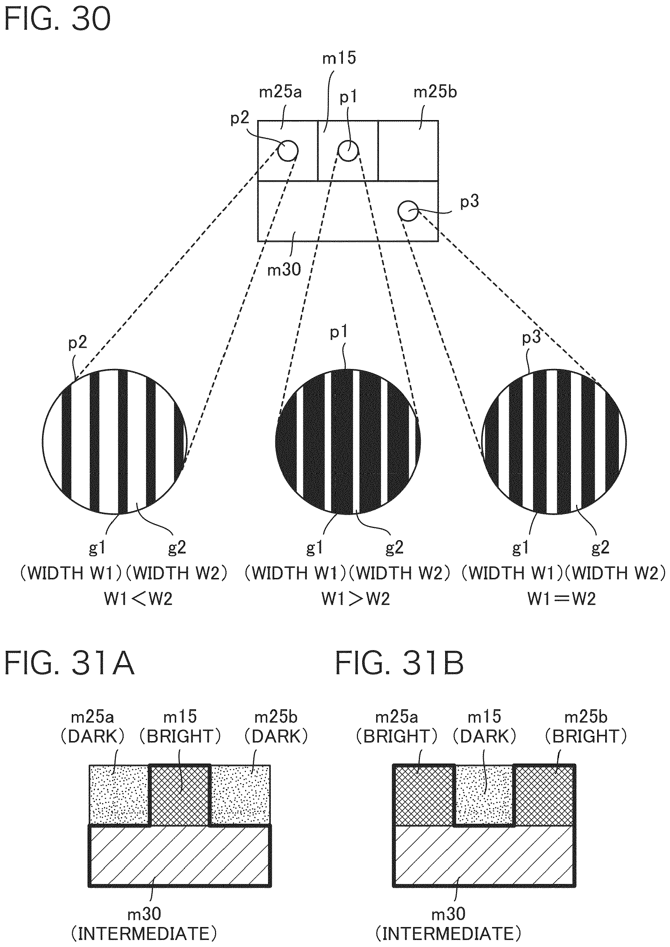

Lastly, another variation of the identification mark which constitutes a minor information pattern is shown by referring to Fig. 30. Fig. 30 is a plan view which shows a modified example which uses, as the minor information pattern, an auxiliary common identification mark in addition to the first identification mark and the second identification mark.

The minor information pattern shown at an upper part of Fig. 30 is constituted with a total of four sets of rectangles arranged vertically in two stages. That is, a square-shaped central rectangle m15 is arranged at the center of an upper stage, a square-shaped left-side rectangle m25a is arranged on the left side thereof, and a square-shaped right-side rectangle m25b is arranged on the right side thereof. A lower rectangle m30 having a horizontal width corresponding to a total width of the three sets of rectangles is arranged at a lower stage. In other words, there is shown such a figure that three rectangles of the left-side rectangle m25a, the central rectangle m15 and the right-side rectangle m25b are arranged horizontally in an adjacent manner so that they are respectively arranged on the left side, at the center and on the right side, and the lower rectangle m30 is arranged below so as to be commonly adjacent to three sets of the rectangles.

Here, the central rectangle m15 constitutes a first identification mark, and a combination of the left-side rectangle m25a and the right-side rectangle m25b constitutes a second identification mark. This variation is characterized in that additionally provided is the lower rectangle m30 which constitutes an auxiliary common identification mark. The auxiliary common identification mark m30 is what-is-called a third identification mark and provided with optical characteristics different from those of the first identification mark and the second identification mark.

At a lower part of Fig. 30, there are shown enlarged views (encircled images) of individual part domains of the minor information pattern shown at the upper part of Fig. 30. That is, an image inside a circle p1 at the lower part is an enlarged view of a part domain p1 inside the central rectangle m15 which constitutes the first identification mark shown at the upper part, an image inside a circle p2 at the lower part is an enlarged view of a part domain p2 inside the left-side rectangle m25a which constitutes the second identification mark shown at the upper part (as with the enlarged view of the part domain inside the right-side rectangle m25b), and an image inside a circle p3 at the lower part is an enlarged view of a part domain p3 inside the lower rectangle m30 which constitutes the auxiliary common identification mark shown at the upper part (in Fig. 30 as well, a dimensional ratio of each part is set by disregarding an actual dimensional ratio).

As with the examples described above, a pattern in which a narrow band-like "black domain" and a narrow band-like "white domain" are alternately arranged is formed inside the part domains p1, p2, p3 shown at the lower part of Fig. 30, and the pattern functions as a diffraction grating for visible light on the medium M. As with the example described in Fig. 21, individual grid lines which make up the diffraction grating are all set in a direction parallel to a common arrangement axis Z. In the example shown in the drawing, the arrangement axis Z is set as an axis extending in a vertical direction in the drawing. Therefore, a striped pattern extending in a vertical direction is formed inside the part domains p1, p2, p3. Of course, the arrangement axis Z may be set in any given direction.

The enlarged views of the part domains p1, p2 shown in Fig. 30 are identical with the enlarged views of the part domains p1, p2 shown in Fig. 21. That is, a striped pattern inside the part domain p1 which constitutes the first identification mark is compared with a striped pattern inside the part domain p2 which constitutes the second identification mark. It is to be found that a dimensional relationship between the width W1 of a band which constitutes a "black domain" (the first attribute minor domain g1) and the width W2 of a band which constitutes a "white domain" (the second attribute minor domain g2) is reversed between the part domain p1 and p2. Specifically, in the example shown in the drawing, at the part domain p1, the relationship is W1 > W2, whereas at the part domain p2, the relationship is W1 < W2. As described above, the difference in dimensional relationship between the widths causes a difference in brightness and darkness on observation.

On the other hand, as for a striped pattern inside the part domain p3 which constitutes the auxiliary common identification mark, in the case of this example, the width W1 of a band which constitutes a "black domain" (the first attribute minor domain g1) is set equal to the width W2 of a band which constitutes a "white domain" (the second attribute minor domain g2). Consequently, the first identification mark is set to give a relationship of W1 > W2, the second identification mark is set to give a relationship of W1 < W2, and the auxiliary common identification mark is set to give a relationship of W1 = W2.

As already described, even where drawing data having the same minor information pattern as shown in Fig. 30 is used to create an information recording medium M, there is differently obtained a "black protrusion medium" in which the black domain is a protrusion or a "black recess medium" in which the black domain is a recess, depending on whether beam exposure is performed or pattern processing is performed. Thus, in the case of the information recording medium M prepared by the information storage device according to the present invention, where the minor information pattern is observed to find that the first identification mark greater in area which occupies the "black domain" (the first attribute minor domain g1) looks brighter, the medium can be judged to be a "black protrusion medium," and where the second identification mark wider in area which occupies a "white domain" (the second attribute minor domain g2) looks brighter, the medium can be judged to be a "black recess medium," and this has already been described.

An important point of the example shown in Fig. 30 is that, as described above, a relationship of brightness and darkness between the first identification mark m15 and the second identification mark m25 (m25a and m25b) on observation is reversed depending on whether the medium M is actually a "black protrusion medium" or a "black recess medium," but the auxiliary common identification mark m30 is always intermediate in brightness between the first identification mark m15 and the second identification mark m25. In particular, in the case of the example shown in Fig. 30, the auxiliary common identification mark m30 is set to give a relationship of W1 = W2. Therefore, there is found no difference in the auxiliary common identification mark m30 in brightness, depending on whether the medium M is actually a "black protrusion medium" or a "black recess medium."

A role of the auxiliary common identification mark m30 is to constitute a first emblem which shows that the medium concerned is a "black protrusion medium" when simultaneously observed with the first identification mark m15 in the case of the "black protrusion medium" in which the first identification mark m15 is observed brighter than the second identification mark m25 and to constitute a second emblem which shows that the medium concerned is a "black recess medium" when simultaneously observed with the second identification mark m25 in the case of the "black recess medium" in which the second identification mark m25 is observed brighter than the first identification mark m15.

The above role will be described by referring to a specific example shown in Fig. 30. Fig. 31A and Fig. 31B are plan views, each of which shows an observation mode of the individual identification marks in the modified example shown in Fig. 30. In Fig. 31A and Fig. 31B, three different ways of hatching are imparted to the individual domains, indicating that a mesh-hatching imparted domain is observed bright, a dot-hatching imparted domain is observed dark, and a diagonal-hatching imparted domain is observed intermediately bright.

Fig. 31A shows an observation mode of the "black protrusion medium," that is, the first identification mark m15 is observed bright, the second identification mark m25 is observed dark, and the auxiliary common identification mark m30 is observed intermediately bright. Resultantly, an observer understands these marks as one emblem in which a part of the first identification mark m15 which is bright is merged with a part of the auxiliary common identification mark m30 which is intermediately bright. Specifically, the observer understands the first emblem which shows the symbol "protrusion" as shown by the enclosed thick frame in the drawing and is able to recognize that the medium M is a "black protrusion medium." In other words, a method for interpreting that "the protrusion is a bit "1"" is shown by the minor information pattern.

On the other hand, Fig. 31B shows an observation mode of the "black recess medium," that is, the second identification mark m25 is observed bright, the first identification mark m15 is observed dark, and the auxiliary common identification mark m30 is observed intermediately bright. Resultantly, an observer understands the marks as one emblem in which a part of the second identification mark m25 which is bright is merged with the auxiliary common identification mark m30 which is intermediately bright. Specifically, the observer understands the second emblem which shows the symbol "recess" as shown by the enclosed thick frame in the drawing and is able to recognize that the medium M is the "black recess medium." In other words, a method for interpreting that "the recess is a bit "1"" is shown by the minor information pattern.

Finally, in executing the variation shown in Fig. 30, the minor information pattern creating portion 180 may have functions to create a minor information pattern which has the auxiliary common identification mark m30, in addition to the first identification mark m15 and the second identification mark m25. Here, the auxiliary common identification mark m30 may be an identification mark which has a single closed domain or a plurality of closed domains for presenting auxiliary common information which is composed of letters, numbers, symbols and figures or a part of them or a combination of them.

Here, it is important that, inside a closed domain which constitutes the auxiliary common identification mark m30, as the part domain p3 shown in Fig. 30, a band-like first attribute minor domain gland a band-like second attribute minor domain g2 which extend in a direction parallel to the arrangement axis Z (a vertical-direction axis in the drawing in the example shown in the drawing) are alternately arranged in a direction orthogonal to the arrangement axis Z (a lateral direction in the example shown in the drawing), thereby forming a diffraction grating for visible light on the actual medium M.

Further, in the example shown in Fig. 30, the width W1 of the first attribute minor domain g1 in the auxiliary common identification mark m30 is set equal to the width W2 of the second attribute minor domain g2. They are set as described above so that the auxiliary common identification mark m30 will not be made different in brightness, depending on whether the medium M is actually a "black protrusion medium" or a "black recess medium." However, it is not always necessary that the relationship is set to be W1 = W2 in the auxiliary common identification mark m30 and a slight difference between them will not pose any problem.

An important point is that a difference between the width W1 of the first attribute minor domain g1 and the width W2 of the second attribute minor domain g2 in the auxiliary common identification mark m30 is set smaller than a difference between the width W1 of the first attribute minor domain g1 and the width W2 of the second attribute minor domain g2 in the first identification mark m15 and the second identification mark m25. Where the difference is set as described above, regardless of whether the medium M is actually a "black protrusion medium" or a "black recess medium," the auxiliary common identification mark m30 is observed intermediate in brightness between the first identification mark m15 and the second identification mark m25. Thus, it is able to play a role as an auxiliary mark to be observed together with either of the media.

The example shown in Fig. 30 is characterized in that the first emblem (an emblem that shows the symbol "protrusion") which shows a first method for interpreting data bits shown by the main information pattern is constituted in combination of the first identification mark m15 with the auxiliary common identification mark m30, and the second emblem (an emblem which shows the symbol "recess") which shows a second method for interpreting data bits shown by the main information pattern is constituted in combination of the second identification mark m25 with the auxiliary common identification mark m30. That is, four sets of the rectangles shown at the upper part of Fig. 30 are used to constitute the minor information pattern, the central rectangle m15 is used to constitute the first identification mark, the left-side rectangle m25a and the right-side rectangle m25b are used to constitute the second identification mark, and the lower rectangle m30 is used to constitute the auxiliary common identification mark, thus making it possible to indicate the first emblem showing the symbol "protrusion" and the second emblem showing the symbol "recess."

Of course, it is theoretically possible to show a method for interpreting data bits without the auxiliary common identification mark m30 by referring to whether the first identification mark (a mark composed of a single square) composed of the central rectangle m15 is observed brighter or the second identification mark (a mark composed of a pair of squares) composed of the left-side rectangle m25a and the right-side rectangle m25b is observed brighter. However, as shown in Fig. 31A and Fig. 31B, the auxiliary common identification mark m30 can be added to express the first emblem which indicates the symbol "protrusion" and the second emblem which indicates the symbol "recess." Therefore, the minor information pattern is an emblem which directly shows that a "bit "1"" is the protrusion or the recess, and an observer is able to recognize the method for interpreting data bits more intuitively.

It is not always necessary to use the symbol "protrusion" and the symbol "recess" as the first emblem and the second emblem. For example, in Fig. 28(c), there is shown an example in which there are used the first identification mark m14 that "protrusion is a bit "1"" and the second identification mark m24 that "recess is a bit "1."" The above-described auxiliary common identification mark can be used in this example. Specifically, for example, a part text of "protrusion" can be replaced by the first identification mark, a part text of "recess" can be replaced by the second identification mark, and a part text of "is a bit "1"" can be replaced by the auxiliary common identification mark.

### <<<Section 10. Variation in structure of information recording medium>>>

In Section 2, with reference to Fig. 5A to Fig. 5E, a description has been given of some variations in structure of the information recording medium prepared by the information storage device according to the basic embodiment. Here, there will be described a variation in structure of the information recording medium prepared by the information storage device according to the present invention.

In the examples described in Section 7 and Section 8, the patterning device 300 is used to form a physical structure body having a recess and protrusion structure which is composed of a recess C which shows one of the first attribute domain (the first attribute main domain G1 and the first attribute minor domain g1) and the second attribute domain (the second attribute main domain G2 and second attribute minor domain g2) and a protrusion V which shows the other of them. On the other hand, in Fig. 5C, as a variation of the basic embodiment, there is shown a modified example in which the added layer 32 is formed on a surface of the protrusion V in the physical structure body having a recess and protrusion structure. As described above, the modified example in which the added layer is formed on the surface of the protrusion V is also effective in the present invention as well.

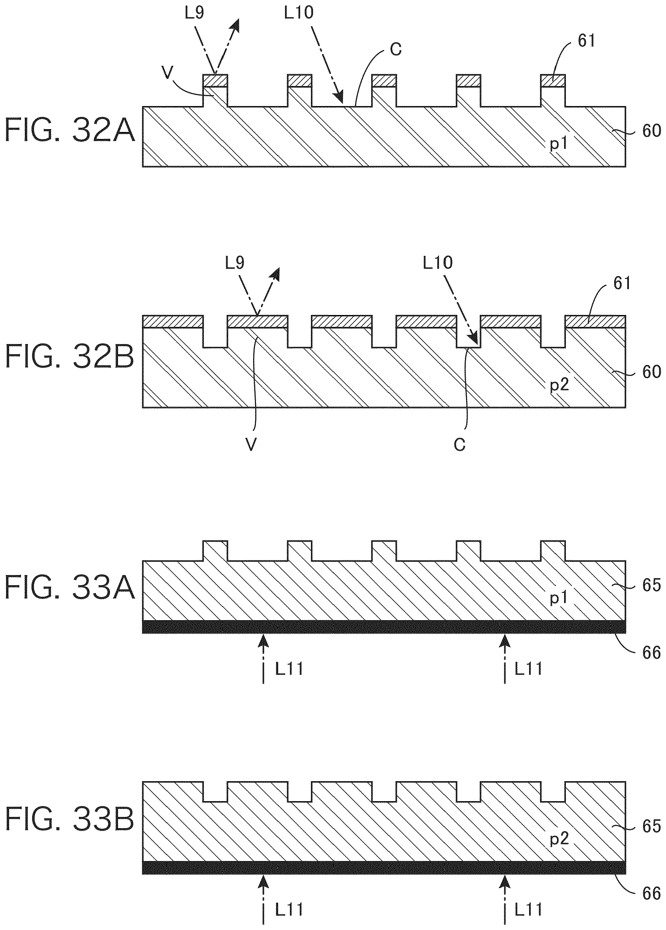

Fig. 32A to Fig. 35B are all side cross-sectional views which show various variations of the information recording medium onto which information has been written by the information storage device shown in Fig. 18. Fig. A at the upper part shows a side section of the part domain p1 at which the first identification mark m10 is recorded and Fig. B at the lower part shows a side section of the part domain p2 at which the second identification mark m20 is recorded (in both cases, only a cross section is shown, with a structure at the back not illustrated).

The modified example shown in Fig. 32A and Fig. 32B is characterized in that an added layer 61 is additionally provided on a surface of a protrusion on a substrate 60 after processing has been performed for forming a recess and protrusion structure on an upper face thereof. Here, a layer made of a light-reflective material is used as the added layer 61. In order to prepare the physical structure body shown in Fig. 32A and Fig. 32B, the patterning device 300 may have functions to form the added layer 61 made of a light-reflective material on the surface of the protrusion on the substrate 60.

As described above, the added layer 61 made of a light-reflective material is formed on a surface of a protrusion, by which on comparison between the first identification mark m10 and the second identification mark m20, a difference in brightness between them can be made clearer to provide such an effect that a readout operator can make an observation easily. Each of Fig. 32A and Fig. 32B shows a structure of a "black recess medium," as with the medium M5 shown in Fig. 24A and Fig. 24B, a light beam L9 made incident on a protrusion is reflected upward and observed, whereas a light beam L10 made incident on a recess mostly scatters and disappears. Therefore, the first identification mark m10 (Fig. 32A) in which a recess occupies a larger area than a protrusion looks dark, and the second identification mark m20 (Fig. 32B) in which a protrusion occupies a larger area than a recess looks bright.

At this time, when the added layer 61 made of a light-reflective material is formed on a surface of a protrusion, the light beam L9 made incident on the protrusion can be improved in reflectance to provide an effect that the second identification mark m20 (Fig. 32B) is allowed to look brighter. Therefore, a readout operator is able to make a comparison and observation more easily.

Where a medium adopts the structure according to the modified example shown in each of Fig. 32A and Fig. 32B, at the part domain p1 (Fig. 32A), the width of the first attribute minor domain g1 (a recess) is set to be W1 = 19 µm, the width of the second attribute minor domain g2 (a protrusion) is set to be W2 = 1 µm, and at the part domain p2 (Fig. 32B), the width of the first attribute minor domain g1 (a recess) is set to be W1 = 1 µm, the width of the second attribute minor domain g2 (a protrusion) is set to be W2 = 19 µm, thereby giving a 20 µm pitch of grid lines. And, when the medium is observed from above, both the identification marks m10, m20 have been confirmed in a favorable state by reflection/diffraction light.

On the other hand, the modified example shown in Fig. 33A and Fig. 33B is an example in which the patterning device 300 performs pattern processing on a substrate 65 made of a translucent material to form a recess and protrusion structure on a surface of the substrate 65 (an upper face in the drawing) and also form an added layer 66 made of a light-shielding material on a back face of the substrate 65 (a lower face in the drawing). In the case of a medium composed of this substrate 65 as well, reflected light which is illumination light irradiated from above is observed to recognize individual identification marks, as with the previous case. However, the substrate 65 is constituted with a translucent material, by which illumination light L11 from the back face which is transmitted upward may adversely influence observation of the identification marks.

The added layer 66 made of a light-shielding material formed on the back face of the substrate 65 in the structure shown in each of Fig. 33A and Fig. 33B performs functions to prevent the adverse influence on observation of the identification marks by the illumination light L11 transmitted upward from the back face. Where the substrate 65 is constituted with a non-translucent material, it is not necessary to provide the added layer 66 on the back face. However, where the substrate 65 is constituted with a translucent material, as in the example shown in the drawing, it is preferable that the added layer 66 made of a light-shielding material is provided on the back face.

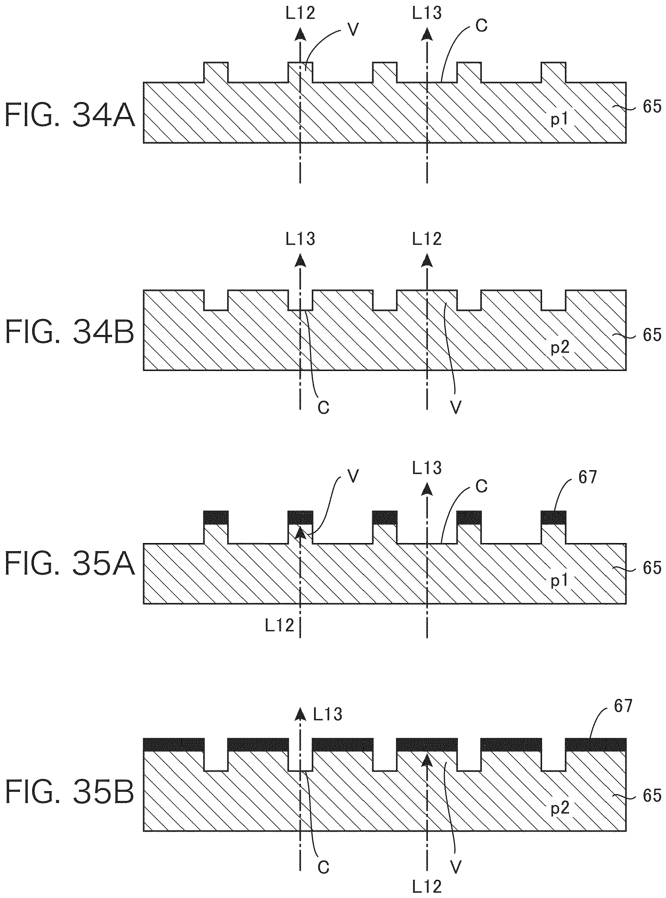

In any of the examples described above, it is assumed that reflected light which is illumination light irradiated from above on an upper face of the medium having a recess and protrusion structure on the upper face thereof is observed from above, thereby observing each of the identification marks. However, as shown in the example of Fig. 34A and Fig. 34B, where the substrate 65 made of a translucent material is used to form a medium, transmitted light from an upper face of the medium which is illumination light irradiated on a lower face thereof from below is observed from above, thus making it possible to recognize each of the identification marks.

In Fig. 34A and Fig. 34B, light beams L12, L13 transmitted through the translucent substrate 65 from below to above are depicted by a single dotted and dashed line. The light beam L12 is light which is transmitted through a protrusion V and is directed upward, and the light beam L13 is light which is transmitted through a recess C and is directed upward. Theoretically, unless the substrate 65 is a perfect transparent material having 100% translucency, the transmitted light will be attenuated partially while moving through the substrate 65. Therefore, when observation is made from above, the light beam L12 which has been transmitted through a protrusion V is slightly lower in intensity than the light beam L13 which has been transmitted through a recess C. Therefore, in the example shown in the drawing, the first identification mark m10 (Fig. 34A) in which a recess C occupies a greater area than a protrusion V looks slightly brighter, whereas the second identification mark m20 (Fig. 34B) in which a protrusion V occupies a greater area than a recess C looks slightly darker.

However, in the constitutions shown in Fig. 34A and Fig. 34B, a difference between brightness and darkness in both the identification marks observed by the transmitted light is quite subtle. Therefore, in practice, the identification marks according to the present invention are not able to perform sufficient functions when being constituted as described above. Thus, it is, in reality, preferable that, as shown in the example of Fig. 35A and Fig. 35B, an added layer 67 made of a light-shielding material is formed on an upper face of a protrusion on the substrate 65. In order to prepare a medium which has a structure shown each in Fig. 35A and Fig. 35B, the patterning device 300 may perform processing by which pattern processing is performed on the substrate 65 made of a translucent material to form a recess and protrusion structure on the upper face thereof and also form the added layer 67 made of a light-shielding material on a surface of a protrusion V.

In the case of the medium shown in Fig. 35A and Fig. 35B, the light beam L13 which is to be transmitted through a recess C is transmitted as it is upward and observed. However, the light beam L12 which is to be transmitted through a protrusion V is blocked by the added layer 67 made of a light-shielding material and will not be observed upward. Therefore, in the example shown in the drawing, the first identification mark m10 (Fig. 35A) in which a recess C occupies a greater area than a protrusion V looks brighter, and the second identification mark m20 (Fig. 35B) in which a protrusion V occupies a greater area than a recess C looks darker. The added layer 67 made of a light-shielding material is formed, by which a difference in brightness and darkness between both the identification marks is made clearer and the identification marks according to the present invention are able to perform sufficient functions.

In the case of the medium as well which has adopted the structure according to the modified example shown in Fig. 35A and Fig. 35B, at the part domain p1 (Fig. 35A), the width of the first attribute minor domain g1 (a recess) is set to be W1 = 19 µm, the width of the second attribute minor domain g2 (a protrusion) is set to be W2 = 1 µm, and at the part domain p2 (Fig. 35B), the width of the first attribute minor domain g1 (a recess) is set to be W1 = 1 µm, the width of the second attribute minor domain g2 (a protrusion) is set to be W2 = 19 µm, thereby giving a 20µm pitch of grid lines, and when observation is made from above, both the identification marks m10, m20 have been confirmed in a favorable state by transmission/diffraction light.

A description has been so far given of some variations in structure of the information recording medium in which a recess and protrusion structure is formed on the surface of the substrate. In executing the present invention, the physical structure which shows bit information shall not be necessarily limited to a recess and protrusion structure but there may be adopted a network structure which is shown in Fig. 5A as a modified example of the basic embodiment. In this case, the patterning device 300 may form a network structure body which is composed of a through hole H showing one of a first attribute domain (first attribute main domain G1 and first attribute minor domain g1) and a second attribute domain (second attribute main domain G2 and second attribute minor domain g2) and a non-hole part N showing the other of them.

In this case, individual data bits of the digital data to be stored are recorded as a network structure composed of a through hole H which shows one of a bit "1" and a bit "0" and a non-hole part N which shows the other of them at a major recording domain Pα. For example, in the network structure body 12 shown in Fig. 5A, as shown in the drawing, a bit "1" and a bit "0" are expressed depending on whether the position indicated with a thick single dotted and dashed line (a position corresponding to a grid point L at which a bit is recorded) is given as a through hole H or given as a non-hole part N (a position at which no through hole is formed).

On the other hand, the information which shows a method for interpreting data bits is recorded at a minor recording domain Pβ as information of the pair of identification marks.

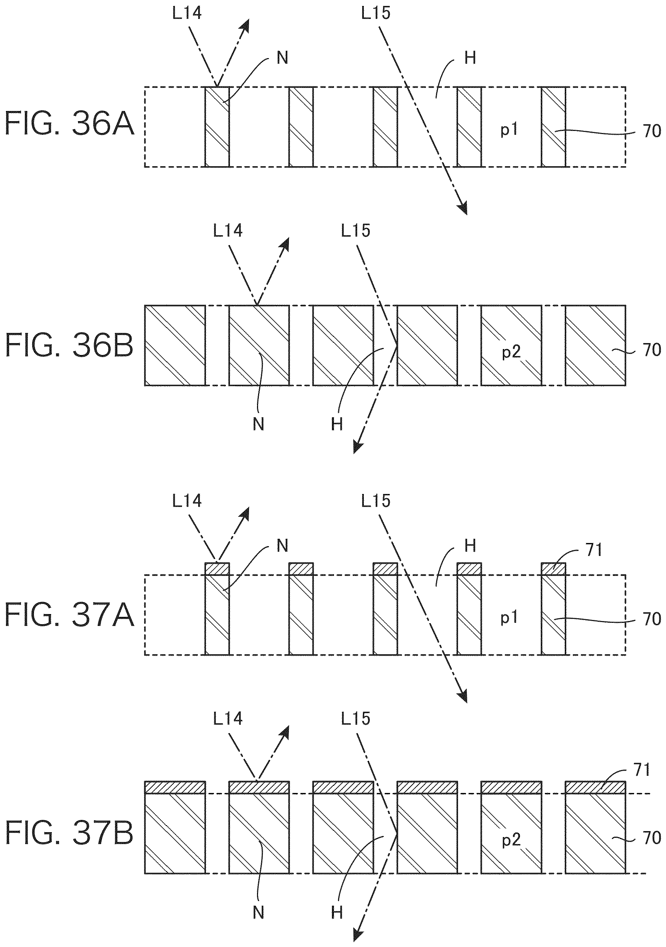

Fig. 36A to Fig. 39B are all side cross-sectional views which show information recording media having a network structure prepared by the information storage device shown in Fig. 18. In any of the drawings, Fig. A at the upper part shows a side section of the part domain p1 in which the first identification mark m10 is recorded and Fig. B at the lower part shows a side section of the part domain p2 in which the second identification mark m20 is recorded (in any of the drawings, only a cross section is shown, and a structure at the back is not illustrated).

Fig. 36A and Fig. 36B show the respective side sections of the part domains p1, p2 in an information recording medium constituted by a substrate 70 composed of a network structure body at which no added layer is formed. Here, first, consideration will be given to a case where reflected light which is illumination light irradiated from above on an upper face of the information recording medium is observed from above, thereby observing individual identification marks. In this case, a light beam L14 made incident on a non-hole part N is, as shown in the drawing, reflected on an upper face of a non-hole part N and observed above. On the other hand, a light beam L15 made incident on a through hole H is, as shown in the drawing, transmitted below the medium or collides with a side face of the through hole H and scatters.

Therefore, the first identification mark m10 (Fig. 36A) in which a through hole H occupies a greater area than a non-hole part N looks darker, and the second identification mark m20 (Fig. 36B) in which a non-hole part N occupies a greater area than a through hole H looks brighter. Here, as the identification mark m10, there is used a mark which shows a method for interpreting that "the non-hole part N is a bit "1,"" and as the identification mark m20, there is used a mark which shows a method for interpreting that "the through hole H is a bit "1,"" by which each of the identification marks m10, m20 normally functions as a mark which shows the method for interpreting data bits.

That is, in the example shown in Fig. 36A and Fig. 36B, the second identification mark m20 looks brighter and, therefore, the method for interpreting that "the through hole H is a bit "1"" is adopted. The method concerned shows a correct interpretation of the data bits shown in Fig. 5A.

On the other hand, the modified example which is shown in Fig. 37A and Fig. 37B is such that an added layer 71 is additionally provided on an upper face of a substrate 70 composed of the network structure body shown in Fig. 36A and Fig. 36B. Here, a layer made of a light-reflective material is used as the added layer 71. In order to prepare a physically structured body shown in Fig. 37A and Fig. 37B, the patterning device 300 may have functions to form an added layer made of a light-reflective material on one face (an upper face of the example shown in the drawing) of a non-hole part N of the substrate 70 composed of a network structure body.

As described above, where the added layer 71 made of a light-reflective material is formed on an upper face of a non-hole part N to compare the first identification mark m10 with the second identification mark m20, a difference in brightness between them can be made clearer to obtain an effect that will facilitate the observation by an readout operator. That is, when the added layer 71 is formed, the light beam L15 made incident on a through hole H is not observed above, either. However, the light beam L14 made incident on a non-hole part N can be improved in reflectance to obtain an effect that both of the identification marks are allowed to look brighter. Then, a readout operator is able to make a comparison and observation more easily.

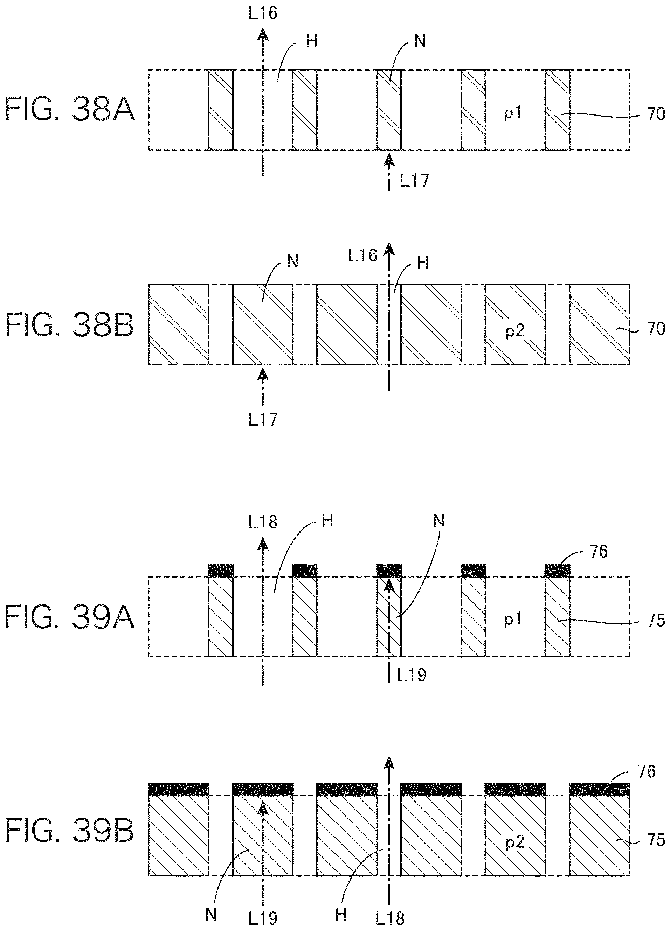

A description has been so far given on the assumption that reflected light which is illumination light irradiated from above on the upper face of the medium composed of a network structure body is observed from above, thereby observing individual identification marks. In the case of the medium composed of a network structure body, transmitted light from the upper face of the medium which is illumination light irradiated from below on the lower face thereof is observed from above, thus making it also possible to recognize individual identification marks. Fig. 38A and Fig. 38B are side cross-sectional views, each of which shows an example in which a substrate 70 composed of a network structure body is constituted with a non-translucent material and there is adopted a mode that illumination light from below is observed from above.

Since the substrate 70 is constituted with a non-translucent material, a light beam L17 made incident on a non-hole part N from below is prevented from upward transmission. However, a light beam L16 made incident on a through hole H is partially transmitted above and observed (Of course, some light collides with a side wall of a through hole H, scatters and disappears). Therefore, in the case of the example shown in the drawing, the first identification mark m10 (Fig. 38A) in which a through hole H occupies a greater area than a non-hole part N looks brighter, and the second identification mark m20 (Fig. 38B) in which a non-hole part N occupies a greater area than a through hole H looks darker. Accordingly, in the substrate 70 composed of a network structure body, transmitted light from the upper face thereof which is illumination light irradiated on the lower face thereof from below is observed above, thus making it possible to compare and confirm both the identification marks.

The modified example shown in Fig. 39A and Fig. 39B is such that where a translucent material is used to prepare a substrate 75 composed of a network structure body, an added layer 76 is additionally provided on an upper face of the substrate 75 so as to adopt a mode which observes downward illumination light from above. Here, as the added layer 76, there is used a layer made of a light-shielding material. In order to prepare a physically-structured body shown in Fig. 39A and Fig. 39B, the patterning device 300 may have functions in which pattern processing is performed on a substrate made of a translucent material to form the substrate 75 having a network structure, thereby forming the added layer 76 made of a light-shielding material on one side of a non-hole part N thereof.

In the case of the medium shown in Fig. 39A and Fig. 39B, a light beam L18 which has been transmitted through a through hole H is transmitted above as it is and observed. However, a light beam L19 which is to be transmitted through a non-hole part N is blocked by the added layer 76 made of a light-shielding material and will not be observed above. Therefore, in the case of the example shown in the drawing, the first identification mark m10 (Fig. 39A) in which a through hole H occupies a larger area than a non-hole part N looks brighter, and the second identification mark m20 (Fig. 39B) in which a non-hole part N occupies a larger area than a through hole H looks darker. Even if the substrate 75 is constituted with a translucent material, the added layer 76 made of a light-shielding material is formed, by which a difference in brightness and darkness between both the identification marks is made clear and they are able to perform full functions as the identification marks according to the present invention.

A description has been so far given of some variations of a structure of the information recording medium. It should be noted that where reflection observation is made on the assumption that reflected light on the upper face of the medium which is illumination light irradiated from above the medium is observed from above and where transmission observation is made on the assumption that transmitted light from the upper face thereof which is illumination light irradiated on the lower face thereof from below is observed from above, a relationship of brightness and darkness between the identification marks will be reversed.

For example, the medium shown in Fig. 32A and Fig. 32B is a medium in which reflection observation is assumed to be made. Therefore, the first identification mark m10 may be regarded as a mark indicating that "the protrusion is a bit "1"" and the second identification mark m20 may be regarded as a mark indicating that "the recess is a bit "1."" However, the medium shown in Fig. 35A and Fig. 35B is a medium in which transmission observation is assumed to be made. It is, therefore, necessary that the first identification mark m10 is given as a mark indicating that "the recess is a bit "1"" and the second identification mark m20 is given as a mark indicating that "the protrusion is a bit "1."" In other words, the medium shown in Fig. 32A and Fig. 32B is physically similar in structure to the medium shown in Fig. 35A and Fig. 35B. However, when reflection observation is made for the medium shown in Fig. 32A and Fig. 32B, the second identification mark m20 (Fig. 32B) looks brighter, whereas when transmission observation is made for the medium shown in Fig. 35A and Fig. 35B, the first identification mark m10 (Fig. 35A) looks brighter.

Similarly, the medium shown in Fig. 37A and Fig. 37B is a medium in which reflection observation is assumed to be made and, therefore, the first identification mark m10 may be given as a mark indicating that "the non-hole part N is a bit "1"" and the second identification mark m20 may be given as a mark indicating that "the through hole H is a bit "1."" However, the medium shown in Fig. 39A and Fig. 39B is a medium in which transmission observation is assumed to be made. Therefore, it is necessary that the first identification mark m10 is given as a mark indicating that "the through hole H is a bit "1"" and the second identification mark m20 is given as a mark indicating that "the non-hole part N is a bit "1."" In other words, the medium shown in Fig. 37A and Fig. 37B is physically similar in structure to the medium shown in Fig. 39A and Fig. 39B. However, when reflection observation is made for the medium shown in Fig. 37A and Fig. 37B, the second identification mark m20 (Fig. 37B) looks brighter, whereas transmission observation is made for the medium shown in Fig. 39A and Fig. 39B, the first identification mark m10 (Fig. 39A) looks brighter.

In reality, at the time when the storage processing computer 100' is used to prepare the drawing data E, it is impossible to estimate what kind of variation of the medium is finally prepared by the patterning device 300. Therefore, in practice, as information showing a method for interpreting data bits shown by each of the identification marks m10, m20, in principle, the information is recorded on the assumption that reflection observation is made, and an arrangement may be made so that the method for interpreting data bits is reversed where a readout operator compares the identification marks m10, m20 by transmission observation.

Specific materials for constituting the above-described individual added layers are those described in Section 2. For example, light-reflective materials include metals such as aluminum, nickel, titanium, silver, chromium, silicon, molybdenum and platinum as well as alloys, oxides and nitride of the metals. Light-shielding materials include materials composed of compounds such as oxides and nitrides of metals. Of course, as described in Section 2, in place of forming another layer having a clear border surface like an added layer, impurities can be doped on a surface on which an added layer is to be formed, thereby obtaining a similar effect.

### <<<Section 11. Information storage process for recording identification marks>>>

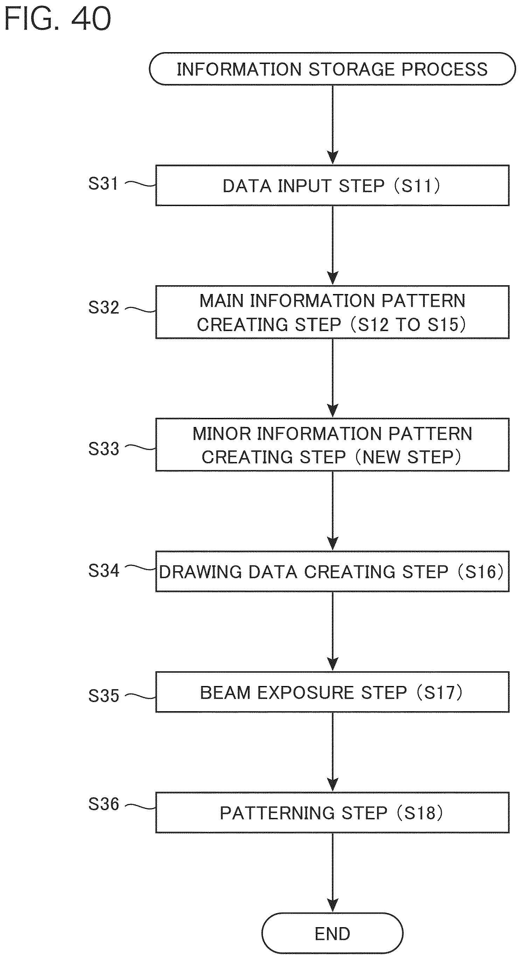

Lastly, a description will be given of processing procedures in which the technique for recording the identification marks described in Section 7 to Section 10 is understood as a process invention of the information storage process by referring to the flowchart shown in Fig. 40. The information storage process shown in Fig. 40 is processing for executing the information storage process in which digital data is written and stored on an information recording medium. As shown in the drawing, the processing is constituted with Step S31 to Step S36. Here, individual steps of Step S31 to Step S34 are processing steps executed by the storage processing computer 100' shown in Fig. 18, the step of Step S35 is a processing step executed by the beam exposure device 200 shown in Fig. 18, the step of Step S36 is a processing step executed by the patterning device 300 shown in Fig. 18.

First, in Step S31, a data input step is executed for inputting digital data D to be stored. Processing details of this step are the same as the processing details of Step S11 in the basic embodiment shown in Fig. 11.

Then, in Step S32, there is executed a main information pattern creating step which creates a main information pattern Pα showing information of individual data bits which constitute the digital data D input in Step S31. Processing details of this step are the same as the processing details of Step S12 to Step S15 in the basic embodiment shown in Fig. 11.

Here, it is important that the main information pattern Pα created by the main information pattern creating step is, as shown inside the part domain p3 in Fig. 21, a pattern which is constituted by the first attribute main domain G1 (a black domain) and the second attribute main domain G2 (a white domain) and in which binary information of individual data bits is expressed by a difference in whether a predetermined point which corresponds to each of individual data bits is present inside the first attribute main domain G1 or inside the second attribute main domain G2.

On the other hand, in Step S33, there is executed a minor information pattern creating step which creates a minor information pattern Pβ showing a method for interpreting data bits shown by the main information pattern Pα. The step is a new step which is not found in the basic embodiment, and the specific processing details have already been described as processing functions of the minor information pattern creating portion 180.

Here, it is important that, as shown in Fig. 21, the minor information pattern Pβ is given as a pattern which is provided with the first identification mark m10 having one or a plurality of closed domains for presenting first information which is composed of letters, numbers, symbols, figures or a part of them or a combination of them and the second identification mark m20 having one or a plurality of closed domains for presenting second information which is composed of letters, numbers, symbols, figures or a part of them or a combination of them.

Moreover, as shown inside the part domain p1 in Fig. 21, inside a closed domain which constitutes the first identification mark m10, a band-like first attribute minor domain g1 (a black domain) and a band-like second attribute minor domain g2 (a white domain) which extend in a direction parallel to a predetermined arrangement axis Z are alternately arranged in a direction orthogonal to the arrangement axis Z. And, as shown in the part domain p2 in Fig. 21, inside a closed domain which constitutes the second identification mark m20, a band-like first attribute minor domain g1 (a black domain) and a band-like second attribute minor domain g2 (a white domain) extending in a direction parallel to the arrangement axis Z are alternately arranged in a direction orthogonal to the arrangement axis Z.

Here, it is also important that the closed domain which constitutes the first identification mark m10 is characterized in that the width W1 of the first attribute minor domain g1 is set so as to be greater than the width W2 of the second attribute minor domain g2 and the closed domain which constitutes the second identification mark m20 is characterized in that the width W2 of the second attribute minor domain g2 is greater than the width W1 of the first attribute minor domain g1.

Then, in Step S34, there is executed a drawing data creating step which creates drawing data E for drawing the main information pattern Pα and the minor information pattern Pβ. Processing details thereof are substantially the same as the processing details of Step S16 in the basic embodiment shown in Fig. 11. That is, in Step S16, the drawing data E is created on the basis of the main information pattern Pα, whereas in Step S34, the drawing data E is created on the basis of a synthesis pattern in which the minor information pattern Pβ is synthesized with the main information pattern Pα.

Here, the drawing data E created in the drawing data creating step is drawing data by which a first attribute main domain G1 and a first attribute minor domain g1 are exposed but a second attribute main domain G2 or a second attribute minor domain g2 is not exposed. Alternatively, the drawing data is drawing data by which the second attribute main domain G2 and the second attribute minor domain g2 are exposed but the first attribute main domain G1 or the first attribute minor domain g1 is not exposed. Moreover, the drawing data E is set to such a dimension that the width of the first attribute minor domain g1 and that of the second attribute minor domain g2 are sufficient in constituting a diffraction grating for visible light.

Subsequently, in Step S35, there is executed a beam exposure step in which on the basis of the drawing data E created in Step S34, beam exposure is performed by using electron beams or laser light on a substrate which acts as an information recording medium. Processing details of the step are the same as the processing details of Step S17 in the basic embodiment shown in Fig. 11.

In Step S36 which is the last step, there is performed a patterning step in which pattern processing is performed on the exposed substrate, thereby creating the information recording medium in which a physically structured pattern is formed according to the drawing data E. The processing details of the step are the same as the processing details of Step S18 in the basic embodiment shown in Fig. 11. Of course, where various variations of the structure described in Section 10 are adopted, a necessary added layer is formed in Step S36.

### Industrial Applicability

The information storage device and the information readout device according to the present invention are able to record various digital data into media and also read out the data and, therefore, can be used for performing recording of various types of information in industries. Of course, since beam exposure processing and pattern processing are needed at the time of storage of data, these devices are not suitable for an application where data is read and written frequently. However, the devices are able to perform highly integrated recording of information in a medium which is expected to have durability for a long time of several hundred to several thousand years. Therefore, they can be used in storing information such as public documents which are to be stored for a long time, as with ancient stone monuments and stone plates.

## Claims

1. An information storage device in which digital data is written onto an information recording medium and stored in it,
the information storage device, comprising:
a data input portion (110) which inputs digital data (D) to be stored;
a unit data creating portion (120) in which the digital data (D) is divided by a prescribed bit length unit to create a plurality of unit data (Ui);
a unit bit matrix creating portion (130) in which data bits which constitute individual unit data (Ui) are arranged in a two-dimensional matrix form to create a unit bit matrix (B (Uᵢ));
a unit bit graphic pattern creating portion (140) in which the unit bit matrix (B(Ui)) is converted to a geometrical pattern arranged inside a predetermined bit recording domain (Ab), thereby creating a unit bit graphic pattern (P(Ui));
a unit recording graphic pattern creating portion (150) in which an alignment mark (Q) is added to the unit bit graphic pattern (P(Ui)) to create a unit recording graphic pattern (R(Ui));
a drawing data creating portion (160) which creates drawing data (E) for drawing the unit recording graphic pattern (R(Ui));
a beam exposure device (200) which performs beam exposure using electron beams or laser light on a substrate (S) which acts as an information recording medium (M) on the basis of the drawing data (E); and
a patterning device (300) which performs pattern processing on the substrate (S) which has been exposed, thereby creating the information recording medium (M) in which a physically structured pattern is formed according to the drawing data (E).

2. The information storage device according to Claim 1, wherein
the beam exposure device (200) has a function which performs beam exposure on a substrate (S) having an underlying layer (10) and a resist layer (20) which covers the underlying layer, the beam exposure being made on a surface of the resist layer (20), and
the patterning device (300) includes a development processing portion (310) in which the substrate (S) is immersed into a developing fluid having properties that will dissolve an exposed part or a non-exposed part of the resist layer (20) and a part of the substrate is processed into a remaining part (23), and an etching processing portion (320) in which the underlying layer (11) is etched by using the remaining part (23) of the resist layer as a mask.

3. The information storage device according to Claim 2, wherein
the unit bit graphic pattern creating portion (140) converts one of an individual bit "1" and an individual bit "0" which constitute the unit bit matrix (B(Ui)) to an individual bit figure (F) composed of a closed domain,
the drawing data creating portion (160) creates the drawing data (E) which shows a contour line of the individual bit figure (F), and
the beam exposure device (200) performs beam exposure on an interior part of the contour line of the individual bit figures (F).

4. The information storage device according to any one of Claim 1 to Claim 3, wherein
the patterning device (300) forms a physically structured pattern which has a recess and protrusion structure composed of a recess (C) which shows one of a bit "1" and a bit "0" and a protrusion (V) which shows the other of them.

5. The information storage device according to Claim 4, wherein
the patterning device (300) forms a physically structured pattern having an added layer (31, 32, 33) made of a light reflective material or a light absorbing material on a surface of one of a recess (C) and a protrusion (V) or on surfaces of both of them.

6. The information storage device according to any one of Claim 1 to Claim 3, wherein
the patterning device forms a physically structured pattern having a network structure composed of a through hole (H) which shows one of a bit "1" and a bit "0" and a non-hole part (N) which shows the other of them.

7. The information storage device according to any one of Claim 1 to Claim 6, wherein
the unit data creating portion (120) divides digital data into unit data (Ui) composed of (m × n) bits,
the unit bit matrix creating portion (130) creates a unit bit matrix (B(Ui)) composed of m rows and n columns, and
the unit bit graphic pattern creating portion (140) allows individual bits which constitute the unit bit matrix (B(Ui)) to correspond to grid points (L) arranged in a matrix form composed of m rows and n columns, and bit figures (F) with a predetermined shape are arranged on grid points (L) corresponding to a bit "1" or a bit "0," thereby creating a unit bit graphic pattern (P(Ui)).

8. The information storage device according to Claim 7, wherein
the unit bit graphic pattern creating portion (140) creates a unit bit graphic pattern (P(Ui)) arranged inside a rectangular bit recording domain (Ab),
the unit recording graphic pattern creating portion (150) adds an alignment mark (Q) outside the rectangular bit recording domain (Ab), thereby creating a unit recording graphic pattern (R(Ui)) arranged inside a rectangular unit recording domain (Au) which includes the bit recording domain (Ab) and the alignment mark (Q), and
the drawing data creating portion (160) arranges the rectangular unit recording domains (Au) in a two-dimensional matrix form, thereby creating a drawing pattern (P(E)) including a plurality of unit recording graphic patterns (R(Ui)) and creating drawing data (E) for drawing the drawing pattern (P(E)).

9. The information storage device according to Claim 8, wherein
the unit recording graphic pattern creating portion (150) adds a total of two sets of alignment marks (Q) arranged outside in vicinities of two corners not at a diagonal position, of four corners, in the rectangular bit recording domain (Ab), thereby creating a unit recording graphic pattern (R(Ui)).

10. The information storage device according to Claim 8, wherein
the unit recording graphic pattern creating portion (150) adds a total of three sets of alignment marks (Q) arranged outside in vicinities of three corners, of four corners, in the rectangular bit recording domain (Ab), thereby creating a unit recording graphic pattern (R(Ui)) and also making difference in an arrangement mode of three sets of the alignment marks (Q) in unit recording graphic patterns (R (Ui)) which are adjacent to each other.

11. The information storage device according to Claim 9 or Claim 10, wherein
the unit recording graphic pattern creating portion (150) sets a specific unit recording domain (Au) at a reference unit recording domain and creates a unit recording graphic pattern (R(Ui)) in which a reference alignment mark (Q) different from that at other unit recording domains is used at the reference unit recording domain.

12. The information storage device according to any one of Claim 1 to Claim 11, wherein
the data input portion (110), the unit data creating portion (120), the unit bit matrix creating portion (130), the unit bit graphic pattern creating portion (140), the unit recording graphic pattern creating portion (150) and the drawing data creating portion (160) are constituted by installing programs into a computer.

13. A program which allows a computer to function as the data input portion (110), the unit data creating portion (120), the unit bit matrix creating portion (130), the unit bit graphic pattern creating portion (140), the unit recording graphic pattern creating portion (150) and the drawing data creating portion (160) in the information storage device according to any one of Claim 1 to Claim 11.

14. An information readout device which reads out digital data stored at an information recording medium by using the information storage device according to Claim 1,
the information readout device, comprising:
an image photographing device (400) which magnifies and photographs a domain to be photographed which is a part of a recording surface of the information recording medium (M) to capture an obtained photographed image as image data;
a photographed-image housing portion (510) which houses the photographed image;
a bit-recording-domain recognizing portion (520) which detects an alignment mark (Q) from the photographed image housed in the photographed-image housing portion (510), thereby recognizing individual bit recording domains (Ab);
a unit-bit-matrix recognizing portion (530) which recognizes a unit bit matrix (B(Ui)) on the basis of a pattern inside the bit recording domain (Ab);
a scanning controller (540) which controls a change in domain to be photographed by the image photographing device (400) so that a photographed image can be obtained in all bit recording domains (Ab) to be readout; and
a data restoration portion (550) which creates unit data (Ui) from individual unit bit matrixes (B(Ui)) recognized by the unit-bit-matrix recognizing portion (520) to synthesize individual unit data (Ui), thereby restoring the digital data (D) stored.

15. An information readout device which reads out digital data stored in an information recording medium by using the information storage device according to Claim 11,
the information readout device, comprising:
an image photographing device (400) which magnifies and photographs a domain to be photographed which is a part of a recording surface of the information recording medium (M) to capture an obtained photographed image as image data;
a photographed-image housing portion (510) which houses the photographed image;
a bit-recording-domain recognizing portion (520) which detects an alignment mark (Q) from the photographed image housed in the photographed-image housing portion (510), thereby recognizing individual bit recording domains (Ab);
a unit-bit-matrix recognizing portion (530) which recognizes a unit bit matrix (B(Ui)) on the basis of a pattern inside the bit recording domain (Ab);
a scanning controller (540) which controls a change in domain to be photographed by the image photographing device (400) so that a photographed image can be obtained for all bit recording domains (Ab) to be readout; and
a data restoration portion (550) which creates unit data (Ui) from individual unit bit matrixes (B(Ui)) recognized by the unit-bit-matrix recognizing portion (520) to synthesize individual unit data (Ui), thereby restoring the digital data (D) stored; wherein
the image photographing device (400) has a function to photograph a domain to be photographed, a size of which is able to include at least one unit recording domain (Au), and
the scanning controller (540) controls the image photographing device (400) to adjust a domain to be photographed so that a photographed image of a domain which includes a reference unit recording domain (Au) is obtained on the basis of a reference alignment mark (Q) and, thereafter, a domain to be photographed is sequentially allowed to move depending on an arrangement pitch of unit recording domains (Au).

16. The information readout device according to Claim 14 or Claim 15, wherein
the photographed-image housing portion (510), the bit-recording-domain recognizing portion (520), the unit-bit-matrix recognizing portion (530), the scanning controller (540) and the data restoration portion (550) are constituted by installing programs into a computer.

17. A program for allowing a computer to function as the photographed-image housing portion (510), the bit-recording-domain recognizing portion (520), the unit-bit-matrix recognizing portion (530), the scanning controller (540) and the data restoration portion (550) in the information readout device according to Claim 14 or Claim 15.

18. An information storage method by which digital data is written onto an information recording medium and stored in it,
the information storage method, comprising:
a data input step (S11) in which a computer inputs digital data (D) to be stored;
a unit data creating step (S12) in which the computer divides the digital data (D) into a prescribed bit length unit to create a plurality of unit data (Ui);
a unit bit matrix creating step (S13) in which the computer arranges data bits which constitute individual unit data (Ui) in a two-dimensional matrix form to create a unit bit matrix (B(Ui));
a unit bit graphic pattern creating step (S14) in which the computer converts the unit bit matrix (B(Ui)) to a geometrical pattern arranged inside a predetermined bit recording domain (Ab), thereby creating a unit bit graphic pattern P(Ui);
a unit recording graphic pattern creating step (S15) in which the computer adds an alignment mark (Q) to the unit bit graphic pattern (P(Ui)), thereby creating a unit recording graphic pattern (R(Ui));
a drawing data creating step (S16) in which the computer creates drawing data (E) for drawing the unit recording graphic pattern (R(Ui));
a beam exposure step (S17) in which beam exposure is performed by using electron beams or laser light on a substrate (S) which acts as the information recording medium (M) on the basis of the drawing data (E); and
a patterning step (S18) in which pattern processing is performed on the substrate (S) which has been exposed, thereby creating the information recording medium (M) in which a physically structured pattern is formed according to the drawing data (E).

19. An information readout method by which digital data stored in an information recording medium by using the information storage method according to Claim 18, is read out,
the information readout method, comprising:
an image photographing step (S21) in which a domain to be photographed which is a part of a recording surface of the information recording medium (M) is magnified and photographed by using an image photographing device (400) and an obtained photographed image is captured as image data;
a photographed-image housing step (S22) in which a computer houses the photographed image;
a bit-recording-domain recognizing step (S23) in which the computer detects an alignment mark (Q) from the photographed image housed by the photographed image housing step, thereby recognizing individual bit recording domains (Ab);
a unit-bit-matrix recognizing step (S25) in which the computer recognizes a unit bit matrix (B(Ui)) on the basis of a pattern inside the bit recording domain (Ab); and
a data restoration step (S27) in which the computer creates unit data (Ui) from individual unit bit matrixes (B(Ui)) recognized in the unit-bit-matrix recognizing step to synthesize individual unit data (Ui), thereby restoring digital data (D) stored, wherein
in the image photographing step (S21), the computer controls a change of a domain to be photographed by the image photographing device (400) so that a photographed image can be obtained in all bit recording domains (Ab) to be read out.

20. An information storage device in which digital data is written onto an information recording medium and stored in it,
the information storage device, comprising:
a data input portion (110) which inputs digital data (D) to be stored;
a main information pattern creating portion (170) which creates a main information pattern (Pα) that shows information of individual data bits which constitute the digital data (D);
a minor information pattern creating portion (180) which creates a minor information pattern (Pβ) that shows a method for interpreting data bits shown by the main information pattern (Pα);
a drawing data creating portion (160') which creates drawing data (E) for drawing the main information pattern (Pα) and the minor information pattern (Pβ);
a beam exposure device (200) which performs beam exposure using electron beams or laser light on a substrate (S) which acts as an information recording medium (M) on the basis of the drawing data (E); and
a patterning device (300) which performs pattern processing on the substrate (S) which has been exposed, thereby creating an information recording medium (M) in which a physically structured pattern is formed according to the drawing data (E), wherein
the main information pattern (Pα) is a pattern which is constituted with a first attribute main domain (G1) and a second attribute main domain (G2) and in which binary information of individual data bits is expressed by a difference in whether a predetermined point corresponding to each of individual data bits is present inside the first attribute main domain (G1) or inside the second attribute main domain (G2),
the minor information pattern (Pβ) is a pattern which is provided with a first identification mark (m10) having one or a plurality of closed domains for presenting first information which is composed of letters, numbers, symbols, figures or a part of them or a combination of them and a second identification mark (m20) having one or a plurality of closed domains for presenting second information which is composed of letters, numbers, symbols, figures or a part of them or a combination of them,
a band-like first attribute minor domain (g1) and a band-like second attribute minor domain (g2) extending in a direction parallel to a predetermined arrangement axis (Z) are alternately arranged in a direction orthogonal to the arrangement axis (Z) inside a closed domain which constitutes the first identification mark (m10), a band-like first attribute minor domain (g1) and a band-like second attribute minor domain (g2) extending in a direction parallel to the arrangement axis (Z) are alternately arranged in a direction orthogonal to the arrangement axis (Z) inside a closed domain which constitutes the second identification mark (m20) and also at the closed domain which constitutes the first identification mark (m10), a width (W1) of the first attribute minor domain (g1) is set to be greater than a width (W2) of the second attribute minor domain (g2), at the closed domain which constitutes the second identification mark (m20), a width (W2) of the second attribute minor domain (g2) is set to be greater than a width (W1) of the first attribute minor domain (g1), and
the drawing data creating portion (160') creates drawing data (E) so that exposure is performed on the first attribute main domain (G1) and the first attribute minor domain (g1) and no exposure is performed either on the second attribute main domain (G2) or the second attribute minor domain (g2), or the drawing data creating portion (160') creates drawing data (E) so that exposure is performed on the second attribute main domain (G2) and the second attribute minor domain (g2) and no exposure is performed either on the first attribute main domain (G1) or the first attribute minor domain (g1), and also the width of the first attribute minor domain (g1) and that of the second attribute minor domain (g2) are dimensionally set so as to constitute a diffraction grating for visible light.

21. The information storage device according to Claim 20, wherein
the minor information pattern creating portion (180) creates a minor information pattern (Pβ) so that the first identification mark (m10) and the second identification mark (m20) formed on an information recording media (M) are made available in a macroscopically observable size.

22. The information storage device according to Claim 20 or Claim 21, wherein
the minor information pattern creating portion (180) sets a closed domain which constitutes the first identification mark (m10) so that the width (W1) of the first attribute minor domain (g1) is at least 5 times greater than the width (W2) of the second attribute minor domain (g2) and also sets a closed domain which constitutes the second identification mark (m20) so that the width (W2) of the second attribute minor domain (g2) is at least 5 times greater than the width (W1) of the first attribute minor domain (g1).

23. The information storage device according to any one of Claim 20 to Claim 22, wherein
the minor information pattern creating portion (180) sets the width (W1) of the first attribute minor domain (g1) inside a closed domain which constitutes the first identification mark (m10) so as to be equal to the width (W2) of the second attribute minor domain (g2) inside a closed domain which constitutes the second identification mark (m20) and also sets the width (W2) of the second attribute minor domain (g2) inside a closed domain which constitutes the first identification mark (m10) so as to be equal to the width (W1) of the first attribute minor domain (g1) inside a closed domain which constitutes the second identification mark (m20).

24. The information storage device according to any one of Claim 20 to Claim 23, wherein
the minor information pattern creating portion (180) creates a minor information pattern (Pβ) in which a first identification mark (m10) and a second identification mark (m20) are arranged adjacently to each other.

25. The information storage device according to any one of Claim 20 to Claim 23, wherein
the minor information pattern creating portion (180) creates a minor information pattern (Pβ) in which a closed domain which constitutes a first identification mark (m11) is in contact with a closed domain which constitutes a second identification mark (m21).

26. The information storage device according to any one of Claim 20 to Claim 23, wherein
the minor information pattern creating portion (180) creates a minor information pattern (Pβ) in which a second identification mark (m22) is embedded into a first identification mark (m12) or the minor information pattern (Pβ) in which the first identification mark is embedded into the second identification mark.

27. The information storage device according to any one of Claim 20 to Claim 23, wherein
the minor information pattern creating portion (180) creates a minor information pattern (Pβ) which has an auxiliary common identification mark (m30) in addition to a first identification mark (m15) and second identification marks (m25a, m25b),
the auxiliary common identification mark (m30) is an identification mark which has one or a plurality of closed domains for presenting an auxiliary common information composed of letters, numbers, symbols and figures or a part of them or a combination of them,
a band-like first attribute minor domain (g1) and a band-like second attribute minor domain (g2) extending in a direction parallel to an arrangement axis (Z) are alternately arranged in a direction orthogonal to the arrangement axis (Z) inside a closed domain which constitutes the auxiliary common identification mark (m30), and also a difference between the width (W1) of the first attribute minor domain (g1) and the width (W2) of the second attribute minor domain (g2) in the auxiliary common identification mark (m30) is set so as to be smaller than a difference between the width (W1) of the first attribute minor domain (g1) and the width (W2) of the second attribute minor domain (g2) in the first identification mark (m15) and the second identification mark (m25a, m25b).

28. The information storage device according to Claim 27, wherein
the width (W1) of the first attribute minor domain (g1) is set equal to the width (W2) of the second attribute minor domain (g2) in the auxiliary common identification mark (m30).

29. The information storage device according to Claim 27 or Claim 28, wherein
an emblem which shows a first method for interpreting data bits shown by the main information pattern (Pα) is constituted by a combination of the first identification mark (m15) and the auxiliary common identification mark (m30) and an emblem which shows a second method for interpreting data bits shown by the main information pattern (Pα) is constituted by a combination of the second identification marks (m25a, m25b) and the auxiliary common identification mark (m30).

30. The information storage device according to Claim 29, wherein
three rectangles of a left-side rectangle (m25a), a central rectangle (m15) and a right-side rectangle (m25b) are arranged adjacently in a horizontal direction so as to be respectively on a left side, at a center and on a right side, and a lower rectangle (m30) is arranged below so as to be commonly adjacent to the three rectangles,
a first identification mark is constituted by the central rectangle (m15), a second identification mark is constituted by the left-side rectangle (m25a) and the right-side rectangle (m25b), an auxiliary common identification mark is constituted by the lower rectangle (m30), thereby constituting a first emblem (m10) which shows a symbol "protrusion" and a second emblem (m20) which shows a symbol "recess."

31. The information storage device according to any one of Claim 20 to Claim 30, wherein
the beam exposure device (200) has a function which performs beam exposure on a substrate (S) having an underlying layer (10) and a resist layer (20) which covers the underlying layer, the beam exposure being made on a surface of the resist layer (20),
the patterning device (300) includes a development processing portion (310) in which the substrate (S) is immersed into a developing fluid having the properties that will dissolve an exposed part or a non-exposed part of the resist layer (20) and a part of the substrate is processed into a remaining part (23), and an etching processing portion (320) in which the underlying layer (11) is etched by using the remaining part (23) of the resist layer as a mask.

32. The information storage device according to Claim 31, wherein
the main information pattern creating portion (170) converts one of an individual bit "1" and an individual bit "0" to an individual bit figure (F) composed of a closed domain, thereby creating a main information pattern (Pα) in which a domain inside the bit figure (F) is performed as the first attribute main domain (G1) and a domain outside thereof is performed as the second attribute main domain (G2), and
the drawing data creating portion (160') creates drawing data (E) by which exposure is performed on the first attribute main domain (G1) and the first attribute minor domain (g1) and no exposure is performed either on the second attribute main domain (G2) or the second attribute minor domain (g2).

33. The information storage device according to any one of Claim 20 to Claim 32, wherein
the patterning device (300) forms a physical structure body which has a recess and protrusion structure composed of a recess which shows one of the first attribute domains (G1, g1) and the second attribute domains (G2, g2) and a protrusion which shows the other of them.

34. The information storage device according to Claim 33, wherein
the patterning device (300) forms a physical structure body which has an added layer (61) made of a light-reflective material on a surface of the protrusion.

35. The information storage device according to Claim 33, wherein
the patterning device (300) performs pattern processing on a substrate (65) made of a translucent material, thereby forming a recess and protrusion structure on an upper face of the substrate (65) and forming a physical structure body which has an added layer (66) made of a light-shielding material on a lower face of the substrate (65).

36. The information storage device according to Claim 33, wherein
the patterning device (300) performs pattern processing on the substrate (65) made of a translucent material, thereby forming a recess and protrusion structure and forming a physical structure body which has an added layer (67) made of a light-shielding material on a surface of the protrusion.

37. The information storage device according to any one of Claim 20 to Claim 32, wherein
the patterning device (300) forms a physical structure body which has a network structure composed of a through hole (H) showing one of the first attribute domains (G1, g1) and the second attribute domains (G2, g2) and a non-hole part (N) which shows the other of them.

38. The information storage device according to Claim 37, wherein
the patterning device (300) forms a physical structure body which has an added layer (71) made of a light-reflective material on one side of the non-hole part (N).

39. The information storage device according to Claim 37, wherein
the patterning device (300) performs pattern processing on a substrate (75) made of a translucent material, thereby forming a network structure and forming a physical structure body which has an added layer (76) made of a light-shielding material on one side of the non-hole part (N).

40. The information storage device according to any one of Claim 20 to Claim 30, wherein
the data input portion (110), the main information pattern creating portion (170), the minor information pattern creating portion (180) and the drawing data creating portion (160') are constituted by installing programs into a computer.

41. A program which allows a computer to function as the data input portion (110), the main information pattern creating portion (170), the minor information pattern creating portion (180) and the drawing data creating portion (160') in the information storage device according to any one of Claim 20 to Claim 30.

42. An information storage method by which digital data is written onto an information recording medium and stored in it,
the information storage method, comprising:
a data input step (S31) in which a computer inputs digital data (D) to be stored;
a main information pattern creating step (S32) in which the computer creates a main information pattern (Pα) which shows information of individual data bits which constitute the digital data (D);
a minor information pattern creating step (S33) in which the computer creates a minor information pattern (Pβ) which shows a method for interpreting data bits shown by the main information pattern (Pα);
a drawing data creating step (S34) in which the computer creates drawing data (E) for drawing the main information pattern (Pα) and the minor information pattern (Pβ);
a beam exposure step (S35) in which beam exposure is performed by using electron beams or laser light on a substrate (S) which acts as an information recording medium (M) on the basis of the drawing data (E); and
a patterning step (S36) in which pattern processing is performed on the substrate (S) which has been exposed, thereby creating the information recording medium (M) in which a physically structured pattern is formed according to the drawing data (E); wherein
the main information pattern (Pα) is a pattern which is constituted with a first attribute main domain (G1) and a second attribute main domain (G2) and in which binary information of individual data bits is expressed by a difference in whether a predetermined point which corresponds to each of individual data bits is present inside the first attribute main domain (G1) or inside the second attribute main domain (G2),
the minor information pattern (Pβ) is a pattern which is provided with a first identification mark (m10) having one or a plurality of closed domains for presenting first information composed of letters, numbers, symbols, and figures or a part of them or a combination of them and a second identification mark (m20) having one or a plurality of closed domains for presenting second information composed of letters, numbers, symbols and figures or a part of them or a combination of them,
a band-like first attribute minor domain (g1) and a band-like second attribute minor domain (g2) extending in a direction parallel to a predetermined arrangement axis (Z) are alternately arranged in a direction orthogonal to the arrangement axis (Z) inside a closed domain which constitutes the first identification mark (m10), a band-like first attribute minor domain (g1) and a band-like second attribute minor domain (g2) extending in a direction parallel to the arrangement axis (Z) are alternately arranged in a direction orthogonal to the arrangement axis (Z) inside a closed domain which constitutes the second identification mark (m20) and also at the closed domain which constitutes the first identification mark (m10), a width (W1) of the first attribute minor domain (g1) is set so as to be greater than a width (W2) of the second attribute minor domain (g2), and at the closed domain which constitutes the second identification mark (m20), a width (W2) of the second attribute minor domain (g2) is set so as to be greater than a width (W1) of the first attribute minor domain (g1), and
in the drawing data creating step (S34), drawing data (E) is created so that exposure is performed on the first attribute main domain (G1) and the first attribute minor domain (g1) and no exposure is performed either on the second attribute main domain (G2) or the second attribute minor domain (g2), or drawing data (E) is created so that exposure is performed on the second attribute main domain (G2) and the second attribute minor domain (g2) and no exposure is performed either on the first attribute main domain (G1) or the first attribute minor domain (g1), and also the width of the first attribute minor domain (g1) and that of the second attribute minor domain (g2) are dimensionally set so as to constitute a diffraction grating for visible light.
